# EUROPEAN PATENT SPECIFICATION

(11) **EP 4 328 172 B1**
(45) Date of publication and mention of the grant of the patent: **22.07.2026**
(21) Application number: 22819865.1
(22) Date of filing: 15.03.2022
(51) Int. Cl.: B66C 23/26, B62D 21/18, B62D 55/10, B66C 23/36, B66C 23/62

(54) **MOBILE CRANE UNDERCARRIAGE**
MOBILKRANFAHRWERK
TRAIN DE ROULEMENT DE GRUE MOBILE

(30) Priority: 08.06.2021 JP 2021095533; 08.06.2021 JP 2021095534
(43) Date of publication of application: 28.02.2024
(73) Proprietor: KOBELCO CONSTRUCTION MACHINERY CO., LTD., Hiroshima-shi, Hiroshima 731-5161 (JP)
(72) Inventor: OKIMOTO, Sho, Hiroshima-shi, Hiroshima 731-5161 (JP); MAEDO, Teppei, Hiroshima-shi, Hiroshima 731-5161 (JP); SHIMAZU, Yasuhiko, Hiroshima-shi, Hiroshima 731-5161 (JP)
(74) Representative: TBK
(86) International application number: PCT/JP2022/011579
(87) International publication number: WO 2022/259675

(56) References cited:
- JP-A- 2001 260 940
- JP-A- 2006 007 894
- JP-A- 2007 063 022
- JP-A- 2009 107 360
- JP-A- 2009 107 360
- JP-A- 2018 039 638
- JP-U- S5 378 747
- JP-U- S5 382 150
- JP-U- S6 032 180
- JP-U- S6 078 677
- US-A- 3 385 014
- US-A- 4 431 074

## Description

### Technical Field

The present invention relates to a lower travelling body of a mobile crane.

### Background Art

Conventionally, a mobile crane is known. The mobile crane includes a lower travelling body capable of travelling on the ground, and an upper slewing body mounted on the lower travelling body. The upper slewing body includes a work device including a boom and a lifting rope. The lower travelling body includes a car body, a right crawler frame, and a left crawler frame. The car body includes a car body main part that supports the upper slewing body in such a way as to allow it to turn around a slewing center axis, a front axle that extends rightward and leftward from the car body main part, and a rear axle that extends rightward and leftward from the car body main part on the rear side relative to the front axle. The right crawler frame extends in a front-to-rear direction on the right side relative to the car body main part, and the left crawler frame extends in the front-to-rear direction on the left side relative to the car body main part.

For example, a mobile crane disclosed in Patent Literature 1 includes an expansion/contraction mechanism that increases a distance from the pair of crawler frames to the slewing center axis in a left-to-right direction in order to improve the safety of lifting work of a cargo-to-be-lifted and that reduces the distance from the pair of crawler frames to the slewing center axis in the left-to-right direction in order to reduce the width of the mobile crane when it is transported. In the mobile crane equipped with such an expansion/contraction mechanism, each of the crawler frames needs to be, for example, slid in the left-to-right direction along the front axle and the rear axle. The front axle and the rear axle therefore each have a shape extending parallel to the left-to-right direction, and the crawler frames each have a pair of axle supports that support the front axle and the rear axle in such a way as to allow them to slide.

In the lower travelling body having a structure in which, as described above, the front axle and the rear axle that extend parallel to the left-to-right direction from the car body couple the car body to the left and right crawler frames, rigidity in the front-to-rear direction is lower than rigidity in the left-to-right direction. For this reason, in lifting work (crane work) by the mobile crane, when the cargo-to-be-lifted is hung from the upper slewing body via the lifting rope of the work device on the front side or the rear side relative to the lower travelling body, an amount of downward shift of a front part or rear part of the car body that results from the cargo-to-be-lifted being hung from the upper slewing body tends to be greater than an amount of downward shift of a right part or a left part of the car body that results when the cargo-to-be-lifted is hung from the upper slewing body on the left side or the right side relative to the lower travelling body.

Specifically, when the cargo-to-be-lifted is hung from the upper slewing body on the front side or the rear side relative to the lower travelling body, because of a load applied from the upper slewing body to the car body, torsional deformation, warping deformation, or the like develops at the front and rear axles and deformation develops at the car body as well. The front part or the rear part of the car body is thus likely to shift in position downward. In addition, following the deformation of the front and rear axles, the left and right crawler frames too are likely to deform. As a result, a degree of deformation that develops at the lower travelling body as a result of a change in a slewing position of the upper slewing body varies, and this variation in degree of deformation causes the position of the cargo-to-be-lifted to change vertically, which may result in the lower workability of lifting work. It is thus desirable that by improving the rigidity in the front-to-rear direction of the lower travelling body, deformation developing at the lower travelling body be reduced when the cargo-to-be-lifted is hung from the upper slewing body on the front side or the rear side relative to the lower travelling body.

Patent Literature 2 discloses a technique by which, to improve respective rigidities of a front and rear parts of a car body, a front part and a rear part in the trunk of the car body are provided with a pair of reinforcing members, respectively. However, because various members for turning the upper slewing body, such as a slewing motor, gears, hydraulic piping, and electric wires, are placed around the trunk of the car body, a sufficient space for arranging the pair of reinforcing members may not be secured. In such a case, an effect of suppressing the deformation of the car body by the pair of reinforcing members is limited.

When the cargo-to-be-lifted is hung from the upper slewing body on the front side relative to the lower travelling body, a front end roller, which is a roller at the head of a plurality of rollers arranged on a lower part of each crawler frame, serves as a tipping fulcrum of the mobile crane. In the structure in which the front axle and the rear axle each have the shape extending parallel to the left-to-right direction as in the structure of the mobile crane of Patent Literature 1, the axle support, which is a portion where the load is transmitted from the front axle to each crawler frame, and the tipping fulcrum are separated relatively widely from each other in the front-to-rear direction. In each crawler frame, therefore, a large warp is likely to develop at a part between the axle support portion and the tipping fulcrum. When the cargo-to-be-lifted is hung from the upper slewing body on the rear side relative to the lower travelling body, a large warp is likely to develop in each crawler frame as in the above case for the same reason as described above.

### Citation List

### Patent Literature

Patent Literature 1: JP 2018-70339 A
Patent Literature 2: JP 2017-171090 A
Patent Literature 3: US 4 431 074 A
Patent Literature 4: US 3 385 014 A
US 4 431 074 A and US 3 385 014 A show a lower travelling body having the features of the preamble of claim 1.

### Summary of Invention

The present invention has been conceived in view of the above problems, and an object of the present invention is to provide a lower travelling body whose deformation is smaller when a cargo-to-be-lifted is hung from an upper slewing body of the mobile crane on the front side or the rear side relative to the lower travelling body and whose dimensions can be reduced when the lower travelling body is transported.

The above object is solved by a lower travelling body having the features of claim 1. Further developments are stated in the dependent claims.

### Brief Description of Drawings

FIG 1 is a side view of an example of a mobile crane including a lower travelling body according to a first embodiment of the invention.
FIG 2 is a perspective view of the lower travelling body according to the first embodiment of the invention, showing a state in which left and right crawler frames are set at an expanded position.
FIG 3 is a plan view of the lower travelling body according to the first embodiment of the invention, showing the state in which the left and right crawler frames are set at the expanded position.
FIG 4 is a front view of the lower travelling body according to the first embodiment of the invention, showing the state in which the left and right crawler frames are set at the expanded position.
FIG 5 is a right side view of the right crawler frame of the lower travelling body according to the first embodiment of the invention.
FIG 6 is a perspective view of a car body and the left and right crawler frames of the lower travelling body according to the first embodiment of the invention, showing a state in which the left and right crawler frames are set at a contracted position.
FIG 7 is a plan view of the car body and the left and right crawler frames of the lower travelling body according to the first embodiment of the invention, showing the state in which the left and right crawler frames are set at the contracted position.
FIG 8 is a perspective view of a lower travelling body according to a first modification of the first embodiment of the invention, showing a state in which the left and right crawler frames are set at the expanded position.
FIG 9 is a plan view of the car body and the left and right crawler frames of the lower travelling body according to the first modification of the first embodiment of the invention, showing a state in which the left and right crawler frames are set at the contracted position.
FIG 10 is a perspective view of the car body and the left and right crawler frames of a lower travelling body according to a second modification of the first embodiment of the invention, showing a state in which the left and right crawler frames are set at the contracted position.
FIG 11 is a plan view of the car body and the left and right crawler frames of the lower travelling body according to the second modification of the first embodiment of the invention, showing the state in which the left and right crawler frames are set at the contracted position.
FIG 12 is a perspective view of a lower travelling body according to a second embodiment of the invention, showing a state in which the left and right crawler frames are set at the expanded position.
FIG 13 is a plan view of the car body and the left and right crawler frames of the lower travelling body according to the second embodiment of the invention, showing the state in which the left and right crawler frames are set at the expanded position.
FIG 14 is a plan view of the car body and the left and right crawler frames of the lower travelling body according to the second embodiment of the invention, showing a state in which the left and right crawler frames are set at the contracted position.
FIG 15 is a plan view of the car body and the left and right crawler frames of a lower travelling body according to a modification of the second embodiment of the invention, showing a state in which the left and right crawler frames are set at the contracted position.
FIG 16 is a plan view of the car body and the left and right crawler frames of the lower travelling body according to the modification of the second embodiment of the invention, showing the state in which the left and right crawler frames are set at the contracted position.
FIG 17 is a perspective view of the car body and the left and right crawler frames of the lower travelling body according to the modification of the second embodiment of the invention, showing the state in which the left and right crawler frames are set at the contracted position.
FIG 18 is a perspective view of a lower travelling body according to a third embodiment not covered by the present invention, showing a state in which the left and right crawler frames are set at the expanded position.
FIG 19 is a plan view of the car body and the left and right crawler frames of the lower travelling body according to the third embodiment, showing the state in which the left and right crawler frames are set at the expanded position.
FIG 20 is a perspective view of the car body and the left and right crawler frames of the lower travelling body according to the third embodiment, showing a state in which the left and right crawler frames are set at the contracted position.
FIG 21 is a plan view of the car body and the left and right crawler frames of the lower travelling body according to the third embodiment, showing a state in which the left and right crawler frames are set at the contracted position.
FIG 22 is a plan view of the car body and the left and right crawler frames of a lower travelling body according to a modification of the third embodiment, showing a state in which the left and right crawler frames are set at the expanded position.
FIG 23 is a plan view of the car body and the left and right crawler frames of the lower travelling body according to the modification of the third embodiment, showing a state in which the left and right crawler frames are set at the contracted position.
FIG 24 is a side view of an example of a mobile crane including a lower travelling body according to a fourth embodiment not covered by the present invention.
FIG 25 is a perspective view of the lower travelling body according to the fourth embodiment.
FIG 26 is a plan view of the lower travelling body according to the fourth embodiment.
FIG 27 is a front view of the lower travelling body according to the fourth embodiment.
FIG 28 is a perspective view of a left crawler frame, a left front coupling member, and a left rear coupling member of the lower travelling body according to the fourth embodiment.
FIG 29 is a perspective view of the left crawler frame, the left front coupling member, and the left rear coupling member of the lower travelling body according to the fourth embodiment
FIG 30 is a perspective view of a connection structure of a crawler connection portion of the left rear coupling member and a connected portion of a left crawler frame, the connection structure being included in the lower travelling body according to the fourth embodiment.
FIG 31 is a perspective view of the connection structure of the crawler connection portion of the left rear coupling member and the connected portion of the left crawler frame, the connection structure being included in the lower travelling body according to the fourth embodiment
FIG 32 is a rear view of a connection structure of a car body connection portion of the left rear coupling member and a connected portion of a car body, the connection structure being included in the lower travelling body according to the fourth embodiment.
FIG 33 is a rear view of the connection structure of the car body connection portion of the left rear coupling member and the connected portion of the car body, the connection structure being included in the lower travelling body according to the fourth embodiment.
FIG 34 is a perspective view of a connection structure of a left middle connection portion of the car body and a left middle connected portion of the left crawler frame, the connection structure being included in the lower travelling body according to the fourth embodiment.
FIG 35 is a rear view of the connection structure of the left middle connection portion of the car body and the left middle connected portion of the left crawler frame, the connection structure being included in the lower travelling body according to the fourth embodiment.
FIG 36 is a plan view of a lower travelling body according to a modification of the fourth embodiment.
FIG 37 is a plan view of a lower travelling body according to a fifth embodiment not being covered by the present invention.
FIG 38 is a plan view of the car body and a plurality of coupling members of the lower travelling body according to the fifth embodiment.
FIG 39 is a front view of the car body, a right front coupling member, and a left front coupling member of the lower travelling body according to the fifth embodiment.
FIG 40 is a left side view of the car body, the left front coupling member, and the left rear coupling member of the lower travelling body according to the fifth embodiment.
FIG 41 is a front view of the car body and the plurality of coupling members of the lower travelling body according to the fifth embodiment.
FIG 42 is a side view of the car body and the plurality of coupling members of the lower travelling body according to the fifth embodiment.
FIG 43 is a plan view of a magnified version of the car body and the left rear coupling member of the lower travelling body according to the fifth embodiment.
FIG 44 is a sectional view of a lower travelling body according to a modification of the fifth embodiment.
FIG 45 is a perspective view of the car body, a coupling member, and a crawler frame of the lower travelling body according to the modification of the fifth embodiment.

### Description of Embodiments

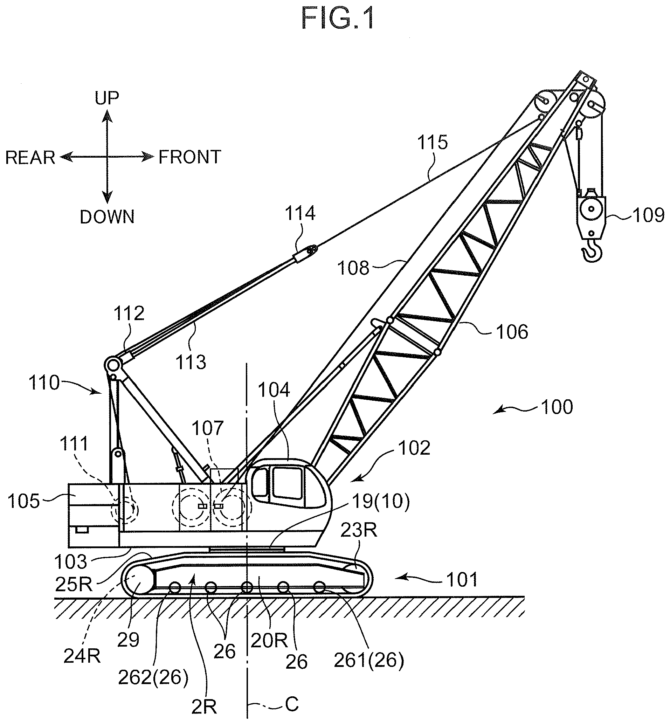

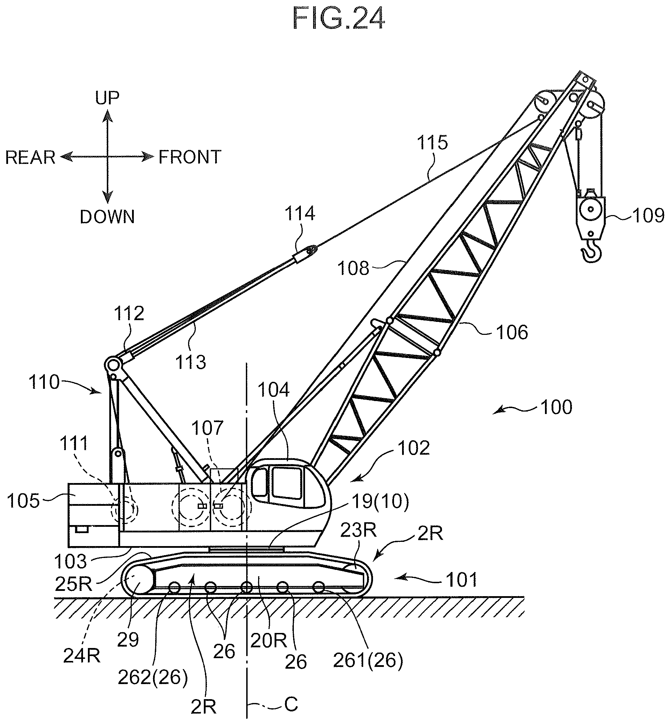

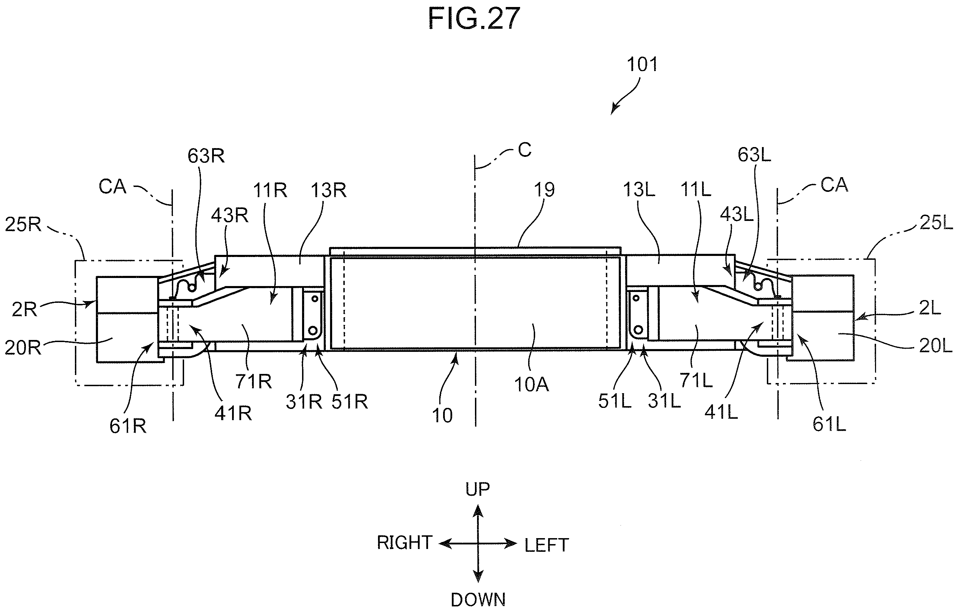

The invention includes embodiments shown in FIGS. 1 to 23, and further embodiments are shown in FIGS. 24 to 45. A lower travelling body according to the invention may further include a configuration according to the further embodiments of FIGS. 24 to 45 or may include only the configuration according to the embodiments of FIGS. 1 to 23. A lower travelling body according to the further embodiments of FIGS. 24 to 45 may further include the configuration according to the embodiments of FIGS. 1 to 23or may include only the configuration according to the further embodiments of FIGS. 24 to 45.

### [Embodiments of Invention]

Hereinafter, a lower travelling body of a mobile crane according to embodiments of the invention will be described with reference to FIGS. 1 to 23. In the drawings, "front", "rear", "right", "left", "up", and "down" are indicated. These letters refer to directions defined with reference to a direction in which the lower travelling body moves forward and backward. In other words, the front-to-rear direction of the lower travelling body is a horizontal direction in which crawler frames, which will be described later, extend, and the left-to-right direction of the lower travelling body is a horizontal direction perpendicular to the front-to-rear direction. The vertical direction of the lower travelling body is a direction parallel to a slewing center axis of an upper slewing body.

### [Overall Structure of Mobile Crane]

As shown in FIG 1, a mobile crane 100 according to this embodiment includes a lower travelling body 101 and an upper slewing body 102. The lower travelling body 101 is configured to support the upper slewing body 102 from below in such a way as to allow it to turn and to be capable of travelling on the ground.

The upper slewing body 102 is mounted on the lower travelling body 101. The upper slewing body 102 includes a slewing frame 103, a work device, a cab 104, and a counterweight 105. The work device, the cab 104, and the counterweight 105 are mounted on the slewing frame 103.

The work device is a device for carrying out lifting work (crane work) and the like of a cargo-to-be-lifted. In this embodiment, the work device includes a boom 106, a lifting winch 107, a lifting rope 108, a hook device 109, a gantry 110, a raising/lowering winch 111, a lower spreader 112, a raising/lowering rope 113, an upper spreader 114, and a guy line 115. The work device is not limited to a specific example of the work device shown in FIG 1. For example, the work device may further include a jib (not illustrated) that can be attached to a front end part of the boom. In the specific example shown in FIG. 1, the boom 106 is a lattice boom of a lattice structure. The boom 106 is, however, not limited to the lattice boom and may be a telescopic boom capable of changing in length by telescoping.

The boom 106 is attached to a front part of the slewing frame 103 in such a way as to be capable of rising/falling, and has the hook device 109 hung from a front end of the boom 106 via the lifting rope 108, the hook device 109 being used to hook a cargo-to-be-lifted thereon. The lifting winch 107 is mounted on the slewing frame 103, and winds or unwinds the lifting rope 108 to wind up or down the hook device 109. The gantry 110 is erected on a rear part of the slewing frame 103. The guy line 115 has one end connected to the front end part of the boom 106 and the other end connected to the upper spreader 114. The lower spreader 112 is disposed on an upper end part of the gantry 110, and the lower spreader 112 and the upper spreader 114 are separated apart from each other. The raising/lowering rope 113 is wound around the lower spreader 112 and the upper spreader 114. The raising/lowering winch 111 is mounted on the slewing frame 103, and winds or unwinds the raising/lowering rope 113 to decrease or increase the separation distance from the upper spreader 114 to the lower spreader 112. As a result of a decrease or increase in the separation distance between the spreaders 112 and 114, the boom 106 is raised or lowered.

### [Structure of Lower Travelling Body According to First Embodiment of the Invention]

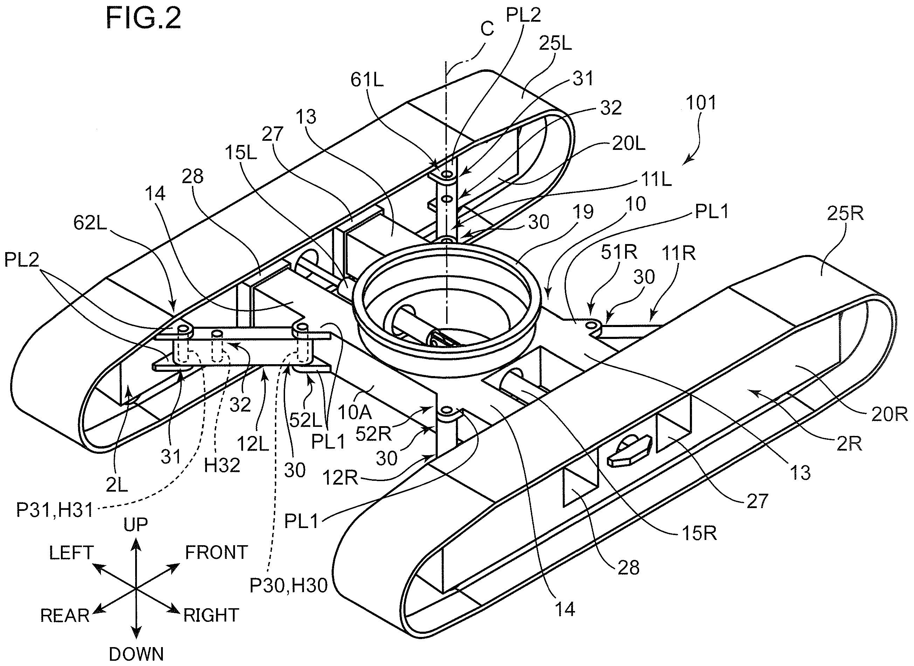

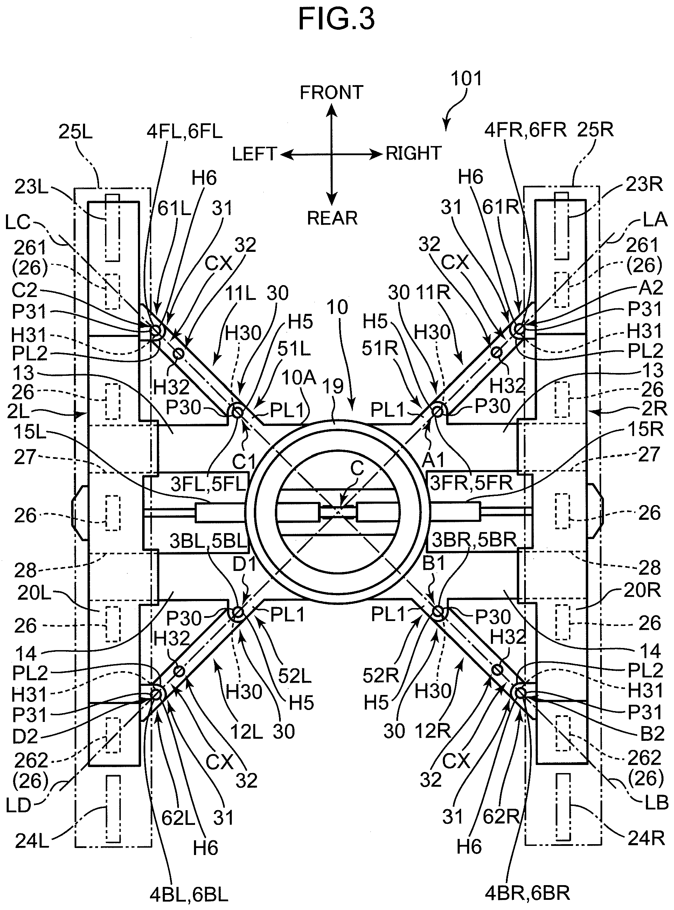

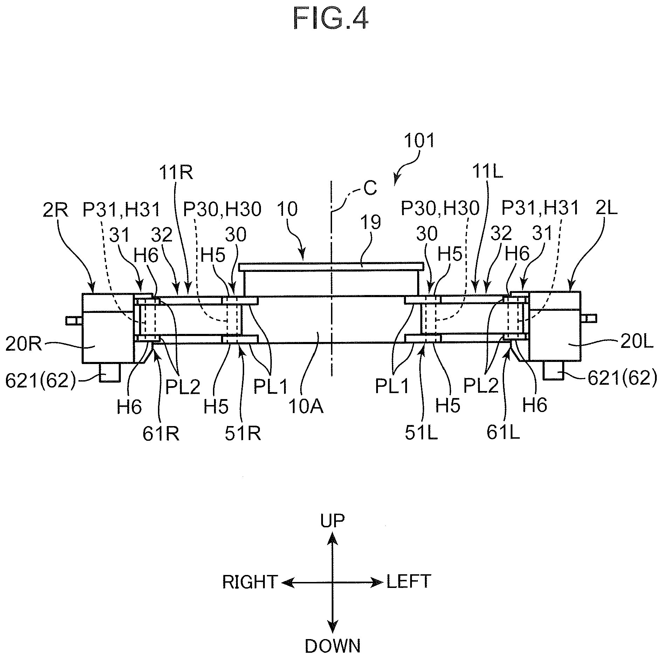

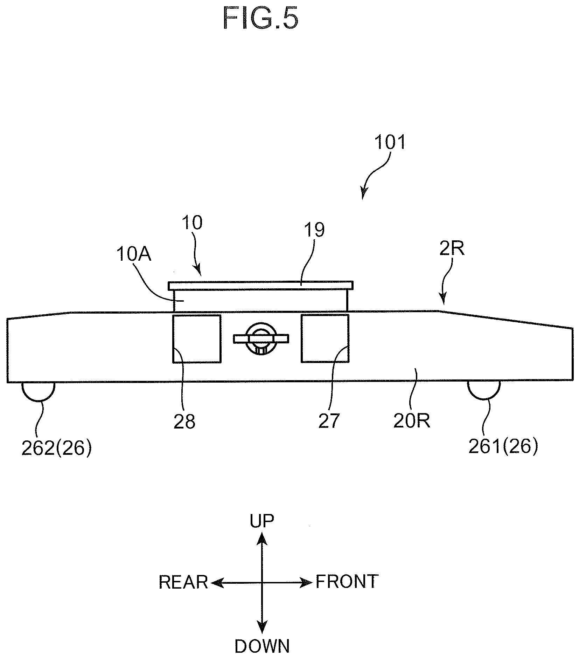

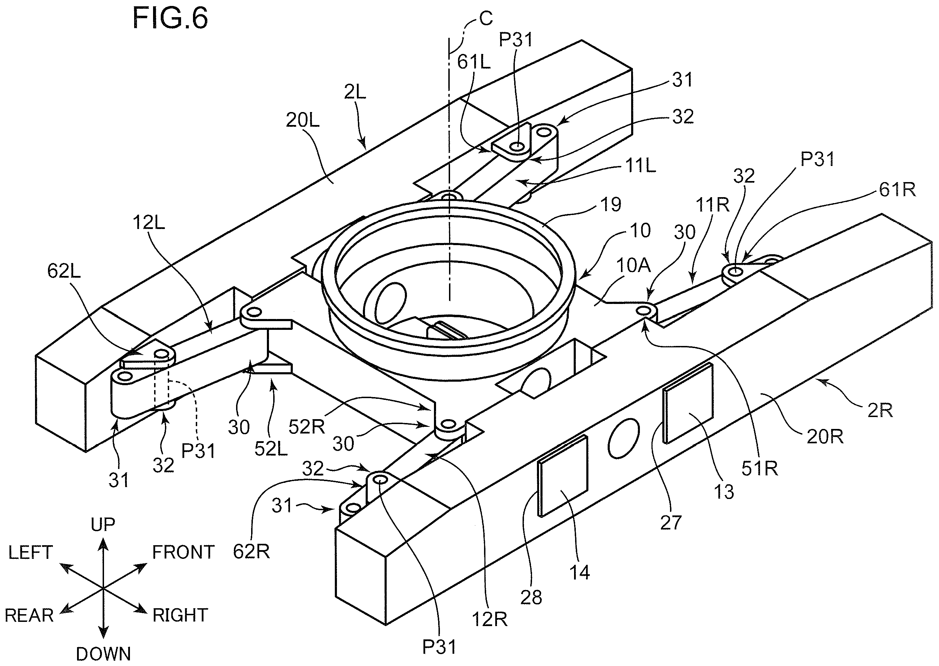

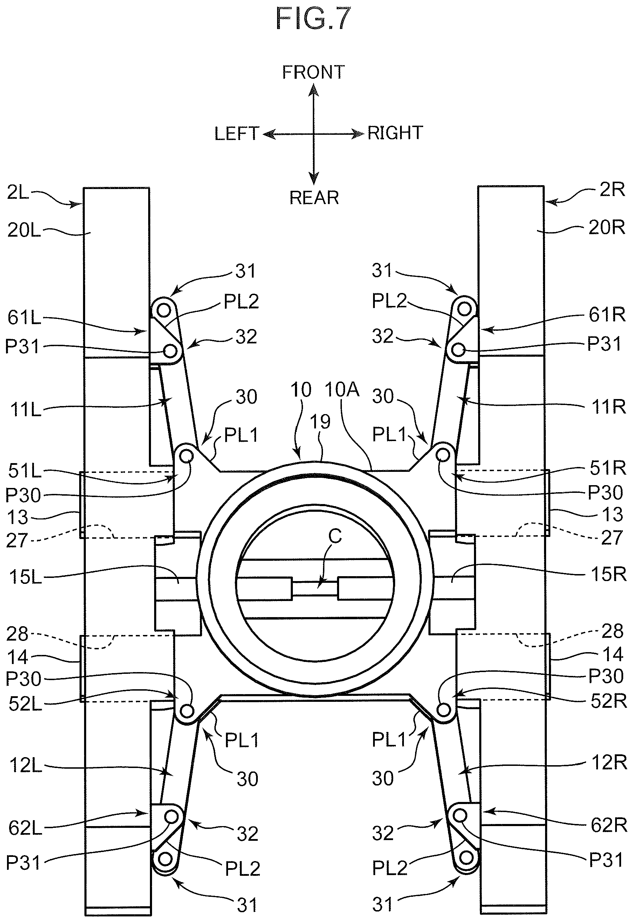

FIG 2 is a perspective view of the lower travelling body 101 according to the first embodiment of the invention, FIG 3 is a plan view of the same, and FIG 4 is a front view of the same. FIG 5 is a right side view of a right crawler frame 2R of the lower travelling body 101 according to the first embodiment of the invention. FIG 6 is a perspective view of a car body and left and right crawler frames of the lower travelling body 101 according to the first embodiment of the invention, and FIG 7 is a plan view of the same.

In this embodiment, as shown in FIGS. 1 and 3, the front-to-rear direction of the lower travelling body 101 is the longitudinal direction of crawler frames 2R and 2L, which will be described later, and a frontward direction along the front-to-rear direction is a direction of heading from a wheel 24R (drive tumbler) toward a wheel 23R (idler) in each crawler frame while a rearward direction along the same is the direction opposite to the direction of heading from the wheel 24R toward the wheel 23R. The front-to-rear direction of the lower travelling body 101, however, may be defined as the direction opposite to the front-to-rear direction defined in FIGS. 1 to 3. In FIG 2, the wheels 23R and 24R are not illustrated.

The lower travelling body 101 includes a car body 10, a slewing bearing 19 supported on the top of the car body 10, a right travelling device, a left travelling device, and a plurality of coupling members.

The car body 10 supports the upper slewing body 102 of the mobile crane 100 in such a way as to allow the upper slewing body 102 to turn about a slewing center axis C via the slewing bearing 19. The upper slewing body 102 is mounted on the slewing bearing 19. The slewing center axis C is substantially parallel to the vertical direction when the ground is level.

In this embodiment, the car body 10 includes a car body main part 10A of a substantially rectangular parallelepiped shape, a front axle 13, a rear axle 14, a pair of crawler moving cylinders 15R and 15L, and a plurality of connected portions. The slewing bearing 19 is attached to the car body main part 10A. The shape of the car body main part 10A is not limited to the substantially rectangular parallelepiped shape. The plurality of connected portions of the car body 10 will be described later.

The front axle 13 extends rightward and leftward from the car body main part 10A, and the rear axle 14 extends rightward and leftward from the car body main part 10A on the rear side relative to the front axle 13. Specifically, in the plan view shown in FIG 3, the front axle 13 projects rightward and leftward from a front part of the car body main part 10A, while the rear axle 14 projects rightward and leftward from a rear part of the car body main part 10A. In this embodiment, each of the front axle 13 and the rear axle 14 has a columnar shape, specifically, a square pole shape that extends parallel to the left-to-right direction.

The front axle 13 and the rear axle 14 are lined up at intervals in the front-to-rear direction. The front axle 13 is located on the front side relative to the slewing center axis C, and the rear axle 14 is located on the rear side relative to the slewing center axis C. A right part of the front axle 13 and a right part of the rear axle 14 couple the car body main part 10A to the right crawler frame 2R, which will be described later. A left part of the front axle 13 and a left part of the rear axle 14 couple the car body main part 10A to the left crawler frame 2L, which will be described later.

A structural member constituted by the car body main part 10A, the front axle 13, and the rear axle 14 may be formed of a single member, or may be formed by connecting together the car body main part 10A, the front axle 13, and the rear axle 14 that are separately fabricated individually.

The right travelling device and the left travelling device each work as a device that travels on the ground while supporting the car body 10. The right travelling device includes the right crawler frame 2R, a pair of right wheels 23R and 24R, a right crawler belt 25R, a plurality of right rollers 26, and a travelling drive unit 29 (see FIG 1). Likewise, the left travelling device includes the left crawler frame 2L, a pair of left wheels 23L and 24L, a left crawler belt 25L, a plurality of left rollers 26, and a travelling drive unit 29.

The right crawler frame 2R includes a right frame body 20R and a plurality of connected portions, and the left crawler frame 2L includes a left frame body 20L and a plurality of connected portions. The plurality of connected portions of each of the left and right crawler frames 2R and 2L will be described later.

The right frame body 20R has a shape extending in the front-to-rear direction on the right side relative to the slewing center axis C. The right frame body 20R includes a right front axle support 27 and a right rear axle support 28. These axle supports 27 and 28 are provided at positions corresponding respectively to the front axle 13 and the rear axle 14 and support the front axle 13 and the rear axle 14, respectively, so that the right frame body 20R can change its position in the left-to-right direction relative to the right part of the front axle 13 and the right part of the rear axle 14.

Specifically, the right front axle support 27 and the right rear axle support 28 support the front axle 13 and the rear axle 14, respectively, in such a way as to allow the right crawler frame 2R to change its position in the left-to-right direction between an expanded position and a contracted position, at which the distance between the slewing center axis C and the right crawler frame 2R is smaller than the same at the expanded position, relative to the front axle 13 and the rear axle 14.

As shown in FIGS. 2 and 5, each of the right front axle support 27 and the right rear axle support 28 has an inner surface demarcating a through-hole penetrating the right frame body 20R in the left-to-right direction. In this embodiment, the inner surface is configured by four surfaces (front surface, rear surface, bottom surface, and top surface) corresponding to four outer surfaces (front surface, rear surface, lower surface, and upper surface) of the corresponding front axle 13 or rear axle 14. The front surface and the rear surface restrict positional shift of the corresponding axle in the front-to-rear direction, and the bottom surface and the top surface restrict positional shift of the corresponding axle in the vertical direction.

Likewise, the left frame body 20L has a shape extending in the front-to-rear direction on the left side relative to the slewing center axis C. The left frame body 20 L includes a left front axle support 27 and a left rear axle support 28. These axle supports 27 and 28 are provided at positions corresponding respectively to the front axle 13 and the rear axle 14 and support the front axle 13 and the rear axle 14, respectively, so that the left frame body 20L can change its position in the left-to-right direction relative to the left part of the front axle 13 and the left part of the rear axle 14.

The left front axle support 27 and the left rear axle support 28 support the front axle 13 and the rear axle 14, respectively, in such a way as to allow the left crawler frame 2L to change its position in the left-to-right direction between an expanded position and a contracted position, at which the distance between the slewing center axis C and the left crawler frame 2L is smaller than the same at the expanded position, relative to the front axle 13 and the rear axle 14.

Specific structures of the axle supports 27 and 28 of the left frame body 20L are the same as those of the axle supports 27 and 28 of the right frame body 20R described above, and are therefore not described in detail.

The pair of right wheels 23R and 24R are rotatably supported on a front end part and a rear end part of the right frame body 20 R, respectively. In this embodiment, the right wheel 23R located on the front side is configured by an idler, and the right wheel 24R located on the rear side is configured by a drive tumbler. The drive tumbler is connected to the travelling drive unit 29 (see FIG 1) that is supported on the rear end part of the right frame body 20R at a position adjacent to the drive tumbler. The travelling drive unit 29 includes, for example, a travelling motor and a travelling speed reducer. The travelling drive unit 29 is not illustrated in the drawings other than FIG 1.

The right crawler belt 25R is a belt that is annularly put around the pair of right wheels 23R and 24R to be capable of circling movement. In other words, the right crawler belt 25R is an endless belt supported by the pair of right wheels 23R and 24R. The right crawler belt 25R is configured by numbers of crawler shoes connected to each other.

On the outer periphery of the right wheel 24R configured by the drive tumbler, a plurality of projections are formed along the circumferential direction such that the projections can be engaged with the inner periphery of the right crawler belt 25R. The right wheel 24R is supplied with a driving force from the travelling drive unit 29, and this driving force is transmitted to the right crawler belt 25R. As a result, the right crawler belt 25R makes circling movement. The right wheel 23R configured by the idler rotates by following the movement of the right crawler belt 25R.

The plurality of right rollers 26 are each supported rotatably on a lower part of the right frame body 20R of the right crawler frame 2R. The plurality of right rollers 26 are spaced in the front-to-rear direction between the pair of right wheels 23R and 24R. The plurality of right rollers 26 presses the right crawler belt 25R against the ground and guides the circling movement of the right crawler belt 25R.

Hereinafter, the right roller 26 located at the head of the plurality of right rollers 26 (in this embodiment, the right roller 26 closest to the wheel 23R) will be referred to as a right front end roller 261, and the right roller 26 located at the tail of the plurality of right rollers 26 (in this embodiment, the right roller 26 closest to the wheel 24R) will be referred to as a right rear end roller 262.

The structure of the pair of left wheels 23L and 24L, the left crawler belt 25L, and the plurality of left rollers 26 in the left travelling device is the same as the above-described structure of the pair of right wheels 23R and 24R, the right crawler belt 25R, and the plurality of right rollers 26 in the right travelling device, except the fact that both structures are symmetrical with each other in the left-to-right direction, and is therefore not described in detail. Hereinafter, the left roller 26 located at the head of the plurality of left rollers 26 (in this embodiment, the left roller 26 closest to a wheel 23L) will be referred to as a left front end roller 261, and the left roller 26 located at the tail of the plurality of left rollers 26 (in this embodiment, the left roller 26 closest to a wheel 24L) will be referred to as a left rear end roller 262.

The pair of crawler moving cylinders 15R and 15L of the car body 10 are hydraulic cylinders that are disposed between the front axle 13 and the rear axle 14 and that couple the car body main part 10A to the right travelling device and the left travelling device. The right crawler moving cylinder 15R has a leading end fixed to the right crawler frame 2R of the right travelling device, and the left crawler moving cylinder 15L has a leading end fixed to the left crawler frame 2L of the left travelling device. According to expansion/contraction movement of the right crawler moving cylinder 15R, therefore, the right crawler frame 2R of the right travelling device shifts in position in the left-to-right direction relative to the car body main part 10A and the front and rear axles 13 and 14, while according to expansion/contraction movement of the left crawler moving cylinder 15L, the left crawler frame 2L of the left travelling device shifts in position in the left-to-right direction relative to the car body main part 10A and the front and rear axles 13 and 14. FIGS. 3 to 5 show a state in which the right crawler frame 2R and the left crawler frame 2L are each set at the expanded position, and FIGS. 6 and 7 show a state in which the right crawler frame 2R and the left crawler frame 2L are each set at the contracted position.

The plurality of coupling members include a right front coupling member 11R, a right rear coupling member 12R, a left front coupling member 11L, and a left rear coupling member 12L. In the lower travelling body 101 according to the embodiment of the invention, the plurality of coupling members have the following features, respectively.

The right front coupling member 11R couples the car body 10 to the right crawler frame 2R as the right front coupling member 11R is disposed on the diagonally rightward front side relative to the car body 10. The left front coupling member 11L couples the car body 10 to the left crawler frame 2L as the left front coupling member 11L is disposed on the diagonally leftward front side relative to the car body 10. In crane work, therefore, the right front coupling member 11R can transmit a front load in the direction of heading from the car body 10 toward the diagonally rightward front side, the front load being a load that the car body 10 receives from the upper slewing body 102 when the cargo-to-be-lifted is hung on the upper slewing body 102 on the front side relative to the lower travelling body 101. In other words, the right front coupling member 11R can transmit the front load to a part of right crawler frame 2R that is on the front side relative to the car body 10. The left front coupling member 11L, on the other hand, can transmit the front load in the direction of heading from the car body 10 toward the diagonally leftward front side. In other words, the left front coupling member 11L can transmit the front load to a part of left crawler frame 2L that is on the front side relative to the car body 10. As a result, when the cargo-to-be-lifted is hung from the upper slewing body 102 on the front side relative to the lower travelling body 101, deformation the lower travelling body 101 develops can be reduced.

The right rear coupling member 12R couples the car body 10 to the right crawler frame 12R as the right rear coupling member 12R is disposed on the diagonally rightward rear side relative to the car body 10. The left rear coupling member 12L couples the car body 10 to the left crawler frame 2L as the left rear coupling member 12L is disposed on the diagonally leftward rear side relative to the car body 10. In crane work, therefore, the right rear coupling member 12R can transmit a rear load in the direction of heading from the car body 10 toward the diagonally rightward rear side, the rear load being a load that the car body 10 receives from the upper slewing body 102 when the cargo-to-be-lifted is hung on the upper slewing body 102 on the rear side relative to the lower travelling body 101. In other words, the right rear coupling member 12R can transmit the rear load to a part of right crawler frame 2R that is on the rear side relative to the car body 10. The left rear coupling member 12L, on the other hand, can transmit the rear load in the direction of heading from the car body 10 toward the diagonally leftward rear side. In other words, the left rear coupling member 12L can transmit the rear load to a part of left crawler frame 2L that is on the rear side relative to the car body 10. As a result, when the cargo-to-be-lifted is hung from the upper slewing body 102 on the rear side relative to the lower travelling body 101, deformation the lower travelling body 101 develops can be reduced.

Each of the right front coupling member 11R and the right rear coupling member 12R is configured to be capable of changing its relative position to one or both of the right crawler frame 2R and the car body 10 in order to reduce dimensions of the lower travelling body 101 when it is transported. Each of the left front coupling member 11L and the left rear coupling member 12L is configured to be capable of changing its relative position to one or both of the left crawler frame 2L and the car body 10 in order to reduce dimensions of the lower travelling body 101 when it is transported. Hence the dimensions of the lower travelling body 101 can be reduced when it is transported. Hereinafter, features of the lower travelling body 101 according to the embodiment of the invention will be described specifically.

Each of the right front coupling member 11R and the right rear coupling member 12R includes a car body connection portion 30 connected to the car body 10 in such a way as to be capable of rotating around a vertical axis relative to the car body 10, a first crawler connection portion 31 detachably connected to the right crawler frame 2R set at the expanded position, and a second crawler connection portion 32 detachably connected to the right crawler frame 2R set at the contracted position. Each of the right front coupling member 11R and the right rear coupling member 12R is an example of a right coupling member.

Each of the left front coupling member 11L and the left rear coupling member 12L includes a car body connection portion 30 connected to the car body 10 in such a way as to be capable of rotating around a vertical axis relative to the car body 10, a first crawler connection portion 31 detachably connected to the left crawler frame 2L set at the expanded position, and a second crawler connection portion 32 detachably connected to the left crawler frame 2L set at the contracted position. Each of the left front coupling member 11L and the left rear coupling member 12L is an example of a left coupling member.

The plurality of connected portions of the car body 10 include a right front connected portion 51R to which the car body connection portion 30 of the right front coupling member 11R is connected in such a way as to be rotatable about a vertical axis, a right rear connected portion 52R to which the car body connection portion 30 of the right rear coupling member 12R is connected in such a way as to be rotatable about a vertical axis, a left front connected portion 51L to which the car body connection portion 30 of the left front coupling member 11L is connected in such a way as to be rotatable about a vertical axis, and a left rear connected portion 52L to which the car body connection portion 30 of the left rear coupling member 12L is connected in such a way as to be rotatable about a vertical axis.

The plurality of connected portions of the right crawler frame 2R include a right front connected portion 61R and a right rear connected portion 62R. The first crawler connection portion 31 of the right front coupling member 11R is detachably connected to the right front connected portion 61R as the right crawler frame 2R is set at the expanded position, and the second crawler connection portion 32 of the right front coupling member 11R is detachably connected to the right front connected portion 61R as the right crawler frame 2R is set at the contracted position. The first crawler connection portion 31 of the right rear coupling member 12R is detachably connected to the right rear connected portion 62R as the right crawler frame 2R is set at the expanded position, and the second crawler connection portion 32 of the right rear coupling member 12R is detachably connected to the right rear connected portion 62R as the right crawler frame 2R is set at the contracted position. The right front connected portion 61R is located on the front side relative to the right front axle support 27 and on the diagonally rightward front side relative to the right front connected portion 51R of the car body 10. The right rear connected portion 62R is located on the rear side relative to the right rear axle support 28 and on the diagonally rightward rear side relative to the right rear connected portion 52R of the car body 10.

The plurality of connected portions of the left crawler frame 2L include a left front connected portion 61L and a left rear connected portion 62L. The first crawler connection portion 31 of the left front coupling member 11L is detachably connected to the left front connected portion 61L as the left crawler frame 2L is set at the expanded position, and the second crawler connection portion 32 of the left front coupling member 11L is detachably connected to the left front connected portion 61L as the left crawler frame 2L is set at the contracted position. The first crawler connection portion 31 of the left rear coupling member 12L is detachably connected to the left rear connected portion 62L as the left crawler frame 2L is set at the expanded position, and the second crawler connection portion 32 of the left rear coupling member 12L is detachably connected to the left rear connected portion 62L as the left crawler frame 2L is set at the contracted position. The left front connected portion 61L is located on the front side relative to the left front axle support 27 and on the diagonally leftward front side relative to the left front connected portion 51L of the car body 10. The left rear connected portion 62L is located on the rear side relative to the left rear axle support 28 and on the diagonally leftward rear side relative to the left rear connected portion 52L of the car body 10.

Specifically, the car body connection portion 30 of the right front coupling member 11R is formed on one end (base end) of the right front coupling member 11R. The first crawler connection portion 31 of the right front coupling member 11R is formed on the other end (front end) of the right front coupling member 11R. The second crawler connection portion 32 of the right front coupling member 11R is formed on a middle part of the right front coupling member 11R. In this embodiment, the second crawler connection portion 32 is located closer to the first crawler connection portion 31 than the car body connection portion 30.

The car body connection portion 30 of the right front coupling member 11R includes a pin insertion hole H30 vertically penetrating the one end of the right front coupling member 11 R, and a pin P30 inserted into the pin insertion hole H30. The first crawler connection portion 31 of the right front coupling member 11R includes a pin insertion hole H31 vertically penetrating the other end of the right front coupling member 11 R, and a pin P31 inserted into the pin insertion hole H31. The second crawler connection portion 32 of the right front coupling member 11R includes a pin insertion hole H32 vertically penetrating the middle part of the right front coupling member 11R, and a pin inserted into the pin insertion hole H32. In this embodiment, the pin of the second crawler connection portion 32 may be the same as the pin P31 of the first crawler connection portion 31. In other words, the pin P31 may be configured such that it is inserted into the pin insertion hole H31 of the first crawler connection portion 31 in a case where the right crawler frame 2R is set at the expanded position, and is inserted into the pin insertion hole H32 of the second crawler connection portion 32 in a case where the right crawler frame 2R is set at the contracted position. That said, however, the pin of the second crawler connection portion 32 may be different from the pin P31 of the first crawler connection portion 31.

The right front connected portion 51R of the car body 10 has a pair of projection pieces PL1 projecting frontward from at least one of the car body main part 10A and the right part of the front axle 13. These projection pieces PL1 are arranged at intervals in the vertical direction. The distance (gap) between the pair of projection pieces PL1 in the vertical direction is determined to be a value slightly larger than dimensions (thickness) in the vertical direction of the car body connection portion 30 so that the car body connection portion 30 of the right front coupling member 11R can be fitted in between the pair of projection pieces PL1.

The pair of projection pieces PL1 each have a pin insertion hole H5. When the car body connection portion 30 of the right front coupling member 11R is fitted in between the pair of projection pieces PL1, the pin insertion holes H5 of the pair of projection pieces PL1 are each located at the same position at which the pin insertion hole H30 of the car body connection portion 30 is located in plan view. In a state where the car body connection portion 30 of the right front coupling member 11R is fitted in between the pair of projection pieces PL1, the pin P30 is inserted into respective pin insertion holes H5 of the pair of projection pieces PL1 and into the pin insertion hole H30 of the car body connection portion 30. As a result, the car body connection portion 30 of the right front coupling member 11R is connected to the car body 10 in such a way as to be capable of rotating around the vertical axis. The right front coupling member 11R can rotate around a rotation center axis, which is the center of the pin P30, relative to the car body 10.

The right front connected portion 61R of the right crawler frame 2R has a pair of projection pieces PL2 projecting leftward from the right frame body 20R. These projection pieces PL2 are arranged at intervals in the vertical direction. The distance (gap) between the pair of projection pieces PL2 in the vertical direction is determined to be a value slightly larger than the dimensions (thickness) in the vertical direction of each of the crawler connection portions 31 and 32 so that each of the first crawler connection portion 31 and second crawler connection portion 32 of the right front coupling member 11R can be fitted in between the pair of projection pieces PL2.

The pair of projection pieces PL2 each have a pin insertion hole H6. When the first crawler connection portion 31 of the right front coupling member 11R is fitted in between the pair of projection pieces PL2 as the right crawler frame 2R is set at the expanded position, the pin insertion holes H6 of the pair of projection pieces PL2 are each located at the same position at which the pin insertion hole H31 of the first crawler connection portion 31 is located in plan view. In a state where the first crawler connection portion 31 of the right front coupling member 11R is fitted in between the pair of projection pieces PL2, the pin P31 is inserted into respective pin insertion holes H6 of the pair of projection pieces PL2 and into the pin insertion hole H31 of the first crawler connection portion 31. As a result, the first crawler connection portion 31 of the right front coupling member 11R is connected detachably to the right frame body 20R of the right crawler frame 2R set at the expanded position.

When the second crawler connection portion 32 of the right front coupling member 11R is fitted in between the pair of projection pieces PL2 as the right crawler frame 2R is set at the contracted position, the pin insertion holes H6 of the pair of projection pieces PL2 are each located at the same position at which the pin insertion hole H32 of the second crawler connection portion 32 is located in plan view. In a state where the second crawler connection portion 32 of the right front coupling member 11R is fitted in between the pair of projection pieces PL2, the pin P31 is inserted into respective pin insertion holes H6 of the pair of projection pieces PL2 and into the pin insertion hole H32 of the second crawler connection portion 32. As a result, the second crawler connection portion 32 of the right front coupling member 11R is connected detachably to the right frame body 20R of the right crawler frame 2R set at the contracted position.

In this embodiment, the second crawler connection portion 32 of the right front coupling member 11R is on a segment connecting the car body connection portion 30 to the first crawler connection portion 31 in plan view. Specifically, the pin insertion hole H32 of the second crawler connection portion 32 of the right front coupling member 11R is on a segment connecting the center of the pin insertion hole H30 of the car body connection portion 30 (i.e., the center of the pin P30) to the center of the pin insertion hole H31 of the first crawler connection portion 31 (i.e., the center of the pin P31).

The structure of the car body connection portion 30, the first crawler connection portion 31, and the second crawler connection portion 32 of the right rear coupling member 12R, the structure of the car body connection portion 30, the first crawler connection portion 31, and the second crawler connection portion 32 of the left front coupling member 11L, and the structure of the car body connection portion 30, the first crawler connection portion 31, and the second crawler connection portion 32 of the left rear coupling member 12L are each the same as the structure of the car body connection portion 30, the first crawler connection portion 31, and the second crawler connection portion 32 of the right front coupling member 11R, except for differences in direction, and are therefore not described in detail.

The right rear connected portion 52R of the car body 10 has a pair of projection pieces PL1 projecting rearward from at least one of the car body main part 10A and the right part of the rear axle 14, the left front connected portion 51L of the car body 10 has a pair of projection pieces PL1 projecting frontward from at least one of the car body main part 10A and the left part of the front axle 13, and the left rear connected portion 52L of the car body 10 has a pair of projection pieces PL1 projecting rearward from at least one of the car body main part 10A and the left part of the rear axle 14. The structure of each of these connected portions 52R, 51L, and 52L is the same as the structure of the right front connected portion 51R of the car body 10, except for differences in direction, and are therefore not described in detail.

The right rear connected portion 62R of the right crawler frame 2R has a pair of projection pieces PL2 projecting leftward from the right frame body 20R, the left front connected portion 61L of the left crawler frame 2L has a pair of projection pieces PL2 projecting rightward from the left frame body 20L, and the left rear connected portion 62L of the left crawler frame 2L has a pair of projection pieces PL2 projecting rightward from the left frame body 20L. The structure of each of these connected portions 62R, 61L, and 62L is the same as the structure of the right front connected portion 61R of the right crawler frame 2R, except for differences in direction, and are therefore not described in detail.

In the lower travelling body 101 having the structure described above, the plurality of coupling members 11R, 12R, 11L, 12L are configured such that each of them can be set in an expanded connection state.

The expanded connection state of the right front coupling member 11R is a state in which, as the right crawler frame 2R is set at the expanded position, the car body connection portion 30 of the right front coupling member 11R is connected to the right front connected portion 51R of the car body 10 and the first crawler connection portion 31 of the right front coupling member 11R is connected to the right front connected portion 61R of the right crawler frame 2R. The right front coupling member 11R set in the expanded connection state has a shape that extends diagonally frontward to the right from the car body 10 on the front side relative to the slewing center axis C, and couples the car body 10 to the right crawler frame 2R.

The expanded connection state of the right rear coupling member 12R is a state in which, as the right crawler frame 2R is set at the expanded position, the car body connection portion 30 of the right rear coupling member 12R is connected to the right rear connected portion 52R of the car body 10 and the first crawler connection portion 31 of the right rear coupling member 12R is connected to the right rear connected portion 62R of the right crawler frame 2R. The right rear coupling member 12R set in the expanded connection state has a shape that extends diagonally rearward to the right from the car body 10 on the rear side relative to the slewing center axis C, and couples the car body 10 to the right crawler frame 2R.

The expanded connection state of the left front coupling member 11L is a state in which, as the left crawler frame 2L is set at the expanded position, the car body connection portion 30 of the left front coupling member 11L is connected to the left front connected portion 51L of the car body 10 and the first crawler connection portion 31 of the left front coupling member 11L is connected to the left front connected portion 61L of the left crawler frame 2L. The left front coupling member 11L set in the expanded connection state has a shape that extends diagonally frontward to the left from the car body 10 on the front side relative to the slewing center axis C, and couples the car body 10 to the left crawler frame 2L.

The expanded connection state of the left rear coupling member 12L is a state in which, as the left crawler frame 2L is set at the expanded position, the car body connection portion 30 of the left rear coupling member 12L is connected to the left rear connected portion 52L of the car body 10 and the first crawler connection portion 31 of the left rear coupling member 12L is connected to the left rear connected portion 62L of the left crawler frame 2L. The left rear coupling member 12L set in the expanded connection state has a shape that extends diagonally rearward to the left from the car body 10 on the rear side relative to the slewing center axis C, and couples the car body 10 to the left crawler frame 2L.

Each of the right front coupling member 11R and the right rear coupling member 12R changes its relative position to the car body 10 and the right crawler frame 2R, from the current expanded connection state while remaining connected to the car body 10, thus allowing the right crawler frame 2R to shift from the expanded position to the contracted position.

Specifically, each of the right front coupling member 11R and the right rear coupling member 12R shifts in position from the expanded connection state in the following manner, thus allowing the right crawler frame 2R to shift from the expanded position to the contracted position. The first crawler connection portion 31 of the right front coupling member 11R is removed from the right crawler frame 2R, and the first crawler connection portion 31 of the right rear coupling member 12R is removed from the right crawler frame 2R. Meanwhile, the car body connection portion 30 of the right front coupling member 11R and the car body connection portion 30 of the right rear coupling member 12R remain connected to the car body 10. In this state, the right front coupling member 11R rotates on the car body connection portion 30, relative to the car body 10 and the right rear coupling member 12R rotates on the car body connection portion 30, relative to the car body 10. As a result, respective relative positions of these coupling members 11R and 12R to the car body 10 and the right crawler frame 2R change from the expanded connection state. This allows the right crawler frame 2R to shift from the expanded position to the contracted position.

Each of the left front coupling member 11L and the left rear coupling member 12L changes its relative position to the car body 10 and the left crawler frame 2L, from the current expanded connection state while remaining connected to the car body 10, thus allowing the left crawler frame 2L to shift from the expanded position to the contracted position.

Specifically, each of the left front coupling member 11L and the left rear coupling member 12L shifts in position from the expanded connection state in the following manner, thus allowing the left crawler frame 2L to shift from the expanded position to the contracted position. The first crawler connection portion 31 of the left front coupling member 11L is removed from the left crawler frame 2L, and the first crawler connection portion 31 of the left rear coupling member 12L is removed from the left crawler frame 2L. Meanwhile, the car body connection portion 30 of the left front coupling member 11L and the car body connection portion 30 of the left rear coupling member 12L remain connected to the car body 10. In this state, the left front coupling member 11L rotates on the car body connection portion 30, relative to the car body 10 and the left rear coupling member 12L rotates on the car body connection portion 30, relative to the car body 10. As a result, respective relative positions of these coupling members 11L and 12L to the car body 10 and the left crawler frame 2L change from the expanded connection state. This allows the left crawler frame 2L to shift from the expanded position to the contracted position.

The right front coupling member 11R and the right rear coupling member 12R are configured such that they can be set in a restricted state in which the right front coupling member 11R and the right rear coupling member 12R are each restricted by the car body 10 and the right crawler frame 2R that is set at the contracted position. Specifically, by connecting the second crawler connection portion 32 of the right front coupling member 11R detachably to the right front connected portion 61R of the right crawler frame 2R set at the contracted position, the right front coupling member 11R has its both ends connected to the car body 10 and the right crawler frame 2R, respectively, and is therefore set in the restricted state. By connecting the second crawler connection portion 32 of the right rear coupling member 12R detachably to the right rear connected portion 62R of the right crawler frame 2R set at the contracted position, the right rear coupling member 12R has its both ends connected to the car body 10 and the right crawler frame 2R, respectively, and is therefore set in the restricted state.

Similarly, the left front coupling member 11L and the left rear coupling member 12L can be set in a restricted state in which the left front coupling member 11L and the left rear coupling member 12L are each restricted by the car body 10 and the left crawler frame 2L that is set at the contracted position. Specifically, by connecting the second crawler connection portion 32 of the left front coupling member 11L detachably to the left front connected portion 61L of the left crawler frame 2L set at the contracted position, the left front coupling member 11L has its both ends connected to the car body 10 and the left crawler frame 2L, respectively, and is therefore set in the restricted state. By connecting the second crawler connection portion 32 of the left rear coupling member 12L detachably to the left rear connected portion 62L of the left crawler frame 2L set at the contracted position, the left rear coupling member 12L has its both ends connected to the car body 10 and the left crawler frame 2L, respectively, and is therefore set in the restricted state.

### [Load Transmission Structure]

A load transmission structure the lower travelling body 101 according to the embodiment of the invention has will then be described in detail.

As shown in FIG 3, the car body 10 includes a plurality of load transmission surfaces for transmitting a load received from the upper slewing body 102 to each of the coupling members 11R, 12R, 11L, and 12L. Specifically, the plurality of load transmission surfaces include a right front load transmission surface 5FR for transmitting the load to the right front coupling member 11R, a right rear load transmission surface 5BR for transmitting the load to the right rear coupling member 12R, a left front load transmission surface 5FL for transmitting the load to the left front coupling member 11L, and a left rear load transmission surface 5BL for transmitting the load to the left rear coupling member 12L.

The right front load transmission surface 5FR of the car body 10 is formed on a part of car body 10 that is on the front side and on the right side relative to the slewing center axis C. The right rear load transmission surface 5BR of the car body 10 is formed on a part of car body 10 that is on the rear side and on the right side relative to the slewing center axis C. The left front load transmission surface 5FL of the car body 10 is formed on a part of car body 10 that is on the front side and on the left side relative to the slewing center axis C. The left rear load transmission surface 5BL of the car body 10 is formed on a part of car body 10 that is on the rear side and on the left side relative to the slewing center axis C.

Each of the plurality of coupling members 11R, 12R, 11L, 12L has a load receiving surface for receiving the load from the car body 10. Specifically, the right front coupling member 11R has a right front load receiving surface 3FR counter to the right front load transmission surface 5FR of the car body 10. The right rear coupling member 12R has a right rear load receiving surface 3BR counter to the right rear load transmission surface 5BR of the car body 10. The left front coupling member 11L has a left front load receiving surface 3FL counter to the left front load transmission surface 5FL of the car body 10. The left rear coupling member 12L has a left rear load receiving surface 3BL counter to the left rear load transmission surface 5BL of the car body 10.

Each of the right front load receiving surface 3FR of the right front coupling member 11R and the left front load receiving surface 3FL of the left front coupling member 11L is a surface capable of receiving a front load from the car body 10, the front load being a load that the car body 10 receives from the upper slewing body 102 when the cargo-to-be-lifted is hung on the upper slewing body 102 on the front side relative to the lower travelling body 101. The front load that the right front load receiving surface 3FR and the left front load receiving surface 3FL receive from the car body 10 is part of the entire load that the car body 10 receives from the upper slewing body 102 when the cargo-to-be-lifted is hung on the upper slewing body 102 on the front side relative to the lower travelling body 101.

Each of the right rear load receiving surface 3BR of the right rear coupling member 12R and the left rear load receiving surface 3BL of the left rear coupling member 12L is a surface capable of receiving a rear load from the car body 10, the rear load being a load that the car body 10 receives from the upper slewing body 102 when the cargo-to-be-lifted is hung on the upper slewing body 102 on the rear side relative to the lower travelling body 101. The rear load that the right rear load receiving surface 3BR and the left rear load receiving surface 3BL receive from the car body 10 is part of the entire load that the car body 10 receives from the upper slewing body 102 when the cargo-to-be-lifted is hung on the upper slewing body 102 on the rear side relative to the lower travelling body 101.

Each of the plurality of coupling members 11R, 12R, 11L, 12L has a load transmission surface for transmitting the load received from the car body 10 to the crawler frame. Specifically, the right front coupling member 11R has a right front load transmission surface 4FR counter to the right frame body 20R of the right crawler frame 2R. The right rear coupling member 12R has a right rear load transmission surface 4BR counter to the right frame body 20R of the right crawler frame 2R. The left front coupling member 11L has a left front load transmission surface 4FL counter to the left frame body 20L of the left crawler frame 2L. The left rear coupling member 12L has a left rear load transmission surface 4BL counter to the left frame body 20L of the left crawler frame 2L.

The right front load transmission surface 4FR is a surface capable of transmitting the front load to the right crawler frame 2R, the left front load transmission surface 4FL is a surface capable of transmitting the front load to the left crawler frame 2L, the right rear load transmission surface 4BR is a surface capable of transmitting the rear load to the right crawler frame 2R, and the left rear load transmission surface 4BL is a surface capable of transmitting the rear load to the left crawler frame 2L.

The right crawler frame 2R includes a right front load receiving surface 6FR for receiving the load from the right front coupling member 11R, and a right rear load receiving surface 6BR for receiving the load from the right rear coupling member 12R. The left crawler frame 2L includes a left front load receiving surface 6FL for receiving the load from the left front coupling member 11L, and a left rear load receiving surface 6BL for receiving the load from the left rear coupling member 12L.

Specific examples of the plurality of load transmission surfaces of the car body 10 are as follows. The right front load transmission surface 5FR of the car body 10 may be configured by, for example, inner peripheral surfaces demarcating the pin insertion holes H5 formed on the pair of projection pieces PL1 of the right front connected portion 51R. The other load transmission surfaces 5BR, 5FL, and 5BL may also be configured in the same manner as the right front load transmission surface 5FR is.

Specific examples of respective load receiving surfaces of the plurality of coupling members 11R, 12R, 11L, and 12L are as follows. The right front load receiving surface 3FR of the right front coupling member 11R may be configured by the outer peripheral surface of the pin P30 of the car body connection portion 30. The outer peripheral surface of the pin P30 is counter to the pin insertion holes H5 formed on the pair of projection pieces PL1 of the right front connected portion 51R. The other load receiving surfaces 3BR, 3FL, and 3BL may also be configured in the same manner as the right front load receiving surface 3FR is.

Specific examples of respective load transmission surfaces of the plurality of coupling members 11R, 12R, 11L, and 12L are as follows. The right front load transmission surface 4FR of the right front coupling member 11R may be configured by the outer peripheral surface of the pin P31 of the first crawler connection portion 31. The outer peripheral surface of the pin P31 is counter to the pin insertion holes H6 formed on the pair of projection pieces PL2 of the right front connected portion 61R of the right crawler frame 2R.

In this case, the right front load receiving surface 6FR of the right crawler frame 2R may be configured by inner peripheral surfaces demarcating respective pin insertion holes H6 of the pair of projection pieces PL2 of the right front connected portion 61R..

The other load transmission surfaces 4BR, 4FL, and 4BL of the plurality of coupling members may also be configured in the same manner as the right front load transmission surface 4FR, and the other load receiving surfaces 6BR, 6FL, and 6BL of the left and right crawler frames 2R and 2L may also be configured in the same manner as the right front load receiving surface 6FR.

In the plan view shown in FIG 3, the right front coupling member 11R has a shape in which a right front straight line LA, which is a straight line passing through a point A1 included in the right front load receiving surface 3FR of the right front coupling member 11R and a point A2 included in the right front load transmission surface 4FR, passes through the right front end roller 261. In the plan view shown in FIG 3, the left front coupling member 11L has a shape in which a left front straight line LC, which is a straight line passing through a point C1 included in the left front load receiving surface 3FL of the left front coupling member 11L and a point C2 included in the left front load transmission surface 4FL, passes through the left front end roller 261. In this embodiment, the right front straight line LA is the straight line passing through the slewing center axis C as well in plan view, and the left front straight line LC is the straight line passing through the slewing center axis C as well in plan view.

However, the point A1 on the right front load receiving surface 3FR and the point A2 on the right front load transmission surface 4FR for defining the right front straight line LA are not limited to the points at the above-described positions. The point A1 may be a different point included in the right front load receiving surface 3FR capable of receiving the front load from the right front load transmission surface 5FR of the car body 10, and the point A2 may be a different point included in the right front load transmission surface 4FR capable of transmitting the front load to the right front load receiving surface 6FR of the right crawler frame 2R. Specifically, the right front straight line LA may be, for example, a straight line that in the plan view shown in FIG 3, passes through a rear end point on the right front load receiving surface 3FR and through a front end point on the right front load transmission surface 4FR.

Similarly, the point C1 on the left front load receiving surface 3FL and the point C2 on the left front load transmission surface 4FL for defining the left front straight line LC are not limited to the points at the above-described positions. The point C1 may be a different point included in the left front load receiving surface 3FL capable of receiving the front load from the left front load transmission surface 5FL of the car body 10, and the point C2 may be a different point included in the left front load transmission surface 4FL capable of transmitting the front load to the left front load receiving surface 6FL of the left crawler frame 2L. Specifically, the left front straight line LC may be, for example, a straight line that in the plan view shown in FIG 3, passes through a rear end point on the left front load receiving surface 3FL and through a front end point on the left front load transmission surface 4FL.

The right front coupling member 11R includes a right front continuous part CX extending continuously, in plan view, from the right front load receiving surface 3FR to the right front load transmission surface 4FR along the right front straight line LA, and the left front coupling member 11L includes a left front continuous part CX extending continuously, in plan view, from the left front load receiving surface 3FL to the left front load transmission surface 4FL along the left front straight line LC. Specifically, the right front continuous part CX extends continuously from the right front load receiving surface 3FR to the right front load transmission surface 4FR while overlapping the right front straight line LA in plan view, and left front continuous part CX extends continuously from the left front load receiving surface 3FL to the left front load transmission surface 4FL while overlapping the left front straight line LC in plan view.

In the plan view shown in FIG 3, the right rear coupling member 12R has a shape in which a right rear straight line LB, which is a straight line passing through a point B1 included in the right rear load receiving surface 3BR of the right rear coupling member 12R and a point B2 included in the right rear load transmission surface 4BR, passes through the right rear end roller 262. In the plan view shown in FIG 3, the left rear coupling member 12L has a shape in which a left rear straight line LD, which is a straight line passing through a point D1 included in the left rear load receiving surface 3BL of the left rear coupling member 12L and a point D2 included in the left rear load transmission surface 4BL, passes through the left rear end roller 262. In this embodiment, the right rear straight line LB is the straight line passing through the slewing center axis C as well in plan view, and the left rear straight line LD is the straight line passing through the slewing center axis C as well in plan view.

However, the point B1 on the right rear load receiving surface 3BR and the point B2 on the right rear load transmission surface 4BR for defining the right rear straight line LB are not limited to the points at the above-described positions. The point B1 may be a different point included in the right rear load receiving surface 3BR capable of receiving the rear load from the right rear load transmission surface 5BR of the car body 10, and the point B2 may be a different point included in the right rear load transmission surface 4BR capable of transmitting the rear load to the right rear load receiving surface 6BR of the right crawler frame 2R. Specifically, the right rear straight line LB may be, for example, a straight line that in the plan view shown in FIG 3, passes through a front end point on the right rear load receiving surface 3BR and through a rear end point on the right rear load transmission surface 4BR.

Similarly, the point D1 on the left rear load receiving surface 3BL and the point D2 on the left rear load transmission surface 4BL for defining the left rear straight line LD are not limited to the points at the above-described positions. The point D1 may be a different point included in the left rear load receiving surface 3BL capable of receiving the rear load from the left rear load transmission surface 5BL of the car body 10, and the point D2 may be a different point included in the left rear load transmission surface 4BL capable of transmitting the rear load to the left rear load receiving surface 6BL of the left crawler frame 2L. Specifically, the left rear straight line LD may be, for example, a straight line that in the plan view shown in FIG 3, passes through a front end point on the left rear load receiving surface 3BL and through a rear end point on the left rear load transmission surface 4BL.

The right rear coupling member 12R includes a right rear continuous part CX extending continuously, in plan view, from the right rear load receiving surface 3BR to the right rear load transmission surface 4BR along the right rear straight line LB, and the left rear coupling member 12L includes a left rear continuous part CX extending continuously, in plan view, from the left rear load receiving surface 3BL to the left rear load transmission surface 4BL along the left rear straight line LD. Specifically, the right rear continuous part CX extends continuously from the right rear load receiving surface 3BR to the right rear load transmission surface 4BR while overlapping the right rear straight line LB in plan view, and left rear continuous part CX extends continuously from the left rear load receiving surface 3BL to the left rear load transmission surface 4BL while overlapping the left rear straight line LD in plan view.

### [First Modified of First Embodiment of the Invention]

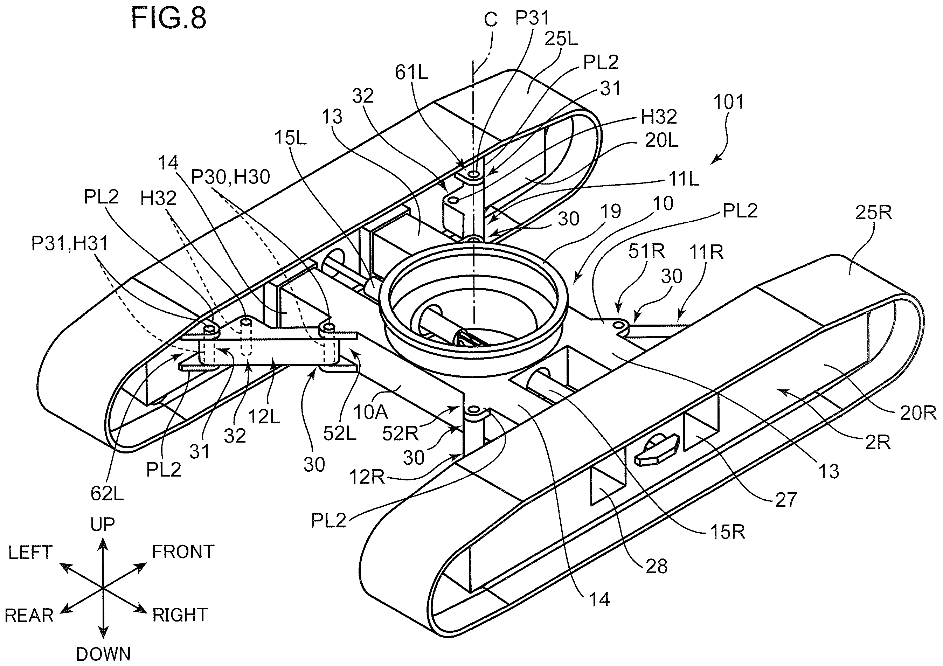

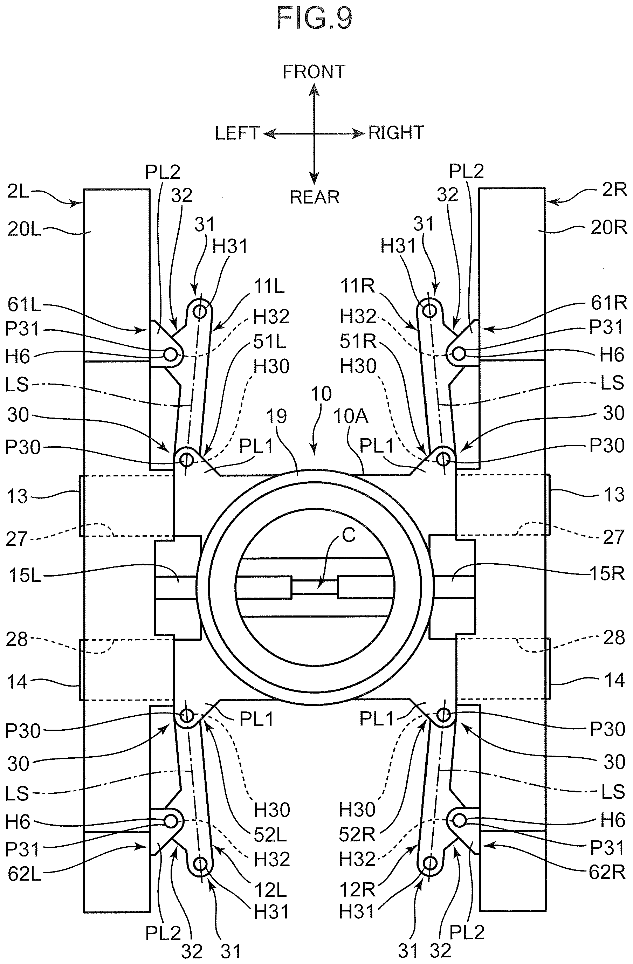

FIG 8 is a perspective view of a lower travelling body 101 according to a first modification of the first embodiment of the invention, showing a state in which the left and right crawler frames 2R and 2L are set at the expanded position. FIG 9 is a plan view of the car body 10 and the left and right crawler frames 2R and 2L of the lower travelling body 101 according to the first modification of the first embodiment of the invention, showing a state in which the left and right crawler frames 2R and 2L are set at the contracted position.

The lower travelling body 101 according to the first modification of the first embodiment is different from the lower travelling body 101 according to the first embodiment shown in FIGS. 2 and 7 in the structure of the plurality of coupling members 11R, 12R, 11L, and 12L. Other aspects of the configuration of the lower travelling body 101 according to the first modification are the same as those of the lower travelling body 101 according to the first embodiment and therefore will not be described.

In the first modification shown in FIGS. 8 and 9, each of the right front coupling member 11R and the right rear coupling member 12R includes a member body extending from the car body connection portion 30 to the first crawler connection portion 31, and the second crawler connection portion 32, and this second crawler connection portion 32 is configured by a projection that projects from the member body in the direction of approaching the right crawler frame 2R as each of the right front coupling member 11R and the right rear coupling member 12R is set in the restricted state. The second crawler connection portion 32 configured by the projection has a pin insertion hole H32 vertically penetrating the projection. The second crawler connection portion 32 of the right front coupling member 11R and the second crawler connection portion 32 of the right rear coupling member 12R are configured to be connected detachably, respectively, to the right front connected portion 61R and the right rear connected portion 62R of the right crawler frame 2R set at the contracted position.

Each of the second crawler connection portion 32 of the right front coupling member 11R, the second crawler connection portion 32 being connected to the right front connected portion 61R of the right crawler frame 2R set at the contracted position, and the second crawler connection portion 32 of the right rear coupling member 12R, the second crawler connection portion 32 being connected to the right rear connected portion 62R of the right crawler frame 2R, is configured to be located on the right crawler frame 2R side relative to a segment LS connecting the car body connection portion 30 to the crawler connection portion 31 in the plan view shown in FIG 9. Specifically, in this embodiment, the segment LS is a segment that connects the center of the pin insertion hole H30 of the car body connection portion 30 (the center of the pin P30) to the center of the pin insertion hole H31 of the first crawler connection portion 31.

Similarly, each of the left front coupling member 11L and the left rear coupling member 12L includes a member body extending from the car body connection portion 30 to the first crawler connection portion 31, and the second crawler connection portion 32, and this second crawler connection portion 32 is configured by a projection that projects from the member body in the direction of approaching the left crawler frame 2L as each of the left front coupling member 11L and the left rear coupling member 12L is set in the restricted state. The second crawler connection portion 32 configured by the projection has a pin insertion hole H32 vertically penetrating the projection. The second crawler connection portion 32 of the left front coupling member 11L and the second crawler connection portion 32 of the left rear coupling member 12L are configured to be connected detachably, respectively, to the left front connected portion 61L and the left rear connected portion 62L of the left crawler frame 2L set at the contracted position.

Each of the second crawler connection portion 32 of the left front coupling member 11L, the second crawler connection portion 32 being connected to the left front connected portion 61L of the left crawler frame 2L set at the contracted position, and the second crawler connection portion 32 of the left rear coupling member 12L, the second crawler connection portion 32 being connected to the left rear connected portion 62L of the left crawler frame 2L, is configured to be located on the left crawler frame 2L side relative to a segment LS connecting the car body connection portion 30 to the crawler connection portion 31 in the plan view shown in FIG 9. Specifically, in this embodiment, the segment LS is a segment that connects the center of the pin insertion hole H30 of the car body connection portion 30 (the center of the pin P30) to the center of the pin insertion hole H31 of the first crawler connection portion 31.

In a state where the second crawler connection portion 32 of the right front coupling member 11R is fitted in between the pair of projection pieces PL2, the pin P31 is inserted into respective pin insertion holes H6 of the pair of projection pieces PL2 and into the pin insertion hole H32 of the second crawler connection portion 32. As a result, the second crawler connection portion 32 of the right front coupling member 11R is connected detachably to the right frame body 20R of the right crawler frame 2R set at the contracted position. The structure of connecting each of the second crawler connection portions 32 of the other coupling members 12R, 11L, and 12L is the same as the above structure of connecting the second crawler connection portions 32 of the right front coupling member 11R.

In this first modification, the second crawler connection portion 32 located on the right crawler frame 2R side relative to the segment LS is connected to the right crawler frame 2R set at the contracted position. Because of this, compared with a case where the second crawler connection portion 32 is on the line segment LS of the right front coupling member 11R, the right front coupling member 11R is less likely to interfere with the right crawler frame 2R. Respective second crawler connection portions 32 of the other coupling members 12R, 11L, and 12L offer the same effect as the second crawler connection portion 32 of the right front coupling member 11R offers.

### [Second Modification of First Embodiment of the Invention]

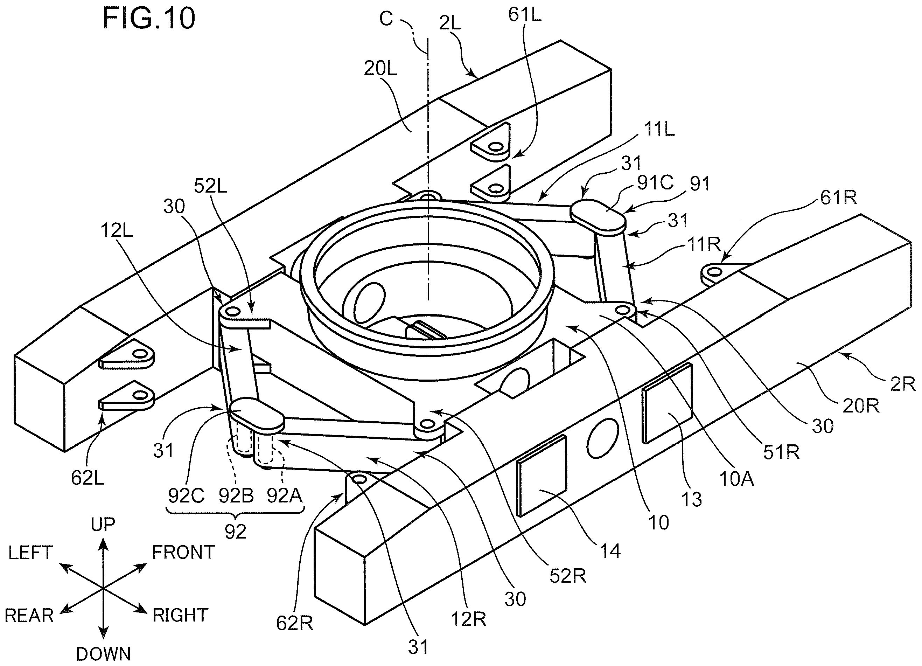

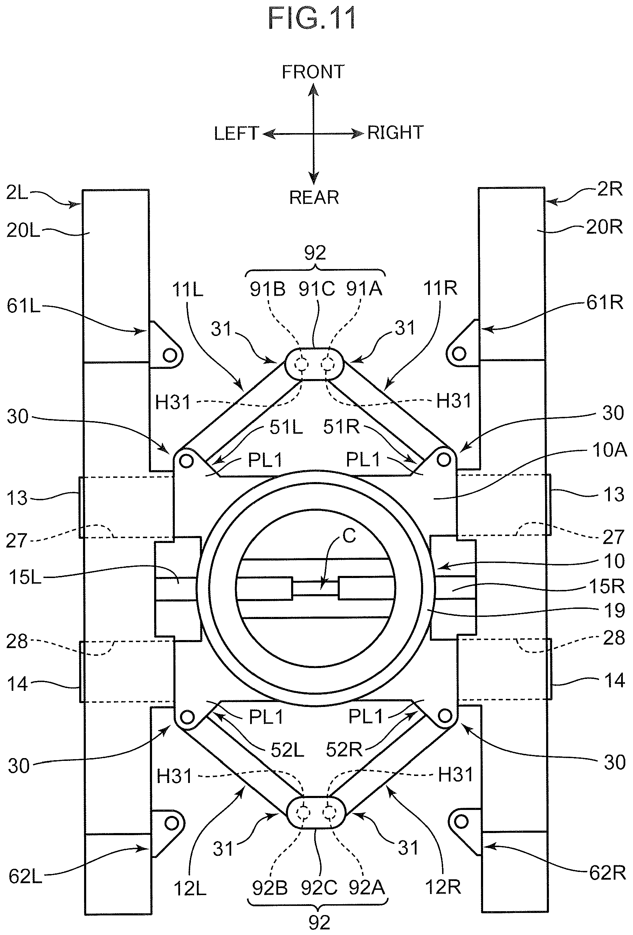

FIG 10 is a perspective view of the car body 10 and the left and right crawler frames 2R and 2L of the lower travelling body 101 according to a second modification of the first embodiment of the invention, showing a state in which the left and right crawler frames 2R and 2L are set at the contracted position. FIG 11 is a plan view of the car body 10 and the left and right crawler frames 2R and 2L of the lower travelling body 101 according to the second modification of the first embodiment of the invention, showing the state in which the left and right crawler frames 2R and 2L are set at the contracted position.

The lower travelling body 101 according to the second modification of the first embodiment is different from the lower travelling body 101 according to the first embodiment shown in FIG 7 in a connection structure in a case of the plurality of coupling members 11R, 12R, 11L, and 12L being set in the restricted state. Other aspects of the configuration of the lower travelling body 101 according to the second modification are the same as those of the lower travelling body 101 according to the first embodiment and therefore will not be described.

As shown in FIGS. 10 and 11, the lower travelling body 101 according to the second modification further includes a first connection member 91 that connects the right front coupling member 11R to the left front coupling member 11L, and a second connection member 92 that connects the right rear coupling member 12R to the left rear coupling member 12L.

The first connection member 91 includes an insertion part 91A that can be inserted into the pin insertion hole H31 of the crawler connection portion 31 of the right front coupling member 11R, an insertion part 91B that can be inserted into the pin insertion hole H31 of the crawler connection portion 31 of the left front coupling member 11L, and a coupling portion 91C that couples these insertion parts 91A and 91B to each other with a gap formed therebetween.

The second connection member 92 includes an insertion part 92A that can be inserted into the pin insertion hole H31 of the crawler connection portion 31 of the right rear coupling member 12R, an insertion part 92B that can be inserted into the pin insertion hole H31 of the crawler connection portion 31 of the left rear coupling member 12L, and a coupling portion 92C that couples these insertion parts 92A and 92B to each other with a gap formed therebetween.

In the second modification, the right front coupling member 11R and the left front coupling member 11L are connected to each other via the first connection member 91 as each of the right crawler frame 2R and the left crawler frame 2L is set at the contracted position. The right front coupling member 11R and the left front coupling member 11L are thus set in the restricted state. In the same manner, the right rear coupling member 12R and the left rear coupling member 12L are connected to each other via the second connection member 92 as each of the right crawler frame 2R and the left crawler frame 2L is set at the contracted position. The right rear coupling member 12R and the left rear coupling member 12L are thus set in the restricted state.

### [Structure of Lower Travelling Body According to Second Embodiment of the Invention]

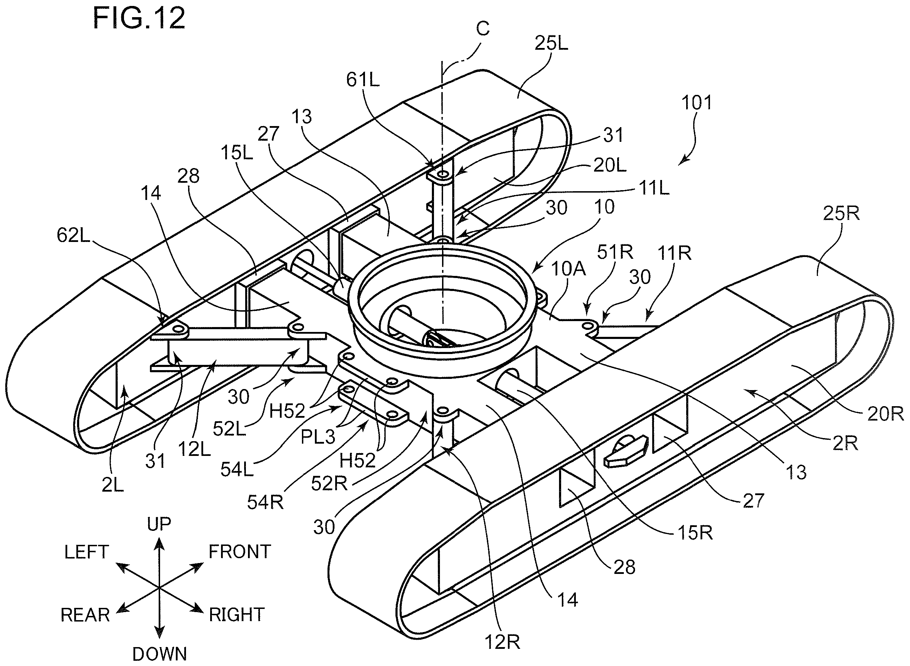

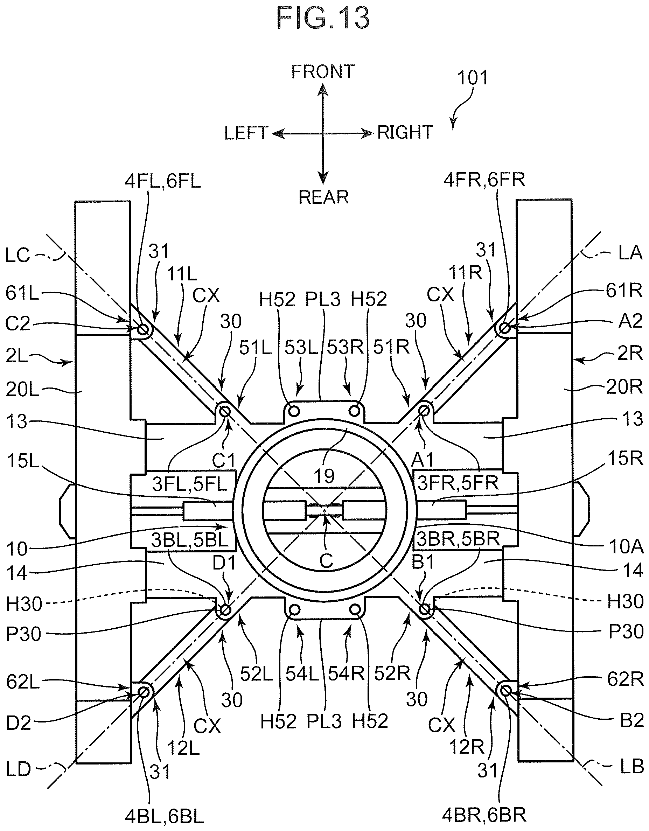

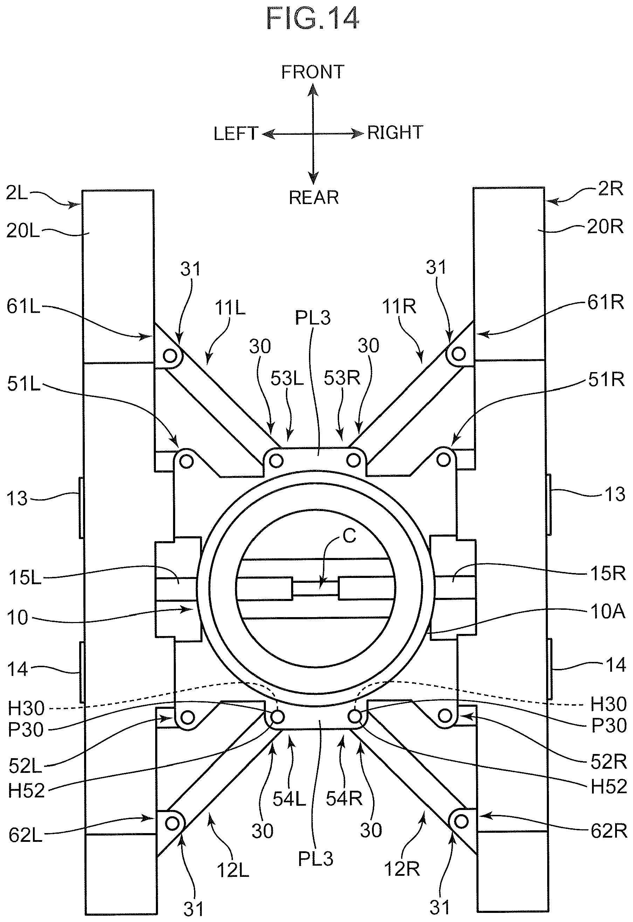

FIG 12 is a perspective view of a lower travelling body 101 according to a second embodiment of the invention, showing a state in which the left and right crawler frames 2R and 2L are set at the expanded position. FIG 13 is a plan view of the car body 10 and the left and right crawler frames 2R and 2L of the lower travelling body 101 according to the second embodiment of the invention, showing the state in which the left and right crawler frames 2R and 2L are set at the expanded position. FIG 14 is a plan view of the car body 10 and the left and right crawler frames 2R and 2L of the lower travelling body 101 according to the second embodiment of the invention, showing the state in which the left and right crawler frames 2R and 2L are set at the contracted position.

In the second embodiment, the car body connection portion 30 of each of the plurality of coupling members 11R, 12R, 11L, and 12L is detachably connected to the car body 10, and the crawler connection portion 31 of each of the plurality of coupling members 11R, 12R, 11L, and 12L is connected to the corresponding crawler frame in such a way as to be rotatable about a vertical axis.

In the lower travelling body 101 according to the second embodiment, the car body 10 further includes a second right front connected portion 53R and a second left front connected portion 53L that are disposed between the right front connected portion 51R (first right front connected portion 51R) and the left front connected portion 51L (first left front connected portion 51L) in the left-to-right direction.

The second right front connected portion 53R is a connected portion for putting the right front coupling member 11R in a restricted position as the right crawler frame 2R is set at the contracted position. The second right front connected portion 53R is located on the front side and on the right side relative to the slewing center axis C, and is located on the left side relative to the right front connected portion 51R. In this embodiment, the second right front connected portion 53R is on a straight line parallel to the left-to-right direction that in plan view, passes through the right front connected portion 51R. The distance in the left-to-right direction between the right front connected portion 51R and the second right front connected portion 53R is determined to be substantially equal to the distance in the left-to-right direction between the expanded position and the contracted position of the right crawler frame 2R.

The second left front connected portion 53L is a connected portion for putting the left front coupling member 11L in a restricted position as the left crawler frame 2L is set at the contracted position. The second left front connected portion 53L is located on the front side and on the left side relative to the slewing center axis C, and is located on the right side relative to the left front connected portion 51L. In this embodiment, the second left front connected portion 53L is on a straight line parallel to the left-to-right direction that in plan view, passes through the left front connected portion 51L. The distance in the left-to-right direction between the left front connected portion 51L and the second left front connected portion 53L is determined to be substantially equal to the distance in the left-to-right direction between the expanded position and the contracted position of the left crawler frame 2L.

The car body 10 further includes a second right rear connected portion 54R and a second left rear connected portion 54L that are disposed between the right rear connected portion 52R (first right rear connected portion 52R) and the left rear connected portion 52L (first left rear connected portion 52L) in the left-to-right direction.

The second right rear connected portion 54R is a connected portion for putting the right rear coupling member 12R in a restricted position as the right crawler frame 2R is set at the contracted position. The second right rear connected portion 54R is located on the rear side and on the right side relative to the slewing center axis C, and is located on the left side relative to the right rear connected portion 52R. In this embodiment, the second right rear connected portion 54R is on a straight line parallel to the left-to-right direction that in plan view, passes through the right rear connected portion 52R. The distance in the left-to-right direction between the right rear connected portion 52R and the second right rear connected portion 54R is determined to be substantially equal to the distance in the left-to-right direction between the expanded position and the contracted position of the right crawler frame 2R.

The second left rear connected portion 54L is a connected portion for putting the left rear coupling member 12L in a restricted position as the left crawler frame 2L is set at the contracted position. The second left rear connected portion 54L is located on the rear side and on the left side relative to the slewing center axis C, and is located on the right side relative to the left rear connected portion 52L. In this embodiment, the second left rear connected portion 54L is on a straight line parallel to the left-to-right direction that in plan view, passes through the left rear connected portion 52L. The distance in the left-to-right direction between the left rear connected portion 52L and the second left rear connected portion 54L is determined to be substantially equal to the distance in the left-to-right direction between the expanded position and the contracted position of the left crawler frame 2L.

The structure of each of the second right front connected portion 53R, the second left front connected portion 53L, the second right rear connected portion 54R, and the second left rear connected portion 54L is required to be a structure to which the corresponding car body connection portion 30 can be connected, and is not limited to a specific structure as far as this requirement is met. For example, the following structures can be adopted as the structure of each connected portion.

As shown in FIGS. 12 to 14, for example, the second right rear connected portion 54R includes a pair of projection pieces PL3 projecting rearward from at least one of the car body main part 10A and the right part of the rear axle 14. These projection pieces PL3 are arranged at intervals in the vertical direction. A distance (gap) in the vertical direction between the pair of projection pieces PL3 is determined to be a value slightly larger than the dimensions (thickness) in the vertical direction of the car body connection portion 30 so that the car body connection portion 30 of the right rear coupling member 12R can be fitted in between the pair of projection pieces PL3.

Similarly, the second left rear connected portion 54L includes a pair of projection pieces PL3 projecting rearward from at least one of the car body main part 10A and the left part of the rear axle 14. These projection pieces PL3 are arranged at intervals in the vertical direction. A distance (gap) in the vertical direction between the pair of projection pieces PL3 is determined to be a value slightly larger than the dimensions (thickness) in the vertical direction of the car body connection portion 30 so that the car body connection portion 30 of the left rear coupling member 12L can be fitted in between the pair of projection pieces PL3.

In this embodiment, an upper projection piece PL3 of the second right rear connected portion 54R and an upper projection piece PL3 of the second left rear connected portion 54L are formed into an integral structure, and a lower projection piece PL3 of the second right rear connected portion 54R and a lower projection piece PL3 of the second left rear connected portion 54L are formed into an integral structure. However, the upper projection piece PL3 of the second right rear connected portion 54R and the upper projection piece PL3 of the second left rear connected portion 54L may be formed into separate structures, and the lower projection piece PL3 of the second right rear connected portion 54R and the lower projection piece PL3 of the second left rear connected portion 54L may be formed into separate structures.

The pair of projection pieces PL3 of the second right rear connected portion 54R have pin insertion holes H52, respectively. When the car body connection portion 30 of the right rear coupling member 12R is fitted in between the pair of projection pieces PL3 as the right crawler frame 2R is set at the contracted position, as shown in FIG 14, the pin insertion holes H52 of the pair of projection pieces PL3 are located at the same position as the position of the pin insertion hole H30 of the car body connection portion 30 in plan view. In a state where the car body connection portion 30 of the right rear coupling member 12R is fitted in between the pair of projection pieces PL3, the pin P30 is inserted into the pin insertion holes H52 of the pair of projection pieces PL3 and into the pin insertion hole H30 of the car body connection portion 30. As a result, the car body connection portion 30 of the right rear coupling member 12R is detachably connected to the car body 10 at the second right rear connected portion 54R. Specifically, by connecting the car body connection portion 30 of the right rear coupling member 12R to the second right rear connected portion 54R, the right rear coupling member 12R has its both ends connected to the car body 10 and the right crawler frame 2R, respectively, and is therefore set in the restricted state.

The structure of each of the second right front connected portion 53R and the second left front connected portion 53L is the same as the structure of each of the second right rear connected portion 54R and the second left rear connected portion 54L that has been described with reference to FIGS. 12 to 14, except for differences in direction, and therefore will not be described.

In this embodiment, for example, when an angle of the right front coupling member 11R against the right crawler frame 2R in the expanded connection state is the same as an angle of the right front coupling member 11R against the right crawler frame 2R in the restricted state, the crawler connection portion 31 of the right front coupling member 11R does not always have to be connected rotatably to the right front connected portion 61R of the right crawler frame 2R and may be connected (fixed) to the right crawler frame 2R such that the angle of the right front coupling member 11R cannot be changed. Even in such a case, however, to improve the workability of operation of causing the right crawler frame 2R to shift from the expanded position to the contracted position and of operation of detachably connecting the right front coupling member 11R to the car body 10 as the right crawler frame 2R is set at the contracted position, it is preferable that the crawler connection portion 31 of the right front coupling member 11R be configured to be connected rotatably to the right crawler frame 2R. This description of the right front coupling member 11R applies also to the other coupling members 12R, 11L, and 12L.

### [Modification of Second Embodiment of the Invention]

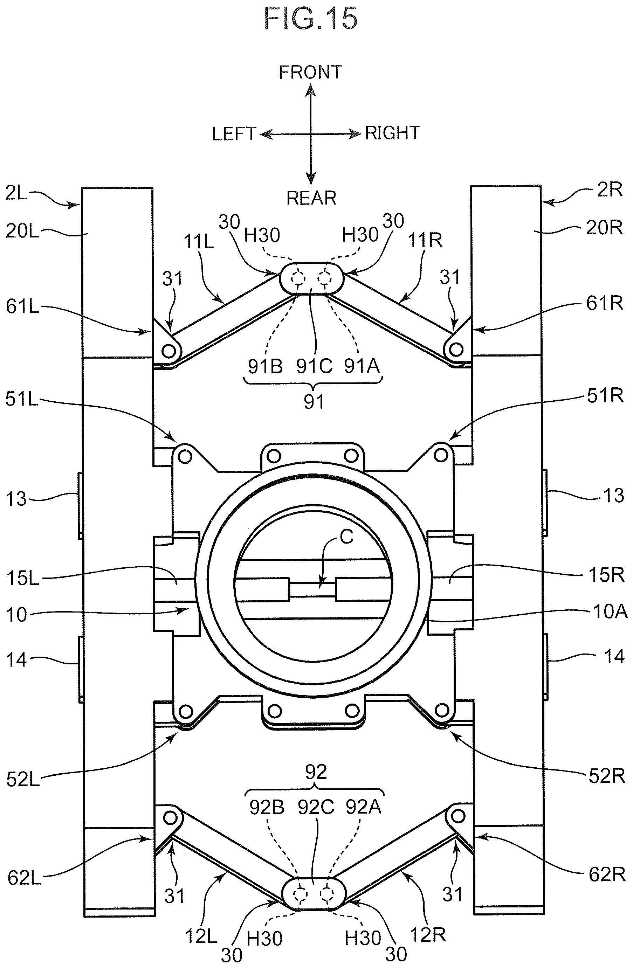

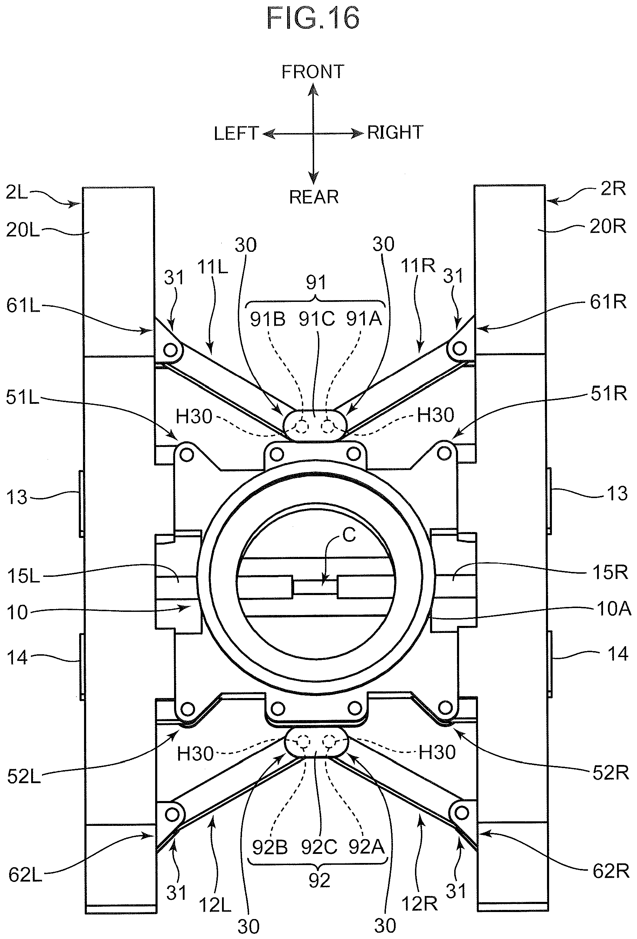

FIG 15 is a plan view of the car body 10 and the left and right crawler frames 2R and 2L of a lower travelling body 101 according to a modification of the second embodiment of the invention, showing a state in which the left and right crawler frames 2R and 2L are set at the contracted position. FIG 16 is a plan view of the car body 10 and the left and right crawler frames 2R and 2L of the lower travelling body 101 according to the modification of the second embodiment of the invention, showing the state in which the left and right crawler frames 2R and 2L are set at the contracted position.

The lower travelling body 101 according to the modification of the second embodiment is different from the lower travelling body 101 according to the second embodiment shown in FIG 14 in a connection structure in a case of the plurality of coupling members 11R, 12R, 11L, and 12L being set in the restricted state. Other aspects of the configuration of the modification are the same as those of the lower travelling body 101 according to the second embodiment, and therefore will not be the described.

As shown in FIG 15, a connection structure of the lower travelling body 101 according to this modification in a case of the lower travelling body 101 being set in the restricted state is the same as a connection structure of the lower travelling body 101 according to the second modification of the first embodiment in a case of the lower travelling body 101 being set in the restricted state, the connection structure being described with reference to FIGS. 10 and 11.

The lower travelling body 101 according to the modification of the second embodiment further includes the first connection member 91 that connects the right front coupling member 11R to the left front coupling member 11L, and the second connection member 92 that connects the right rear coupling member 12R to the left rear coupling member 12L. These connection members 91 and 92 are the same as the first connection member 91 and the second connection member 92 in the second modification of the first embodiment. Specifically, the first connection member 91 includes the insertion part 91A that can be inserted into the pin insertion hole H30 of the car body connection portion 30 of the right front coupling member 11R, the insertion part 91B that can be inserted into the pin insertion hole H30 of the car body connection portion 30 of the left front coupling member 11L, and the coupling portion 91C that couples these insertion parts 91A and 91B to each other with a gap formed therebetween. The second connection member 92 includes the insertion part 92A that can be inserted into the pin insertion hole H30 of the car body connection portion 30 of the right rear coupling member 12R, the insertion part 92B that can be inserted into the pin insertion hole H30 of the car body connection portion 30 of the left rear coupling member 12L, and the coupling portion 92C that couples these insertion parts 92A and 92B to each other with a gap formed therebetween.

In this modification, the right front coupling member 11R and the left front coupling member 11L are connected to each other via the first connection member 91 as each of the right crawler frame 2R and the left crawler frame 2L is set at the contracted position. The right front coupling member 11R and the left front coupling member 11L are thus set in the restricted state. In the same manner, the right rear coupling member 12R and the left rear coupling member 12L are connected to each other via the second connection member 92 as each of the right crawler frame 2R and the left crawler frame 2L is set at the contracted position. The right rear coupling member 12R and the left rear coupling member 12L are thus set in the restricted state.

In the modification shown in FIG 15, the right front coupling member 11R and the left front coupling member 11L are connected to each other in a state where the right front coupling member 11R and left front coupling member 11L are set in their respective positions of extending diagonally frontward from the crawler connection portions 31, and the right rear coupling member 12R and the left rear coupling member 12L are connected to each other in a state where the right rear coupling member 12R and left rear coupling member 12L are set in their respective positions of extending diagonally rearward from the crawler connection portions 31. However, arrangement of theses coupling members is not limited to this form.

For example, as shown in FIG 16, the right front coupling member 11R and the left front coupling member 11L may be connected to each other in a state where the right front coupling member 11R and left front coupling member 11L are set in their respective positions of extending diagonally rearward from the crawler connection portions 31, and the right rear coupling member 12R and the left rear coupling member 12L may be connected to each other in a state where the right rear coupling member 12R and left rear coupling member 12L are set in their respective positions of extending diagonally frontward from the crawler connection portions 31.

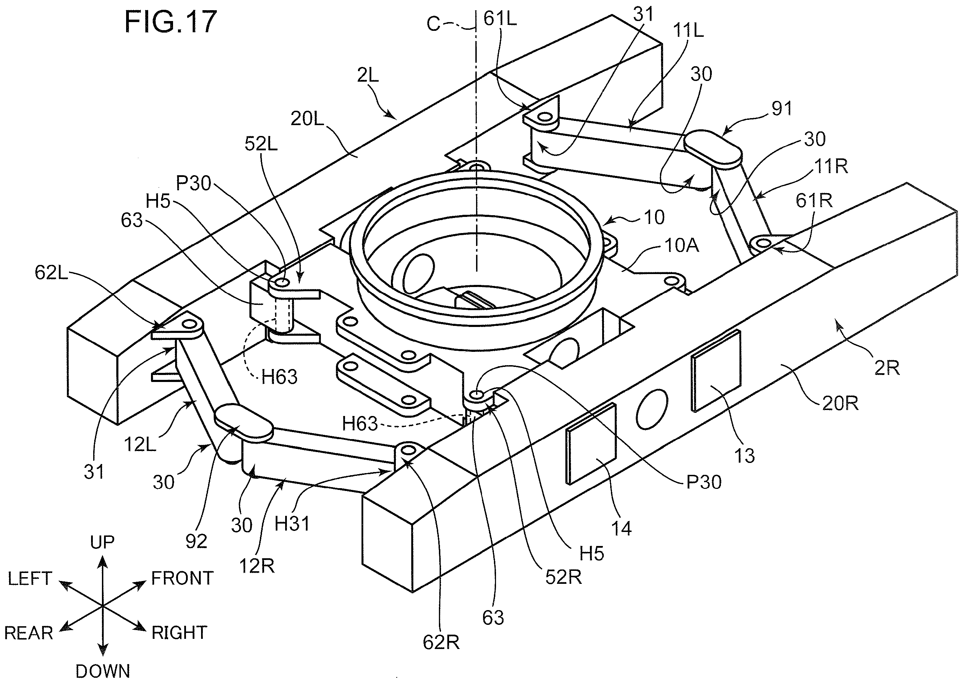

Further, as shown in FIG 17, the connection structure may be configured such that the right rear connected portion 52R of the car body 10 can be connected to a car body restriction portion 63 disposed on the right crawler frame 2R as the right crawler frame 2R is set at the contracted position. The car body restriction portion 63 is configured by a projection projecting leftward from the right frame body 20R of the right crawler frame 2R, and has a pin insertion hole H63 vertically penetrating the projection. The pin insertion hole H63 is located at the same position as the position of pin insertion holes H5 of the right rear connected portion 52R of the car body 10 in plan view as the right crawler frame 2R is set at the contracted position. As a result of the pin P30 being inserted into the pin insertion holes H5 and the pin insertion hole H63, the right rear coupling member 12R has its both ends connected to the car body 10 and the right crawler frame 2R, and is therefore set in the restricted state.

Similarly, the connection structure may be configured such that the left rear connected portion 52L of the car body 10 can be connected to a car body restriction portion 63 disposed on the left crawler frame 2L as the left crawler frame 2L is set at the contracted position. The car body restriction portion 63 is configured by a projection projecting rightward from the left frame body 20L of the left crawler frame 2L, and has a pin insertion hole H63 vertically penetrating the projection. The pin insertion hole H63 is located at the same position as the position of pin insertion holes H5 of the left rear connected portion 52L of the car body 10 in plan view as the left crawler frame 2L is set at the contracted position. As a result of the pin P30 being inserted into the pin insertion holes H5 and the pin insertion hole H63, the left rear coupling member 12L has its both ends connected to the car body 10 and the left crawler frame 2L, and is therefore set in the restricted state.

The connection structure may also be configured such that the right front connected portion 51R of the car body 10 can be connected to a car body restriction portion disposed on the right crawler frame 2R as the right crawler frame 2R is set at the contracted position, or that the left front connected portion 51L of the car body 10 can be connected to a car body restriction portion disposed on the left crawler frame 2L as the left crawler frame 2L is set at the contracted position (this configuration is not illustrated). Each of these car body restriction portions is similar in structure to the car body restriction portion 63 described with reference to FIG. 17, except for differences in direction.

According to the second embodiment illustrated in FIGS. 12 to 14, to set the right front coupling member 11R, the left front coupling member 11L, the right rear coupling member 12R, and the left rear coupling member 12L in the restricted state shown in FIG. 14, it is necessary to set each of the right crawler frame 2R and the left crawler frame 2L at the contracted position and then fix the car body connection portion 30 of each coupling member to the pair of projection pieces PL3. According to the modification shown in FIGS. 15 to 17, on the other hand, even if the right crawler frame 2R and the left crawler frame 2L are not set at the contracted position, for example, when the right crawler frame 2R and the left crawler frame 2L are set at the expanded position, the right front coupling member 11R and the left front coupling member 11L can be rotated and coupled by the first connection member 91 and the right rear coupling member 12R and the left rear coupling member 12L can be rotated and coupled by the second connection member 92 as well. In this manner, according to this modification, fixing work for setting each coupling member in the restricted state becomes easy, and therefore man-hours can be reduced. Besides, in this modification, the pairs of projection pieces PL3 shown in FIG 12 can be dispensed with.

Because the lower travelling body according to the modification shown in FIG 17 includes the car body restriction portions 63, it is unnecessary to provide a fixing structure, for example, on respective leading ends of the front axle 13 and on respective leading ends of the rear axle 14, as a structure for holding the left and right crawler frames 2R and 2L at the contracted position. Thus, providing the front axle 13 and the rear axle 14 with pin holes for the above fixing structure is not necessary and providing the same with a welded portion for fixture attachment is not necessary, neither. As a result, a drop in the strength of the front axle 13 and the rear axle 14 can be prevented.

### [Structure of Lower Travelling Body According to Third Embodiment not covered by the Invention]

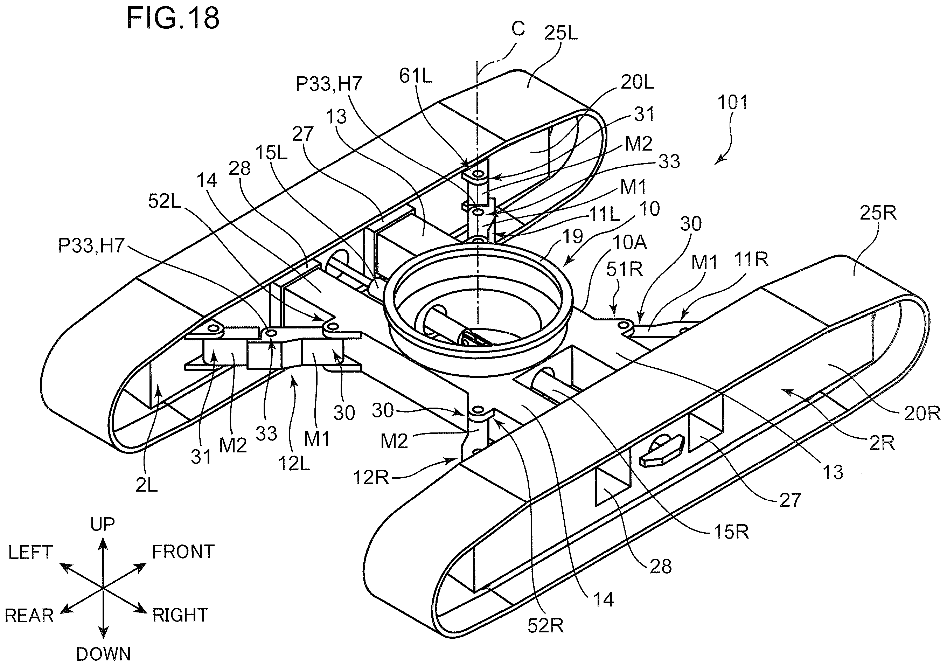

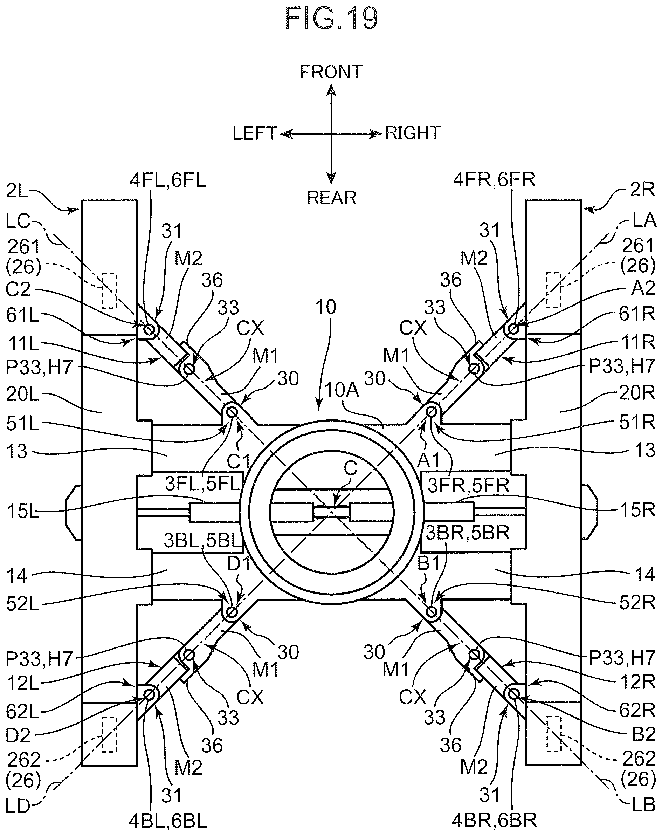

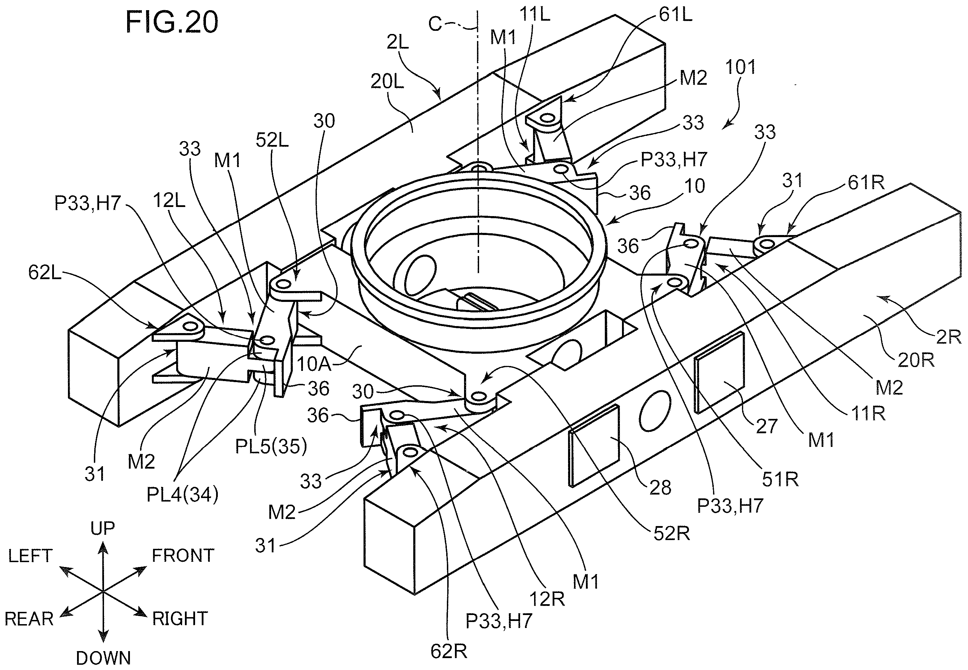

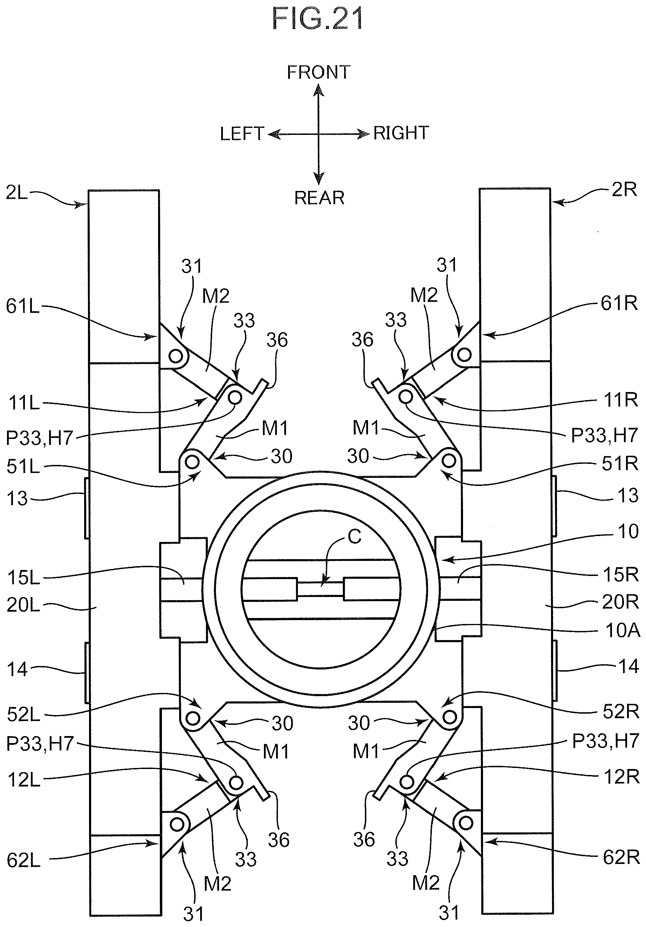

FIG 18 is a perspective view of a lower travelling body 101 according to a third embodiment. FIG 19 is a plan view of the car body 10 and the left and right crawler frames 2R and 2L of the lower travelling body 101 according to the third embodiment. FIGS. 18 and 19 show a state in which the left and right crawler frames 2R and 2L are set at the expanded position. FIG 20 is a perspective view of the car body 10 and the left and right crawler frames 2R and 2L of the lower travelling body 101 according to the third embodiment, and FIG 21 is a plan view of the same. FIGS. 20 and 21 show a state in which the left and right crawler frames 2R and 2L are set at the contracted position.

The lower travelling body 101 according to the third embodiment is different from the lower travelling body 101 according to the first embodiment in the structure of the plurality of coupling members 11R, 12R, 11L, and 12 L. Other aspects of the configuration of the lower travelling body 101 according to the third embodiment are the same as those of the lower travelling body 101 according to the first embodiment, and therefore will not be described.

In the third embodiment illustrated in FIGS. 18 to 21, the left and right crawler frames 2R and 2L can be shifted between the expanded position and the contracted position without detaching the plurality of coupling members 11R, 12R, 11L, and 12L from the car body 10 and the left and right crawler frames 2R and 2L. As a result, in work of causing the left and right crawler frames to expand or contract to the left and right (expansion/contraction work), fixing the plurality of coupling members 11R, 12R, 11L, and 12L to the car body 10 or the left and right crawler frames 2R and 2L using, for example, pins or the like becomes unnecessary and aligning different members with each other for fixing (fine positional adjustment) becomes unnecessary as well. This facilitates expansion/contraction work of the left and right crawler frames 2R and 2L, thus reducing man-hours for the expansion/contraction work. This will be described specifically as follows.

Each of the plurality of coupling members 11R, 12R, 11L, and 12L includes a first member M1 and a second member M2 that are configured such that the first member M1 is rotatably connected to the second member M2. In each of the plurality of coupling members 11R, 12R, 11L, and 12L, the car body connection portion 30 is formed on the first member M1 and is rotatably connected to the car body 10. The crawler connection portion 31 is formed on the second member M2 and is rotatably connected to the corresponding crawler frame, which is either the left crawler frame 2L or the right crawler frame 2R. Each of the plurality of coupling members 11R, 12R, 11L, and 12L further includes a coupling portion 33 at which the first member M1 is rotatably coupled to the second member M2.

At the right front coupling member 11R, the first member M1 rotates on the car body connection portion 30, relative to the car body 10, the second member M2 rotates on the crawler connection portion 31, relative to the right crawler frame 2R, and the first member M1 rotates on the coupling portion 33, relative to the second member M2, so that the relative position of the right front coupling member 11R to the car body 10 and to the right crawler frame 2R changes from the expanded connection state. As a result, the right front coupling member 11R allows the right crawler frame 2R to shift from the expanded position to the contracted position and is set in the restricted state.

At the right rear coupling member 12R, the first member M1 rotates on the car body connection portion 30, relative to the car body 10, the second member M2 rotates on the crawler connection portion 31, relative to the right crawler frame 2R, and the first member M1 rotates on the coupling portion 33, relative to the second member M2, so that the relative position of the right rear coupling member 12R to the car body 10 and to the right crawler frame 2R changes from the expanded connection state. As a result, the right rear coupling member 12R allows the right crawler frame 2R to shift from the expanded position to the contracted position and is set in the restricted state.

At the left front coupling member 11L, the first member M1 rotates on the car body connection portion 30, relative to the car body 10, the second member M2 rotates on the crawler connection portion 31, relative to the left crawler frame 2L, and the first member M1 rotates on the coupling portion 33, relative to the second member M2, so that the relative position of the left front coupling member 11L to the car body 10 and to the left crawler frame 2L changes from the expanded connection state. As a result, the left front coupling member 11L allows the left crawler frame 2L to shift from the expanded position to the contracted position and is set in the restricted state.

At the left rear coupling member 12L, the first member M1 rotates on the car body connection portion 30, relative to the car body 10, the second member M2 rotates on the crawler connection portion 31, relative to the left crawler frame 2L, and the first member M1 rotates on the coupling portion 33, relative to the second member M2, so that the relative position of the left rear coupling member 12L to the car body 10 and to the left crawler frame 2L changes from the expanded connection state. As a result, the left rear coupling member 12L allows the left crawler frame 2L to shift from the expanded position to the contracted position and is set in the restricted state.

The coupling portion 33 of each of the plurality of coupling members 11R, 12R, 11L, and 12L may have, for example, a structure shown in FIG 20. Specifically, an end 34 of first member M1 that is opposite to the car body connection portion 30 is configured by a pair of projection pieces PL4, and an end 35 of second member M2 that is opposite to the crawler connection portion 31 is configured by a projection piece PL5. The projection piece PL5 of the second member M2 is fitted in between the pair of projection pieces PL4 of the first member M1. The pair of projection pieces PL4 and the projection piece PL5 have pin insertion holes H7, respectively, which make up a single pin insertion hole that vertically penetrates the projection pieces PL4 and projection piece PL5 in their fitted state. A pin P33 is inserted into these pin insertion holes H7. Hence the first member M1 is rotatably connected to the second member M2 at the coupling portion 33.

According to this embodiment, at each of the plurality of coupling members 11R, 12R, 11L, and 12L, the first member M1 has a member body including the car body connection portion 30 and the end 34, and a rotation direction limiting portion 36 that extends from the member body along an inner surface of the second member M2 as each of the left and right crawler frames 2R and 2L is set at the expanded position. The rotation direction limiting portion 36 of each of the plurality of coupling members 11R, 12R, 11L, and 12L allows the first member M1 to rotate in one of the clockwise and counterclockwise directions on the coupling portion 33 in plan view, relative to the second member M2 but prevents the first member M1 from rotating in the other of the clockwise and counterclockwise directions in plan view, relative to the second member M2 as each of the left and right crawler frames 2R and 2L is set at the expanded position.

Specifically, on the right front coupling member 11R, the rotation direction limiting portion 36 extends diagonally frontward to the right along a left side surface of the second member M2, from a leading end of the member body of the first member M1, and is therefore adjacent to the left side surface of the second member M2, as shown in FIG 19. Therefore, as indicated in FIG 19, this rotation direction limiting portion 36 allows the first member M1 to rotate counterclockwise on the coupling portion 33 in plan view, relative to the second member M2 but prevents the first member M1 from rotating clockwise in plan view as the right crawler frame 2R is set at the expanded position.

On the right rear coupling member 12R, the rotation direction limiting portion 36 extends diagonally rearward to the right along a left side surface of the second member M2, from a leading end of the member body of the first member M1, and is therefore adjacent to the left side surface of the second member M2. Therefore, as indicated in FIG 19, this rotation direction limiting portion 36 allows the first member M1 to rotate clockwise on the coupling portion 33 in plan view, relative to the second member M2 but prevents the first member M1 from rotating counterclockwise in plan view as the right crawler frame 2R is set at the expanded position.

On the left front coupling member 11L, the rotation direction limiting portion 36 extends diagonally frontward to the left along a right side surface of the second member M2, from a leading end of the member body of the first member M1, and is therefore adjacent to the right side surface of the second member M2. Therefore, as indicated in FIG 19, this rotation direction limiting portion 36 allows the first member M1 to rotate clockwise on the coupling portion 33 in plan view, relative to the second member M2 but prevents the first member M1 from rotating counterclockwise in plan view as the left crawler frame 2L is set at the expanded position.

On the left rear coupling member 12L, the rotation direction limiting portion 36 extends diagonally rearward to the left along a right side surface of the second member M2, from a leading end of the member body of the first member M1, and is therefore adjacent to the right side surface of the second member M2. Therefore, as indicated in FIG 19, this rotation direction limiting portion 36 allows the first member M1 to rotate counterclockwise on the coupling portion 33 in plan view, relative to the second member M2 but prevents the first member M1 from rotating clockwise in plan view as the left crawler frame 2L is set at the expanded position.

### [Modification of Third Embodiment not covered by the Invention]

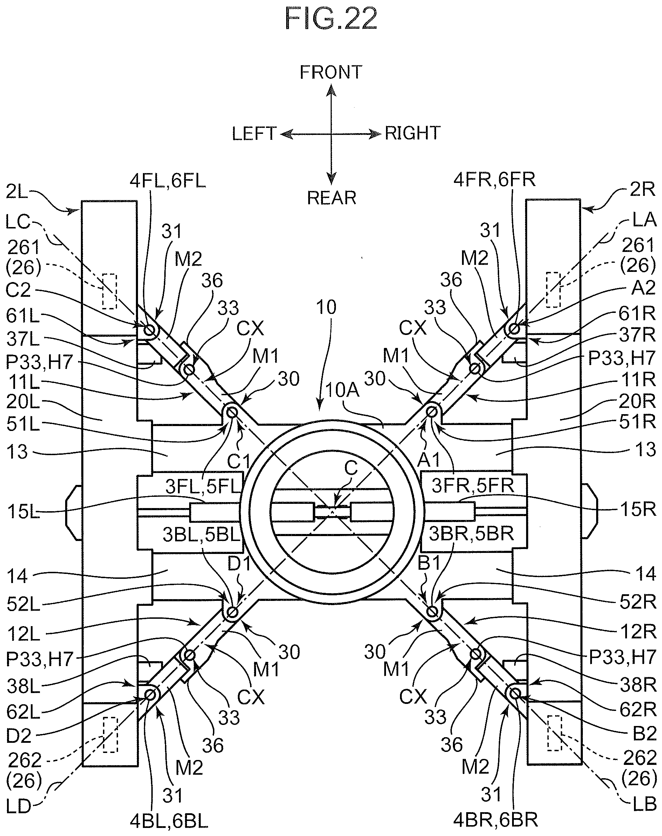

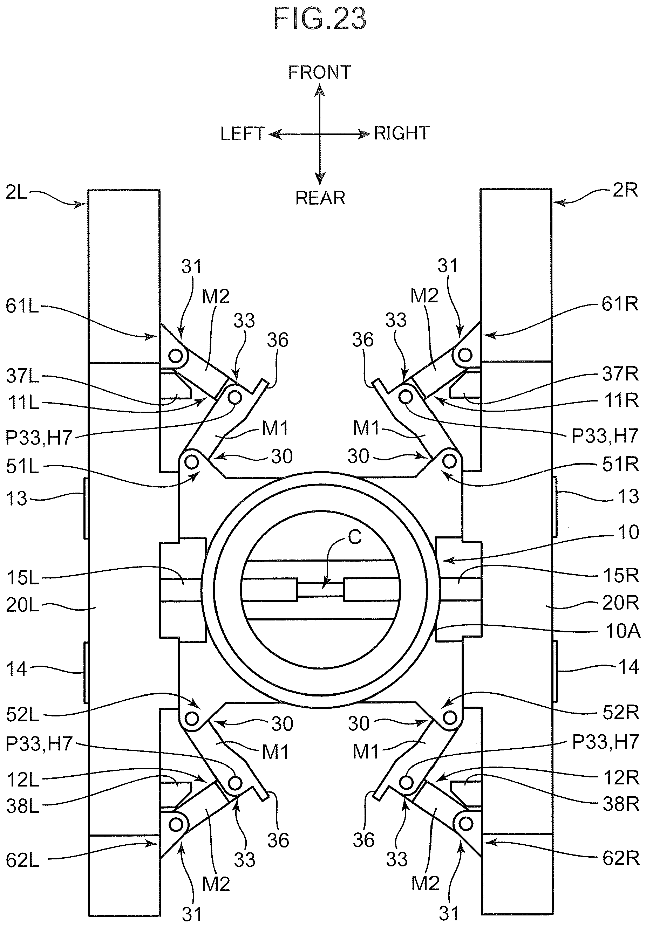

Each of FIGS. 22 and 23 is a plan view of the car body 10 and the left and right crawler frames 2R and 2L of a lower travelling body 101 according to a modification of the third embodiment. FIG 22 shows a state in which the left and right crawler frames 2R and 2L are set at the expanded position. FIG 23 shows a state in which the left and right crawler frames 2R and 2L are set at the contracted position.

As shown in FIGS. 22 and 23, in this modification, the right crawler frame 2R further includes a rotation direction limiting portion 37R and a rotation direction limiting portion 38R, and the left crawler frame 2L further includes a rotation direction limiting portion 37L and a rotation direction limiting portion 38L.

The rotation direction limiting portion 37R has a shape projecting leftward from the right frame body 20R of the right crawler frame 2R, and, as shown in FIG 22, is disposed to be in contact with or in close proximity to a right side surface of the second member M2 of the right front coupling member 11R as the right crawler frame 2R is set at the expanded position. Therefore, this rotation direction limiting portion 37R allows the first member M1 of the right front coupling member 11R to rotate counterclockwise on the coupling portion 33 in plan view, relative to the second member M2, as indicated in FIG 23, but prevents the first member M1 from rotating clockwise in plan view, relative to the second member M2.

The rotation direction limiting portion 38R has a shape projecting leftward from the right frame body 20R of the right crawler frame 2R, and, as shown in FIG 22, is disposed to be in contact with or in close proximity to a right side surface of the second member M2 of the right rear coupling member 12R as the right crawler frame 2R is set at the expanded position. Therefore, this rotation direction limiting portion 38R allows the first member M1 of the right rear coupling member 12R to rotate clockwise on the coupling portion 33 in plan view, relative to the second member M2, as indicated in FIG 23, but prevents the first member M1 from rotating counterclockwise in plan view, relative to the second member M2.

The rotation direction limiting portion 37L has a shape projecting rightward from the left frame body 20L of the left crawler frame 2L, and, as shown in FIG 22, is disposed to be in contact with or in close proximity to a left side surface of the second member M2 of the left front coupling member 11L as the left crawler frame 2L is set at the expanded position. Therefore, this rotation direction limiting portion 37L allows the first member M1 of the left front coupling member 11L to rotate clockwise on the coupling portion 33 in plan view, relative to the second member M2, as indicated in FIG 23, but prevents the first member M1 from rotating counterclockwise in plan view, relative to the second member M2.

The rotation direction limiting portion 38L has a shape projecting rightward from the left frame body 20L of the left crawler frame 2L, and, as shown in FIG 22, is disposed to be in contact with or in close proximity to a left side surface of the second member M2 of the left rear coupling member 12L as the left crawler frame 2L is set at the expanded position. Therefore, this rotation direction limiting portion 38L allows the first member M1 of the left rear coupling member 12L to rotate counterclockwise on the coupling portion 33 in plan view, relative to the second member M2, as indicated in FIG 23, but prevents the first member M1 from rotating clockwise in plan view, relative to the second member M2.

The invention is not limited to the embodiments described above. The invention includes, for example, the following modes.

### (A) Car Body Connection Portion and Crawler Connection Portion

In the invention, some of four coupling members may be configured such that the car body connection portion is rotatably connected to the car body 10 while the crawler connection portion is detachably connected to the crawler frame, and the other of the four coupling members may be configured such that the car body connection portion is detachably connected to the car body 10 while the crawler connection portion is rotatably connected to the crawler frame.

### (B) Part to Which Car Body Connection Portion Is Connected and Part to Which Crawler Connection Portion Is Connected

In the lower travelling body 101 according to the first embodiment of the invention, parts of the crawler frame to which parts the crawler connection portions are connected when the coupling members are set in the restricted state are not limited to the form shown exemplarily in the specification. In the lower travelling body 101 according to the second embodiment, parts of the car body to which parts the car body connection portions are connected when the coupling members are set in the restricted state are not limited to the form shown exemplarily in the specification.

### (C) Right Front Straight Line, Right Rear Straight Line, Left Front Straight Line, and Left Rear Straight Line

In the first and second embodiments of the invention, the plurality of coupling members are configured such that in plan view, the right front straight line LA passes through the right front end roller 261, the right rear straight line LB passes through the right rear end roller 262, the left front straight line LC passes through the left front end roller 261, and the left rear straight line LD passes through the left rear end roller 262. The coupling members are, however, not limited to this form. The right front straight line LA may pass through a point on the front side or the rear side relative to the right front end roller 261, the right rear straight line LB may pass through a point on the rear side or the front side relative to the right rear end roller 262, the left front straight line LC may pass through a point on the front side or the rear side relative to the left front end roller 261, and the left rear straight line LD may pass through a point on the rear side or the front side relative to the left rear end roller 262.

In the embodiments of the invention, the right front straight line LA is defined as a straight line that, in plan view, connects a point on the rotation center axis of the right front end roller 261 and at the center in the width direction (left-to-right direction) of the right front end roller 261 to the slewing center axis C, and the right rear straight line LB, the left front straight line LC, and the left rear straight line LD are also defined in a similar manner. These straight lines are, however, not limited to these forms. The right front straight line LA may be, for example, a straight line that, in plan view, connects the slewing center axis C to any pre-chosen part of the right front end roller 261. Any pre-chosen part of the right front end roller 261 is, for example, a part of right front end roller 261 that is, in plan view, at the rear end and right end of the right front end roller 261. Likewise, the right rear straight line LB may be a straight line that, in plan view, connects the slewing center axis C to any pre-chosen part of the right rear end roller 262, the left front straight line LC may be a straight line that, in plan view, connects the slewing center axis C to any pre-chosen part of the left front end roller 261, and the left rear straight line LD may be a straight line that, in plan view, connects the slewing center axis C to any pre-chosen part of the left rear end roller 262.

### (D) Direction of Cargo-to-be-Lifted Hung on Upper Slewing Body

In the invention, deformation of each crawler frame can be suppressed when the cargo-to-be-lifted is hung from the upper slewing body as the cargo-to-be-lifted is located on the front side or the rear side relative to the lower travelling body. However, the invention applies also to a case where the cargo-to-be-lifted is hung from the upper slewing body as the cargo-to-be-lifted is located on the left side or the right side relative to the lower travelling body.

### (E) Crane Specifications

The crane according to the embodiments of the invention shown in FIG 1 includes neither a jib nor a strut, but the specifications of the crane is not limited to the one shown in FIG 1. The crane according to the invention of the present disclosure may be a luffing crane including a jib, a front strut, and a rear strut, or may be a crane of a fixed jib type that includes a jib and one strut. The crane according to the present disclosure may be a crane (e.g., a large crane) equipped with a mast instead of a gantry.

### [Problem to Be Solved by the Invention]

An object of the invention is to provide a lower travelling body which includes an expansion/contraction mechanism capable of increasing or decreasing a distance from left and right crawler frames to a slewing center axis in a left-to-right direction and yet makes deformation small when a cargo-to-be-lifted is hung from an upper slewing body of a mobile crane on the front side or the rear side relative to the lower travelling body.

A lower travelling body of a mobile crane according to the invention includes: a car body including a car body main part that supports an upper slewing body of the mobile crane in such a way as to allow the upper slewing body to turn around a slewing center axis, a front axle extending rightward and leftward from the car body main part, and a rear axle extending rightward and leftward from the car body main part on the rear side relative to the front axle; a right crawler frame that extends in a front-to-rear direction on the right side relative to the car body main part; a left crawler frame that extends in the front-to-rear direction on the left side relative to the car body main part; and a plurality of coupling members. The right crawler frame includes a right front axle support and a right rear axle support that support the front axle and the rear axle, respectively, in such a way as to allow the right crawler frame to change its position in the left-to-right direction between an expanded position and a contracted position at which a distance between the slewing center axis and the right crawler frame is smaller than the same at the expanded position, relative to the front axle and the rear axle. The left crawler frame includes a left front axle support and a left rear axle support that support the front axle and the rear axle, respectively, in such a way as to allow the left crawler frame to change its position in the left-to-right direction between an expanded position and a contracted position at which a distance between the slewing center axis and the left crawler frame is smaller than the same at the expanded position, relative to the front axle and the rear axle. The plurality of coupling members include a right front coupling member, a right rear coupling member, a left front coupling member, and a left rear coupling member. The right front coupling member is configured to be set in an expanded connection state in which the right front coupling member is connected to the car body and is connected to a part of right crawler frame that is on the front side relative to the right front axle support portion, as the right crawler frame is set at the expanded position. The right rear coupling member is configured to be set in an expanded connection state in which the right rear coupling member is connected to the car body and is connected to a part of right crawler frame that is on the rear side relative to the right rear axle support portion, as the right crawler frame is set at the expanded position. The left front coupling member is configured to be set in an expanded connection state in which the left front coupling member is connected to the car body and is connected to a part of left crawler frame that is on the front side relative to the left front axle support portion, as the left crawler frame is set at the expanded position. The left rear coupling member is configured to be set in an expanded connection state in which the left rear coupling member is connected to the car body and is connected to a part of left crawler frame that is on the rear side relative to the left rear axle support portion, as the left crawler frame is set at the expanded position. Each of the right front coupling member and the right rear coupling member is configured such that each of the right front coupling member and the right rear coupling member changes its relative position to at least one of the car body and the right crawler frame, from the expanded connection state while remaining connected to at least one of the car body and the right crawler frame, thus allowing the right crawler frame to shift from the expanded position to the contracted position. Each of the left front coupling member and the left rear coupling member is configured such that each of the left front coupling member and the left rear coupling member changes its relative position to at least one of the car body and the left crawler frame, from the expanded connection state while remaining connected to at least one of the car body and the left crawler frame, thus allowing the left crawler frame to shift from the expanded position to the contracted position.

In the lower travelling body according to the invention, each of the plurality of coupling members is set in the expanded connection state at execution of crane work, and at transportation of the mobile crane, the relative position's changing from the expanded connection state allows the left and right crawler frames to shift from the expanded position to the contracted position. As the left and right crawler frames are allowed to shift from the expanded position to the contracted position by expansion/contraction mechanism, therefore, deformation the lower travelling body develops when the cargo-to-be-lifted is hung from the upper slewing body on the front side or the rear side relative to the lower travelling body can be reduced. This will be described specifically as follows.

Each of the right front coupling member and the left front coupling member that are set in the expanded connection state during crane work can receive a front load from the car body, the front load being a load that the car body receives from the upper slewing body when the cargo-to-be-lifted is hung on the upper slewing body on the front side relative to the lower travelling body. The right front coupling member can transmit the front load to a part of right crawler frame that is on the front side relative to the right front axle support, while the left front coupling member can transmit the front load to a part of left crawler frame that is on the front side relative to the left front axle support. In other words, the right front coupling member and the left front coupling member can support the car body on the front side relative to the right front axle support and the left front axle support where the right crawler frame and the left crawler frame support the front axle. This suppresses development of torsional deformation or the like at the front axle and the rear axle and suppresses development of deformation at the car body as well, thus effectively preventing a downward positional shift of the front part of the car body. Suppressing development of torsional deformation or the like at the front axle and the rear axle results in suppression of deformation of the left and right crawler frames. Deformation the lower travelling body develops when the cargo-to-be-lifted is hung from the upper slewing body on the front side relative to the lower travelling body, therefore, can be reduced. Deformation the lower travelling body develops when the cargo-to-be-lifted is hung from the upper slewing body on the rear side relative to the lower travelling body can also be reduced for the same reasons as described above. In addition, because the front load is transmitted to the part of left crawler frame that is on the front side relative to the left front axle support and to the part of right crawler frame that is on the front side relative to the right front axle support, a warp of the left and right crawler frames can be reduced. Likewise, because the rear load is transmitted to the part of left crawler frame that is on the rear side relative to the left rear axle support and to the part of right crawler frame that is on the rear side relative to the right rear axle support, a warp of the left and right crawler frames can be reduced.

Each of the right front coupling member and the right rear coupling member changes its relative position to at least one of the car body and the right crawler frame, from the expanded connection state, thus allowing the right crawler frame to shift from the expanded position to the contracted position, and each of the left front coupling member and the left rear coupling member changes its relative position to at least one of the car body and the left crawler frame, from the expanded connection state, thus allowing the left crawler frame to shift from the expanded position to the contracted position. In this manner, because the plurality of coupling members do not hamper the function of the expansion/contraction mechanism included in the lower travelling body, the left and right crawler frames are able to shift to the contracted position. As a result, when the mobile crane is transported, the width of the lower travelling body to be transported can be reduced.

Furthermore, in the lower travelling body, an operation of changing the relative position of each of the plurality of coupling members is carried out as the plurality of coupling members are each connected to at least one of the car body and the right crawler frame. This case, compared with a case where the plurality of coupling members are each detached from both the car body and the crawler frame, suppresses a drop in the workability of the operation.

It is preferable that the lower travelling body of the mobile crane according to the invention further include: a pair of right wheels rotatably supported respectively on a front end part and a rear end part of the right crawler frame; a pair of left wheels rotatably supported respectively on a front end part and a rear end part of the left crawler frame; a plurality of right rollers spaced between the pair of right wheels in the front-to-rear direction and rotatably supported on a lower part of the right crawler frame, the plurality of right rollers including a right front end roller located at the head of the right rollers and a right rear end roller located at the tail of the right rollers; and a plurality of left rollers spaced between the pair of left wheels in the front-to-rear direction and rotatably supported on a lower part of the left crawler frame, the plurality of left rollers including a left front end roller located at the head of the left rollers and a left rear end roller located at the tail of the left rollers, that the right front coupling member include a right front load receiving surface counter to the car body and a right front load transmission surface counter to the right crawler frame, that the left front coupling member include a left front load receiving surface counter to the car body and a left front load transmission surface counter to the left crawler frame, that each of the right front load receiving surface of the right front coupling member and the left front load receiving surface of the left front coupling member be a surface capable of receiving a front load from the car body, the front load being a load that the car body receives from the upper slewing body when a cargo-to-be-lifted is hung from the upper slewing body on the front side relative to the lower travelling body, the right front load transmission surface be a surface capable of transmitting the front load to the right crawler frame, and the left front load transmission surface be a surface capable of transmitting the front load to the left crawler frame, that the right front coupling member be configured such that in plan view, a right front straight line, which is a straight line passing through any point included in the right front load receiving surface and through any point included in the right front load transmission surface, passes through the right front end roller or a point on the front side relative to the right front end roller, and that the left front coupling member be configured such that in plan view, a left front straight line, which is a straight line passing through any point included in the left front load receiving surface and through any point included in the left front load transmission surface, passes through the left front end roller or a point on the front side relative to the left front end roller.

Because the right front coupling member and the left front coupling member of the lower travelling body are configured such that the right front straight line and the left front straight line have the above positional relationships respectively with the right front end roller and the left front end roller, the distance in the front-to-rear direction between a part of the right crawler frame to which part the front load is transmitted via the right front coupling member and the front end part of the right crawler frame can be made smaller effectively, and the distance in the front-to-rear direction between a part of the left crawler frame to which part the front load is transmitted via the left front coupling member and the front end part of the left crawler frame can be made smaller effectively. This allows more effectively reducing a warp that develops on the front part of each of the left and right crawler frames when the cargo-to-be-lifted is hung from the upper slewing body on the front side relative to the lower travelling body.

According to the invention, the above positional relationship between the right front straight line and the right front end roller is defined as the positional relationship in plan view of the lower travelling body, that is, the positional relationship when the lower travelling body is viewed from directly above in the vertical direction (downward). The right front straight line and the right front end roller, therefore, do not always have to be at the same height in the vertical direction and may be shifted in height from each other in the vertical direction. In other words, the height of the right front straight line and the height of the right front end roller may be the same or may be different from each other. The same applies to the positional relationship between the left front straight line and the left front end roller. This applies also to the positional relationship between the right rear straight line and the right rear end roller, and to the positional relationship between the left rear straight line and the left rear end roller.

In a case where the car body receives a relatively large front load from the upper slewing body, the right front end roller and the left front end roller serve as approximate tipping fulcrums (front tipping fulcrums). It is therefore preferable in this case that the right front straight line be a straight line passing through the right front end roller in plan view, and that the left front straight line be a straight line passing through the left front end roller in plan view.

In this mode, the right front coupling member and the left front coupling member can directly transmit the front load to the parts of left and right crawler frames that correspond to the front tipping fulcrums. This allows further reducing a warp that develops on the front part of each of the left and right crawler frames because of the front load.

In the lower travelling body of the mobile crane according to the invention, it is preferable that, in plan view, the right front straight line be a straight line passing through the slewing center axis as well and that, in plan view, the left front straight line be a straight line passing through the slewing center axis as well.

In this mode, in plan view, any point on the right front load receiving surface of the right front coupling member and any point on the right front load transmission surface of the right front coupling member can be located on the right front straight line passing through the slewing center axis and the right front end roller, and, in plan view, any point on the left front load receiving surface of the left front coupling member and any point on the left front load transmission surface of the left front coupling member can be located on the left front straight line passing through the slewing center axis and the left front end roller. As a result, a path through which the front load is transmitted to the right crawler frame by the right front coupling member can be brought closer to the direction of heading from the slewing center axis toward the right front end roller, and a path through which the front load is transmitted to the left crawler frame by the left front coupling member can be brought closer to the direction of heading from the slewing center axis toward the left front end roller. The front load is thus efficiently transmitted to the parts of left and right crawler frames that correspond to the front tipping fulcrums.

In the lower travelling body of the mobile crane according to the invention, it is preferable that the right front coupling member include a right front continuous part that in plan view, extends continuously from the right front load receiving surface to the right front load transmission surface along the right front straight line, and that the left front coupling member include a left front continuous part that in plan view, extends continuously from the left front load receiving surface to the left front load transmission surface along the left front straight line.

In this mode, the right front continuous part extends continuously without interruption, in plan view, from the right front load receiving surface to the right front load transmission surface along the right front straight line, and the left front continuous part extends continuously without interruption, in plan view, from the left front load receiving surface to the left front load transmission surface along the left front straight line. The front load received by the right front load receiving surface and the left front load receiving surface is therefore efficiently transmitted continuously to the right front load transmission surface and the left front load transmission surface along the right front continuous part and the left front continuous part, and is then transmitted from these load transmission surfaces to the left and right crawler frames.

In the lower travelling body of the mobile crane according to the invention, it is preferable that the right rear coupling member include a right rear load receiving surface counter to the car body, and a right rear load transmission surface counter to the right crawler frame, that the left rear coupling member include a left rear load receiving surface counter to the car body, and a left rear load transmission surface counter to the left crawler frame, that each of the right rear load receiving surface of the right rear coupling member and the left rear load receiving surface of the left rear coupling member be a surface capable of receiving a rear load from the car body, the rear load being a load that the car body receives from the upper slewing body when a cargo-to-be-lifted is hung from the upper slewing body on the rear side relative to the lower travelling body, the right rear load transmission surface be a surface capable of transmitting the rear load to the right crawler frame, and the left rear load transmission surface be a surface capable of transmitting the rear load to the left crawler frame, that the right rear coupling member be configured such that in plan view, a right rear straight line, which is a straight line passing through any point included in the right rear load receiving surface and through any point included in the right rear load transmission surface, passes through the right rear end roller or a point on the rear side relative to the right rear end roller, and that the left rear coupling member be configured such that in plan view, a left rear straight line, which is a straight line passing through any point included in the left rear load receiving surface and through any point included in the left rear load transmission surface, passes through the left rear end roller or a point on the rear side relative to the left rear end roller.

Because the right rear coupling member and the left rear coupling member of the lower travelling body are configured such that the right rear straight line and the left rear straight line have the above positional relationships respectively with the right rear end roller and the left rear end roller, the distance in the front-to-rear direction between a part of the right crawler frame to which part the rear load is transmitted via the right rear coupling member and the rear end part of the right crawler frame can be made smaller effectively, and the distance in the front-to-rear direction between a part of the left crawler frame to which part the rear load is transmitted via the left rear coupling member and the rear end part of the left crawler frame can be made smaller effectively. This allows more effectively reducing a warp that develops on the rear part of each of the left and right crawler frames when the cargo-to-be-lifted is hung from the upper slewing body on the rear side relative to the lower travelling body.

In a case where the car body receives a relatively large rear load from the upper slewing body, the right rear end roller and the left rear end roller serve as approximate tipping fulcrums (rear tipping fulcrums). It is therefore preferable in this case that the right rear straight line be a straight line passing through the right rear end roller in plan view, and that the left rear straight line be a straight line passing through the left rear end roller in plan view.

In this mode, the right rear coupling member and the left rear coupling member can directly transmit the rear load to the parts of left and right crawler frames that correspond to the rear tipping fulcrums. This allows further reducing a warp that develops on the rear part of each of the left and right crawler frames because of the rear load.

It is more preferable that, in plan view, the right rear straight line be a straight line passing through the slewing center axis as well and that, in plan view, the left rear straight line be a straight line passing through the slewing center axis as well.

In this mode, in plan view, any point on the right rear load receiving surface of the right rear coupling member and any point on the right rear load transmission surface of the right rear coupling member can be located on the right rear straight line passing through the slewing center axis and the right rear end roller, and, in plan view, any point on the left rear load receiving surface of the left rear coupling member and any point on the left rear load transmission surface of the left rear coupling member can be located on the left rear straight line passing through the slewing center axis and the left rear end roller. As a result, a path through which the rear load is transmitted to the right crawler frame by the right rear coupling member can be brought closer to the direction of heading from the slewing center axis toward the right rear end roller, and a path through which the rear load is transmitted to the left crawler frame by the left rear coupling member can be brought closer to the direction of heading from the slewing center axis toward the left rear end roller. The rear load is thus efficiently transmitted to the parts of left and right crawler frames that correspond to the rear tipping fulcrums.

In the lower travelling body of the mobile crane according to the invention, it is preferable that the right rear coupling member include a right rear continuous part that in plan view, extends continuously from the right rear load receiving surface to the right rear load transmission surface along the right rear straight line, and that the left rear coupling member include a left rear continuous part that in plan view, extends continuously from the left rear load receiving surface to the left rear load transmission surface along the left rear straight line.

In this mode, the right rear continuous part extends continuously without interruption, in plan view, from the right rear load receiving surface to the right rear load transmission surface along the right rear straight line, and the left rear continuous part extends continuously without interruption, in plan view, from the left rear load receiving surface to the left rear load transmission surface along the left rear straight line. The rear load received by the right rear load receiving surface and the left rear load receiving surface is therefore efficiently transmitted continuously to the right rear load transmission surface and the left rear load transmission surface along the right rear continuous part and the left rear continuous part, and is then transmitted from these load transmission surfaces to the left and right crawler frames.

In the lower travelling body of the mobile crane according to the invention, it is preferable that each of the right front coupling member and the right rear coupling member be configured such that it can be set in the restricted state in which each of the right front coupling member and the right rear coupling member are restricted by at least one of the car body and the right crawler frame set at the contracted position, and that each of the left front coupling member and the left rear coupling member be configured such that it can be set in the restricted state in which each of the left front coupling member and the left rear coupling member are restricted by at least one of the car body and the left crawler frame set at the contracted position.

In this mode, being set in the restricted state, each of the plurality of coupling members is restricted in making a positional shift relative to the crawler frames and the car body. This allows preventing a problem that each of the plurality of coupling members get shaky during transportation of the mobile crane. It should be noted, however, that the restricted state may be a state in which, during transportation of the mobile crane, each of the plurality of coupling members slightly shifts in position relative to the crawler frame and the car body to a degree that the shift does not cause the above problem of shakiness.

In the lower travelling body of the mobile crane according to the invention, a right coupling member that is at least one of the right front coupling member and the right rear coupling member may include a car body connection portion rotatably connected to the car body, and a crawler connection portion detachably connected to the right crawler frame set at the expanded position, and may be configured such that, as the crawler connection portion is detached from the right crawler frame and the car body connection portion is kept connected to the car body, the right coupling member rotates on the car body connection portion relative to the car body to change a relative position of the right coupling member to the car body and the right crawler frame, from the expanded connection state, thus allowing the right crawler frame to shift from the expanded position to the contracted position, and then is detachably connected to the right crawler frame set at the contracted position and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, the right coupling member may further include a second crawler connection portion that can be detachably connected to the right crawler frame set at the contracted position, and the second crawler connection portion connected to the right crawler frame set at the contracted position may be configured to be located, in plan view, on the right crawler frame side relative to a segment connecting the car body connection portion to the crawler connection portion.

In this mode, the second crawler connection portion located on the right crawler frame side relative to the segment is connected to the right crawler frame set at the contracted position. This makes the right coupling member less likely to interfere with the right crawler frame than a case where a part of right coupling member that is on the segment is connected to the right crawler frame.

In the lower travelling body of the mobile crane according to the invention, a left coupling member that is at least one of the left front coupling member and the left rear coupling member may include a car body connection portion rotatably connected to the car body, and a crawler connection portion detachably connected to the left crawler frame set at the expanded position, and may be configured such that, as the crawler connection portion of the left coupling member is detached from the left crawler frame and the car body connection portion of the left coupling member is kept connected to the car body, the left coupling member rotates on the car body connection portion relative to the car body to change a relative position of the left coupling member to the car body and the left crawler frame, from the expanded connection state, thus allowing the left crawler frame to shift from the expanded position to the contracted position, and then is detachably connected to the left crawler frame set at the contracted position and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, the left coupling member may further include a second crawler connection portion that can be detachably connected to the left crawler frame set at the contracted position, and the second crawler connection portion connected to the left crawler frame set at the contracted position may be configured to be located, in plan view, on the left crawler frame side relative to a segment connecting the car body connection portion of the left coupling member to the crawler connection portion of the left coupling member.

In this mode, the second crawler connection portion located on the left crawler frame side relative to the segment is connected to the left crawler frame set at the contracted position. This makes the left coupling member less likely to interfere with the left crawler frame than a case where a part of left coupling member that is on the segment is connected to the left crawler frame.

In the lower travelling body of the mobile crane according to the invention, the right front coupling member may include a car body connection portion rotatably connected to the car body and a crawler connection portion detachably connected to the right crawler frame set at the expanded position, the left front coupling member may include a car body connection portion rotatably connected to the car body and a crawler connection portion detachably connected to the left crawler frame set at the expanded position, the right front coupling member may be configured such that, as the crawler connection portion of the right front coupling member is detached from the right crawler frame and the car body connection portion of the right front coupling member is kept connected to the car body, the right front coupling member rotates on the car body connection portion relative to the car body to change a relative position of the right front coupling member to the car body and the right crawler frame, from the expanded connection state, thus allowing the right crawler frame to shift from the expanded position to the contracted position, the left front coupling member may be configured such that, as the crawler connection portion of the left front coupling member is detached from the left crawler frame and the car body connection portion of the left front coupling member is kept connected to the car body, the left front coupling member rotates on the car body connection portion relative to the car body to change a relative position of the left front coupling member to the car body and the left crawler frame, from the expanded connection state, thus allowing the left crawler frame to shift from the expanded position to the contracted position, and the right front coupling member and the left front coupling member may be configured such that by being connected to each other as the right crawler frame and the left crawler frame are each set in the contracted position, the right front coupling member and the left front coupling member are set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, the right rear coupling member may include a car body connection portion rotatably connected to the car body and a crawler connection portion detachably connected to the right crawler frame set at the expanded position, the left rear coupling member may include a car body connection portion rotatably connected to the car body and a crawler connection portion detachably connected to the left crawler frame set at the expanded position, the right rear coupling member may be configured such that, as the crawler connection portion of the right rear coupling member is detached from the right crawler frame and the car body connection portion of the right rear coupling member is kept connected to the car body, the right rear coupling member rotates on the car body connection portion relative to the car body to change a relative position of the right rear coupling member to the car body and the right crawler frame, from the expanded connection state, thus allowing the right crawler frame to shift from the expanded position to the contracted position, the left rear coupling member may be configured such that, as the crawler connection portion of the left rear coupling member is detached from the left crawler frame and the car body connection portion of the left rear coupling member is kept connected to the car body, the left rear coupling member rotates on the car body connection portion relative to the car body to change a relative position of the left rear coupling member to the car body and the left crawler frame, from the expanded connection state, thus allowing the left crawler frame to shift from the expanded position to the contracted position, and the right rear coupling member and the left rear coupling member may be configured such that by being connected to each other as the right crawler frame and the left crawler frame are each set in the contracted position, the right rear coupling member and the left rear coupling member are set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, a right coupling member that is at least one of the right front coupling member and the right rear coupling member may include a car body connection portion detachably connected to the car body, and a crawler connection portion connected to the right crawler frame set at the expanded position, and the right coupling member may be configured such that, as the car body connection portion is detached from the car body but the crawler connection portion is kept connected to the right crawler frame, the right coupling member changes its relative position to the car body, from the expanded connection state, thus allowing the right crawler frame to shift from the expanded position to the contracted position, and then is detachably connected to the car body as the right crawler frame is set at the contracted position, and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, a left coupling member that is at least one of the left front coupling member and the left rear coupling member may include a car body connection portion detachably connected to the car body, and a crawler connection portion connected to the left crawler frame set at the expanded position, and the left coupling member may be configured such that, as the car body connection portion of the left coupling member is detached from the car body and the crawler connection portion of the left coupling member is kept connected to the left crawler frame, the left coupling member changes its relative position to the car body, from the expanded connection state, thus allowing the left crawler frame to shift from the expanded position to the contracted position, and then is detachably connected to the car body as the left crawler frame is set at the contracted position, and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, the right front coupling member may include a car body connection portion that is detachably connected to the car body as the right crawler frame is set at the expanded position, and a crawler connection portion rotatably connected to the right crawler frame, the left front coupling member may include a car body connection portion that is detachably connected to the car body as the left crawler frame is set at the expanded position, and a crawler connection portion rotatably connected to the left crawler frame, the right front coupling member may be configured such that, as the car body connection portion of the right front coupling member is detached from the car body and the crawler connection portion of the right front coupling member is kept connected to the right crawler frame, the right front coupling member rotates on the crawler connection portion relative to the right crawler frame to change a relative position of the right front coupling member to the car body and the right crawler frame, from the expanded connection state, thus allowing the right crawler frame to shift from the expanded position to the contracted position, the left front coupling member may be configured such that, as the car body connection portion of the left front coupling member is detached from the car body and the crawler connection portion of the left front coupling member is kept connected to the left crawler frame, the left front coupling member rotates on the crawler connection portion relative to the left crawler frame to change a relative position of the left front coupling member to the car body and the left crawler frame, from the expanded connection state, thus allowing the left crawler frame to shift from the expanded position to the contracted position, and the right front coupling member and the left front coupling member may be configured such that by being connected to each other as the right crawler frame and the left crawler frame are each set in the contracted position, the right front coupling member and the left front coupling member are set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, the right rear coupling member may include a car body connection portion that is detachably connected to the car body as the right crawler frame is set at the expanded position, and a crawler connection portion rotatably connected to the right crawler frame, the left rear coupling member may include a car body connection portion that is detachably connected to the car body as the left crawler frame is set at the expanded position, and a crawler connection portion rotatably connected to the left crawler frame, the right rear coupling member may be configured such that, as the car body connection portion of the right rear coupling member is detached from the car body and the crawler connection portion of the right rear coupling member is kept connected to the right crawler frame, the right rear coupling member rotates on the crawler connection portion relative to the right crawler frame to change a relative position of the right rear coupling member to the car body and the right crawler frame, from the expanded connection state, thus allowing the right crawler frame to shift from the expanded position to the contracted position, the left rear coupling member may be configured such that, as the car body connection portion of the left rear coupling member is detached from the car body and the crawler connection portion of the left rear coupling member is kept connected to the left crawler frame, the left rear coupling member rotates on the crawler connection portion relative to the left crawler frame to change a relative position of the left rear coupling member to the car body and the left crawler frame, from the expanded connection state, thus allowing the left crawler frame to shift from the expanded position to the contracted position, and the right rear coupling member and the left rear coupling member may be configured such that by being connected to each other as the right crawler frame and the left crawler frame are each set in the contracted position, the right rear coupling member and the left rear coupling member are set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, it is preferable that the car body include a connected portion to which the car body connection portion is connected detachably as the right crawler frame and the left crawler frame are each set at the expanded position, and that as the car body connection portion is detached from the connected portion and the right crawler frame and the left crawler frame are each set at the contracted position, the connected portion can be connected to either the right crawler frame or the left crawler frame that corresponds to the connected portion.

In this mode, the connected portion of the car body, to which connected portion the car body connection portion is connected as the left and right crawler frames are set at the expanded position, is connected to either the right crawler frame or the left crawler frame that corresponds to the connected portion as the left and right crawler frames are set at the contracted position. In other words, the connected portion of the car body functions as a stopper that prevents the crawler frame set at the contracted position from shifting in position relative to the car body. In this mode, therefore, providing a separate stopper is unnecessary.

In the lower travelling body of the mobile crane according to the invention, a right coupling member that is at least one of the right front coupling member and the right rear coupling member may include a first member and a second member and may have a car body connection portion formed on the first member and rotatably connected to the car body, a crawler connection portion formed on the second member and rotatably connected to the right crawler frame, and a coupling portion that couples the first member rotatably to the second member, and the right coupling member may be configured such that as a result of the first member's rotating on the car body connection portion, relative to the car body, the second member's rotating on the crawler connection portion, relative to the right crawler frame, and the first member's rotating on the coupling portion, relative to the second member to change a relative position of the right coupling member to the car body and the right crawler frame, from the expanded connection state, the right coupling member allows the right crawler frame to shift from the expanded position to the contracted position and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, it is preferable that at least one of the first member and the second member of the right coupling member have a rotation direction limiting portion that allows the first member to rotate on the coupling portion in one of clockwise and counterclockwise directions in plan view, relative to the second member and that prevents the first member from rotating in the other of the clockwise and the counterclockwise directions in plan view.

In this mode, the first member can be rotated on the coupling portion in a preset proper direction, relative to the second member.

In the lower travelling body of the mobile crane according to the invention, the right crawler frame may have a rotation direction limiting portion that allows the first member of the right coupling member to rotate on the coupling portion in one of clockwise and counterclockwise directions in plan view, relative to the second member and that prevents the first member from rotating in the other of the clockwise and the counterclockwise directions in plan view.

In this mode, the first member can be rotated on the coupling portion in a preset proper direction, relative to the second member.

In the lower travelling body of the mobile crane according to the invention, a left coupling member that is at least one of the left front coupling member and the left rear coupling member may include a first member and a second member and may have a car body connection portion formed on the first member and rotatably connected to the car body, a crawler connection portion formed on the second member and rotatably connected to the left crawler frame, and a coupling portion that couples the first member rotatably to the second member, and the left coupling member may be configured such that as a result of the first member's rotating on the car body connection portion, relative to the car body, the second member's rotating on the crawler connection portion, relative to the left crawler frame, and the first member's rotating on the coupling portion, relative to the second member to change a relative position of the left coupling member to the car the car body and the left crawler frame, from the expanded connection state, the left coupling member allows the left crawler frame to shift from the expanded position to the contracted position and is therefore set in the restricted state.

In this mode, by adopting the above-described configuration, the width of the lower travelling body to be transported can be reduced without hampering the function of the expansion/contraction mechanism and at the same time, a drop in the workability of operation of changing the relative position of each of the plurality of coupling members can be suppressed and a problem of the plurality of coupling members' getting shaky during transportation of the mobile crane can be prevented as well.

In the lower travelling body of the mobile crane according to the invention, it is preferable that at least one of the first member and the second member of the left coupling member have a rotation direction limiting portion that allows the first member to rotate on the coupling portion in one of clockwise and counterclockwise directions in plan view, relative to the second member and that prevents the first member from rotating in the other of the clockwise and the counterclockwise directions in plan view.

In this mode, the first member can be rotated on the coupling portion in a preset proper direction, relative to the second member.

In the lower travelling body of the mobile crane according to the invention, the left crawler frame may have a rotation direction limiting portion that allows the first member of the left coupling member to rotate on the coupling portion in one of clockwise and counterclockwise directions in plan view, relative to the second member and that prevents the first member from rotating in the other of the clockwise and the counterclockwise directions in plan view.

In this mode, the first member can be rotated on the coupling portion in a preset proper direction, relative to the second member.

### [Further Embodiments]

Hereinafter, a lower travelling body of a mobile crane according to further embodiments will be described with reference to FIGS. 24 to 45. In the drawings, "front", "rear", "right", "left", "up", and "down" are indicated. These letters refer to directions defined with reference to a direction in which the lower travelling body moves forward and backward. In other words, the front-to-rear direction of the lower travelling body is a horizontal direction in which crawler frames, which will be described later, extend, and the left-to-right direction of the lower travelling body is a horizontal direction perpendicular to the front-to-rear direction. The vertical direction of the lower travelling body is a direction parallel to a slewing center axis of an upper slewing body.

### [Overall Structure of Mobile Crane]

As shown in FIG 24, a mobile crane 100 according to a further embodiment not covered by the invention includes a lower travelling body 101 and an upper slewing body 102. The lower travelling body 101 is configured to support the upper slewing body 102 from below in such a way as to allow it to turn and to be capable of travelling on the ground.

The upper slewing body 102 is mounted on the lower travelling body 101. The upper slewing body 102 includes a slewing frame 103, a work device, a cab 104, and a counterweight 105. The work device, the cab 104, and the counterweight 105 are mounted on the slewing frame 103.

The work device is a device for carrying out lifting work (crane work) and the like of a cargo-to-be-lifted. In this embodiment, the work device includes a boom 106, a lifting winch 107, a lifting rope 108, a hook device 109, a gantry 110, a raising/lowering winch 111, a lower spreader 112, a raising/lowering rope 113, an upper spreader 114, and a guy line 115. The work device is not limited to a specific example of the work device shown in FIG 24. For example, the work device may further include a jib (not illustrated) that can be attached to a front end part of the boom. In the specific example shown in FIG. 24, the boom 106 is a lattice boom having a lattice structure. The boom 106, however, is not limited to the lattice boom and may be a telescopic boom capable of changing in length by telescoping.

The boom 106 is attached to a front part of the slewing frame 103 in such a way as to be capable of rising/falling, and has the hook device 109 hung from a front end of the boom 106 via the lifting rope 108, the hook device 109 being used to hook a cargo-to-be-lifted thereon. The lifting winch 107 is mounted on the slewing frame 103, and winds or unwinds the lifting rope 108 to wind up or down the hook device 109. The gantry 110 is erected on a rear part of the slewing frame 103. The guy line 115 has one end connected to the front end part of the boom 106 and the other end connected to the upper spreader 114. The lower spreader 112 is disposed on an upper end part of the gantry 110, and the lower spreader 112 and the upper spreader 114 are separated apart from each other. The raising/lowering rope 113 is wound around the lower spreader 112 and the upper spreader 114. The raising/lowering winch 111 is mounted on the slewing frame 103, and winds or unwinds the raising/lowering rope 113 to decrease or increase the separation distance from the upper spreader 114 to the lower spreader 112. As a result of a decrease or increase in the separation distance between the spreaders 112 and 114, the boom 106 is raised or lowered.

### [Structure of Lower Travelling Body According to Fourth Embodiment]

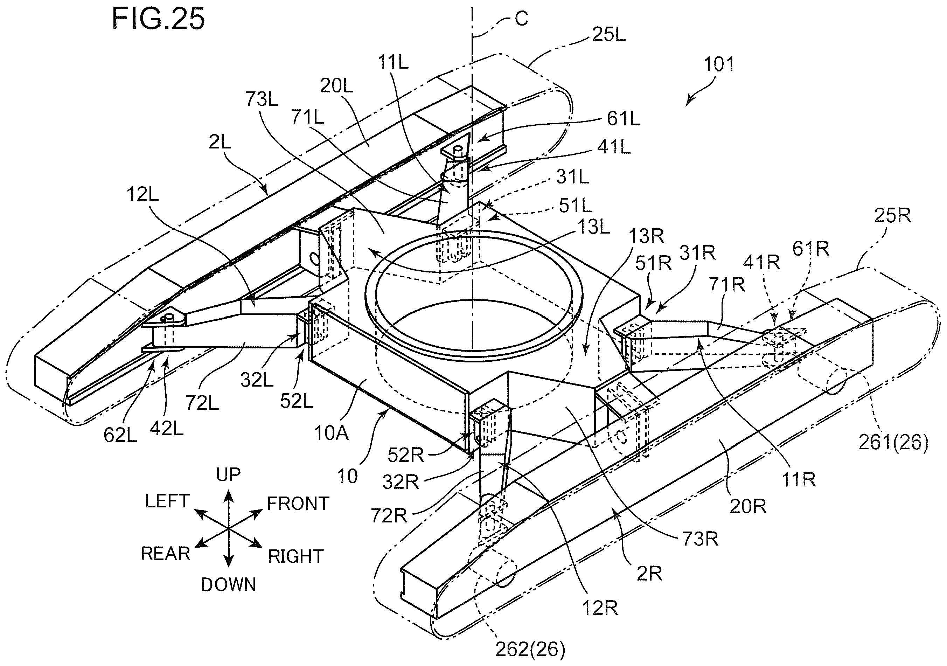

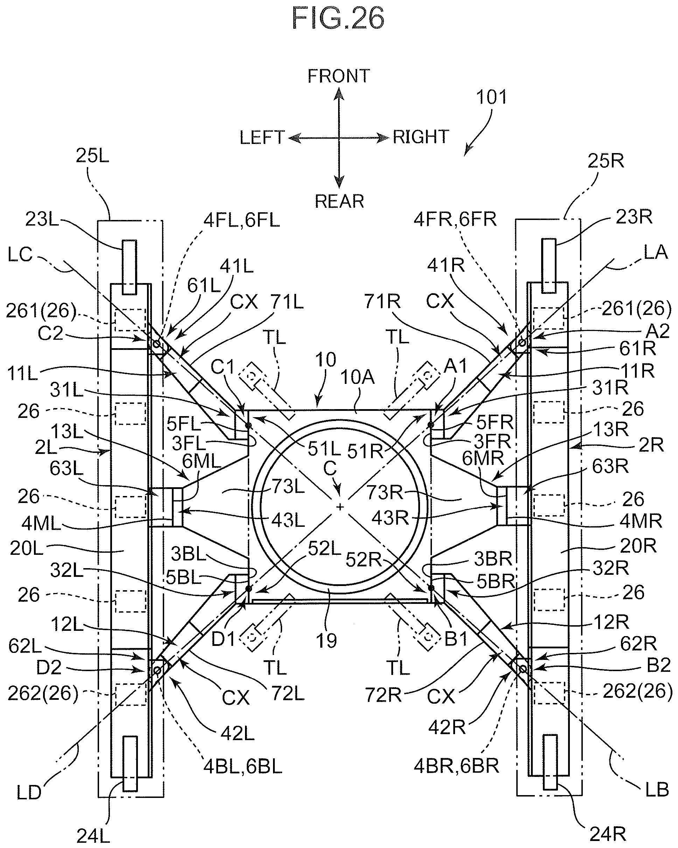

FIG 25 is a perspective view of the lower travelling body 101 according to the fourth embodiment not covered by the invention, and FIG. 26 is a plan view of the same. In this embodiment, as shown in FIGS. 24 and 26, the front-to-rear direction of the lower travelling body 101 is the longitudinal direction of crawler frames 2R and 2L, which will be described later, and a frontward direction along the front-to-rear direction is a direction of heading from a wheel 24R (drive tumbler) toward a wheel 23R (idler) in each crawler frame while a rearward direction along the same is the direction opposite to the direction of heading from the wheel 24R toward the wheel 23R. The front-to-rear direction of the lower travelling body 101, however, may be defined as the direction opposite to the front-to-rear direction defined in FIGS. 25 and 26. In FIG 25, the wheels 23R and 24R are not illustrated.

The lower travelling body 101 includes a car body 10, a slewing bearing 19 supported on the top of the car body 10, a right travelling device, a left travelling device, and a plurality of coupling members.

The car body 10 supports the upper slewing body 102 of the mobile crane 100 in such a way as to allow the upper slewing body 102 to turn about a slewing center axis C via the slewing bearing 19. The upper slewing body 102 is mounted on the slewing bearing 19. The slewing center axis C is substantially parallel to the vertical direction when the ground is level.

In this embodiment, the car body 10 includes a car body main part 10A of a substantially rectangular parallelepiped shape, a right axle 13R, and a left axle 13L. The car body 10 includes a plurality of connected portions. The slewing bearing 19 is attached to the car body main part 10A. The shape of the car body main part 10A is not limited to the substantially rectangular parallelepiped shape. The plurality of connected portions will be described later.

The right travelling device and the left travelling device each work as a device that travels on the ground while supporting the car body 10. The right travelling device includes a right crawler frame 2R, a pair of right wheels 23R and 24R, a right crawler belt 25R, a plurality of right rollers 26, and a travelling drive unit 29 (see FIG 24). Likewise, the left travelling device includes the left crawler frame 2L, a pair of left wheels 23L and 24L, a left crawler belt 25L, a plurality of left rollers 26, and a travelling drive unit 29.

The right crawler frame 2R includes a right frame body 20R and a plurality of connected portions, and the left crawler frame 2L includes a left frame body 20L and a plurality of connected portions. The right frame body 20R has a shape extending in the front-to-rear direction on the right side relative to the slewing center axis C. The left frame body 20L has a shape extending in the front-to-rear direction on the left side relative to the slewing center axis C. The plurality of connected portions will be described later.

The pair of right wheels 23R and 24R are rotatably supported on a front end part and a rear end part of the right frame body 20 R, respectively. In this embodiment, the right wheel 23R located on the front side is configured by an idler, and the right wheel 24R located on the rear side is configured by a drive tumbler. The drive tumbler is connected to the travelling drive unit 29 (see FIG 24) that is supported on the rear end part of the right frame body 20R at a position adjacent to the drive tumbler. The travelling drive unit 29 includes, for example, a travelling motor and a travelling speed reducer. The travelling drive unit 29 is not illustrated in the drawings other than FIG 24.

The right crawler belt 25R is a belt that is annularly put around the pair of right wheels 23R and 24R to be capable of circling movement. In other words, the right crawler belt 25R is an endless belt supported by the pair of right wheels 23R and 24R. The right crawler belt 25R is configured by numbers of crawler shoes connected to each other.

On the outer periphery of the right wheel 24R configured by the drive tumbler, a plurality of projections are formed along the circumferential direction such that the projections can be engaged with the inner periphery of the right crawler belt 25R. The right wheel 24R is supplied with a driving force from the travelling drive unit 29, and this driving force is transmitted to the right crawler belt 25R. As a result, the right crawler belt 25R makes circling movement. The right wheel 23R configured by the idler rotates by following the movement of the right crawler belt 25R.

The plurality of right rollers 26 are each supported rotatably on a lower part of the right frame body 20R of the right crawler frame 2R. The plurality of right rollers 26 are spaced in the front-to-rear direction between the pair of right wheels 23R and 24R. The plurality of right rollers 26 presses the right crawler belt 25R against the ground and guides the circling movement of the right crawler belt 25R.

Hereinafter, the right roller 26 located at the head of the plurality of right rollers 26 (in this embodiment, the right roller 26 closest to the wheel 23R) will be referred to as a right front end roller 261, and the right roller 26 located at the tail of the plurality of right rollers 26 (in this embodiment, the right roller 26 closest to the wheel 24R) will be referred to as a right rear end roller 262.

The structure of the pair of left wheels 23L and 24L, the left crawler belt 25L, and the plurality of left rollers 26 in the left travelling device is the same as the above-described structure of the pair of right wheels 23R and 24R, the right crawler belt 25R, and the plurality of right rollers 26 in the right travelling device, except the fact that both structures are symmetrical with each other in the left-to-right direction, and is therefore not described in detail. Hereinafter, the left roller 26 located at the head of the plurality of left rollers 26 (in this embodiment, the left roller 26 closest to a wheel 23L) will be referred to as a left front end roller 261, and the left roller 26 located at the tail of the plurality of left rollers 26 (in this embodiment, the left roller 26 closest to a wheel 24L) will be referred to as a left rear end roller 262.

The right axle 13R has a shape extending rightward from the right side of the car body main part 10A, and couples the car body main part 10A to the right crawler frame 2R. The left axle 13L has a shape extending leftward from the left side of the car body main part 10A, and couples the car body main part 10A to the left crawler frame 2L.

In this embodiment, the right axle 13R is connected to the right frame body 20R on its part in the vicinity of the center in the front-to-rear direction of the right frame body 20R, and the left axle 13L is connected to the left frame body 20L on its part in the vicinity of the center in the front-to-rear direction of the left frame body 20L. Each of these parts, however, may be shifted from the vicinity of the center in the front-to-rear direction.

In this embodiment, the right axle 13R is of a tapered shape with its width in the front-to-rear direction decreasing in the direction of approaching the right frame body 20R, and the left axle 13L is of a tapered shape with its width in the front-to-rear direction decreasing in the direction of approaching the left frame body 20L. The shapes of the right axle 13R and the left axle 13L, however, are not limited to the tapered shapes. For example, the right axle 13R may be of a shape in which the width in the front-to-rear direction substantially remains the same from a base end connected to the car body main part 10A to a leading end connected to the right frame body 20R, and the left axle 13L may be of a shape in which the width in the front-to-rear direction substantially remains the same from a base end connected to the car body main part 10A to a leading end connected to the left frame body 20L.

The car body 10, which is constituted by the car body main part 10A, the right axle 13R, and the left axle 13L, may be configured by a single member, as shown in FIG 25, or may be constructed by separately fabricating the car body main part 10A, the right axle 13R, and the left axle 13L and connecting them to each other.

The plurality of coupling members include a right front coupling member 11R, a right rear coupling member 12R, a left front coupling member 11L, and a left rear coupling member 12L. In the lower travelling body 101 according to the embodiment, each of the plurality of coupling members has the following features.

The right front coupling member 11R couples the car body 10 to the right crawler frame 2R as the right front coupling member 11R is disposed on the diagonally rightward front side relative to the car body 10. The left front coupling member 11L couples the car body 10 to the left crawler frame 2L as the left front coupling member 11L is disposed on the diagonally leftward front side relative to the car body 10. In crane work, therefore, the right front coupling member 11R can transmit a front load in the direction of heading from the car body 10 toward the diagonally rightward front side, the front load being a load that the car body 10 receives from the upper slewing body 102 when the cargo-to-be-lifted is hung on the upper slewing body 102 on the front side relative to the lower travelling body 101. In other words, the right front coupling member 11R can transmit the front load to a part of right crawler frame 2R that is on the front side relative to the car body 10. The left front coupling member 11L, on the other hand, can transmit the front load in the direction of heading from the car body 10 toward the diagonally leftward front side. In other words, the left front coupling member 11L can transmit the front load to a part of left crawler frame 2L that is on the front side relative to the car body 10. As a result, when the cargo-to-be-lifted is hung from the upper slewing body 102 on the front side relative to the lower travelling body 101, a warp the lower travelling body 101 develops can be reduced.

The right rear coupling member 12R couples the car body 10 to the right crawler frame 12R as the right rear coupling member 12R is disposed on the diagonally rightward rear side relative to the car body 10. The left rear coupling member 12L couples the car body 10 to the left crawler frame 2L as the left rear coupling member 12L is disposed on the diagonally leftward rear side relative to the car body 10. In crane work, therefore, the right rear coupling member 12R can transmit a rear load in the direction of heading from the car body 10 toward the diagonally rightward rear side, the rear load being a load that the car body 10 receives from the upper slewing body 102 when the cargo-to-be-lifted is hung on the upper slewing body 102 on the rear side relative to the lower travelling body 101. In other words, the right rear coupling member 12R can transmit the rear load to a part of right crawler frame 2R that is on the rear side relative to the car body 10. The left rear coupling member 12L, on the other hand, can transmit the rear load in the direction of heading from the car body 10 toward the diagonally leftward rear side. In other words, the left rear coupling member 12L can transmit the rear load to a part of left crawler frame 2L that is on the rear side relative to the car body 10. As a result, when the cargo-to-be-lifted is hung from the upper slewing body 102 on the rear side relative to the lower travelling body 101, a warp the lower travelling body 101 develops can be reduced.

Each of the right front coupling member 11R and the right rear coupling member 12R is configured to be capable of changing its relative position to one or both of the right crawler frame 2R and the car body 10 in order to reduce dimensions of the lower travelling body 101 when it is transported. Each of the left front coupling member 11L and the left rear coupling member 12L is configured to be capable of changing its relative position to one or both of the left crawler frame 2L and the car body 10 in order to reduce dimensions of the lower travelling body 101 when it is transported. Hence the dimensions of the lower travelling body 101 can be reduced when it is transported. Hereinafter, features of the lower travelling body 101 according to the embodiment will be described specifically.

The right front coupling member 11R has a shape extending diagonally forward to the right from the car body 10 on the front side relative to the slewing center axis C, and couples the car body 10 to the right crawler frame 2R. The right rear coupling member 12R has a shape extending diagonally rearward to the right from the car body 10 on the rear side relative to the slewing center axis C, and couples the car body 10 to the right crawler frame 2R. The right axle 13R is disposed on the rear side relative to the right front coupling member 11R and on the front side relative to the right rear coupling member 12R. In other words, the right front coupling member 11R, the right axle 13R, and the right rear coupling member 12R are arranged at intervals in descending order in the front-to-rear direction.

The left front coupling member 11L has a shape extending diagonally forward to the left from the car body 10 on the front side relative to the slewing center axis C, and couples the car body 10 to the left crawler frame 2L. The left rear coupling member 12L has a shape extending diagonally rearward to the left from the car body 10 on the rear side relative to the slewing center axis C, and couples the car body 10 to the left crawler frame 2L. The left axle 13L is disposed on the rear side relative to the left front coupling member 11L and on the front side relative to the left rear coupling member 12L. In other words, the left front coupling member 11L, the left axle 13L, and the left rear coupling member 12L are arranged at intervals in descending order in the front-to-rear direction.

### [Connection Structure]

A connection structure for connecting the plurality of coupling members 11R, 12R, 11L, and 12L to the car body 10 and the crawler frames, a connection structure for connecting the right axle 13R to the right crawler frame 2R, and a connection structure for connecting the left axle 13L to the left crawler frame 2L will be described.

As mentioned above, the car body 10 includes the plurality of connected portions. The plurality of connected portions include a right front connected portion 51R, a right rear connected portion 52R, a left front connected portion 51L, and a left rear connected portion 52L.

The right front connected portion 51R is a portion to which the right front coupling member 11R is connected, and is disposed on a part of car body main part 10A that is on the front side relative to the right axle 13R and on the right side relative to the slewing center axis C. In this embodiment, the right front connected portion 51R is disposed on a front part of the right side surface of the car body main part 10A. The right front connected portion 51R, however, may be disposed, for example, on a right part of the front surface of the car body main part 10A.

The right rear connected portion 52R is a portion to which the right rear coupling member 12R is connected, and is disposed on a part of car body main part 10A that is on the rear side relative to the right axle 13R and on the right side relative to the slewing center axis C. In this embodiment, the right rear connected portion 52R is disposed on a rear part of the right side surface of the car body main part 10A. The right rear connected portion 52R, however, may be disposed, for example, on a right part of the rear surface of the car body main part 10A.

The left front connected portion 51L is a portion to which the left front coupling member 11L is connected, and is disposed on a part of car body main part 10A that is on the front side relative to the left axle 13L and on the left side relative to the slewing center axis C. In this embodiment, the left front connected portion 51L is disposed on a front part of the left side surface of the car body main part 10A. The left front connected portion 51L, however, may be disposed, for example, on a left part of the front surface of the car body main part 10A.

The left rear connected portion 52L is a portion to which the left rear coupling member 12L is connected, and is disposed on a part of car body main part 10A that is on the rear side relative to the left axle 13L and on the left side relative to the slewing center axis C. In this embodiment, the left rear connected portion 52L is disposed on a rear part of the left side surface of the car body main part 10A. The left rear connected portion 52L, however, may be disposed, for example, on a left part of the rear surface of the car body main part 10A.

As mentioned above, the right crawler frame 2R includes the plurality of connected portions. The plurality of connected portions include a right front connected portion 61R, a right rear connected portion 62R, and a right middle connected portion 63R.

The right middle connected portion 63R is a portion to which the right axle 13R of the car body 10 is connected, and is disposed on a part of right frame body 20R that corresponds to the right axle 13R in position in the front-to-rear direction. In this embodiment, the right middle connected portion 63R is located near the center in the front-to-rear direction of the right frame body 20R.

The right front connected portion 61R is a portion to which the right front coupling member 11R is connected, and is disposed on a part of right frame body 20R that is on the front side relative to the right middle connected portion 63R. As shown in FIG 26, the right front connected portion 61R of the right crawler frame 2R is disposed on the diagonally rightward front side relative to the right front connected portion 51R of the car body 10.

The right rear connected portion 62R is a portion to which the right rear coupling member 12R is connected, and is disposed on a part of right frame body 20R that is on the rear side relative to the right middle connected portion 63R. As shown in FIG. 26, the right rear connected portion 62R of the right crawler frame 2R is disposed on the diagonally rightward rear side relative to the right rear connected portion 52R of the car body 10.

As mentioned above, the left crawler frame 2L includes the plurality of connected portions. The plurality of connected portions include a left front connected portion 61L, a left rear connected portion 62L, and a left middle connected portion 63L.

The left middle connected portion 63L is a portion to which the left axle 13L of the car body 10 is connected, and is disposed on a part of left frame body 20L that corresponds to the left axle 13L in position in the front-to-rear direction. In this embodiment, the left middle connected portion 63L is located near the center in the front-to-rear direction of the left frame body 20L.

The left front connected portion 61L is a portion to which the left front coupling member 11L is connected, and is disposed on a part of left frame body 20L that is on the front side relative to the left middle connected portion 63L. As shown in FIG 26, the left front connected portion 61L of the left crawler frame 2L is disposed on the diagonally rightward front side relative to the left front connected portion 51L of the car body 10.

The left rear connected portion 62L is a portion to which the left rear coupling member 12L is connected, and is disposed on a part of left frame body 20L that is on the rear side relative to the left middle connected portion 63L. As shown in FIG 26, the left rear connected portion 62L of the left crawler frame 2L is disposed on the diagonally leftward rear side relative to the left rear connected portion 52L of the car body 10.

The right axle 13R includes a right middle connection portion 43R detachably connected to the right middle connected portion 63R of the right crawler frame 2R, and an axle body 73R that couples the right middle connection portion 43R to the car body main part 10A. The right middle connection portion 43R makes up a leading end of the right axle 13R. The axle body 73R is a part having a shape extending rightward from the car body main part 10A, and makes up most of the right axle 13R.

The left axle 13L includes a left middle connection portion 43L detachably connected to the left middle connected portion 63L of the left crawler frame 2L, and an axle body 73L that couples the left middle connection portion 43L to the car body main part 10A. The left middle connection portion 43L makes up a leading end of the left axle 13L. The axle body 73L is a part having a shape extending leftward from the car body main part 10A, and makes up most of the left axle 13L.

The right front coupling member 11R includes a car body connection portion 31R connected to the right front connected portion 51R of the car body 10, a crawler connection portion 41R connected to the right front connected portion 61R of the right crawler frame 2R, and a coupling member body 71R that couples the car body connection portion 31R to the crawler connection portion 41R. The right front coupling member 11R at an overhanging position, at which the crawler connection portion 41R is located on the diagonally rightward front side relative to the car body connection portion 31R, couples the car body 10 to the right crawler frame 2R. The car body connection portion 31R makes up a base end of the right front coupling member 11R, and the crawler connection portion 41R makes up a leading end of the right front coupling member 11R. The coupling member body 71R is a part that is set in a position of extend diagonally forward to the right when the right front coupling member 11R is at the overhanging position. The coupling member body 71R makes up most of the right front coupling member 11R.

The right rear coupling member 12R includes a car body connection portion 32R connected to the right rear connected portion 52R of the car body 10, a crawler connection portion 42R connected to the right rear connected portion 62R of the right crawler frame 2R, and a coupling member body 72R that couples the car body connection portion 32R to the crawler connection portion 42R. The right rear coupling member 12R at an overhanging position, at which the crawler connection portion 42R is located on the diagonally rightward rear side relative to the car body connection portion 32R, couples the car body 10 to the right crawler frame 2R. The car body connection portion 32R makes up a base end of the right rear coupling member 12R, and the crawler connection portion 42R makes up a leading end of the right rear coupling member 12R. The coupling member body 72R is a part that is set in a position of extend diagonally rearward to the right when the right rear coupling member 12R is at the overhanging position. The coupling member body 72R makes up most of the right rear coupling member 12R.

The left front coupling member 11L includes a car body connection portion 31L connected to the left front connected portion 51L of the car body 10, a crawler connection portion 41L connected to the left front connected portion 61L of the left crawler frame 2L, and a coupling member body 71L that couples the car body connection portion 31L to the crawler connection portion 41L. The left front coupling member 11L at an overhanging position, at which the crawler connection portion 41L is located on the diagonally leftward front side relative to the car body connection portion 31L, couples the car body 10 to the left crawler frame 2L. The car body connection portion 31L makes up a base end of the left front coupling member 11L, and the crawler connection portion 41L makes up a leading end of the left front coupling member 11L. The coupling member body 71L is a part that is set in a position of extend diagonally forward to the left when the left front coupling member 11L is at the overhanging position. The coupling member body 71L makes up most of the left front coupling member 11L.

The left rear coupling member 12L includes a car body connection portion 32L connected to the left rear connected portion 52L of the car body 10, a crawler connection portion 42L connected to the left rear connected portion 62L of the left crawler frame 2L, and a coupling member body 72L that couples the car body connection portion 32L to the crawler connection portion 42L. The left rear coupling member 12L at an overhanging position, at which the crawler connection portion 42L is located on the diagonally leftward rear side relative to the car body connection portion 32L, couples the car body 10 to the left crawler frame 2L. The car body connection portion 32L makes up a base end of the left rear coupling member 12L, and the crawler connection portion 42L makes up a leading end of the left rear coupling member 12L. The coupling member body 72L is a part that is set in a position of extend diagonally rearward to the left when the left rear coupling member 12L is at the overhanging position. The coupling member body 72L makes up most of the left rear coupling member 12L.

In this embodiment, in the plurality of coupling members 11R, 12R, 11L, and 12L, the car body connection portions 31R, 32R, 31L, and 32L serve as attachable/detachable connection portions and the crawler connection portions 41R, 42R, 41L, and 42L serve as rotatable connection portions. For the plurality of coupling members 11R, 12R, 11L, and 12L, the car body 10 serves as an attached-to/detached-from member and the right crawler frame 2R and the left crawler frame 2L each serve as a rotating-on member. This will be described specifically as follows.

The car body connection portion 31R of the right front coupling member 11R is detachably connected to the right front connected portion 51R of the car body 10, and the crawler connection portion 41R of the right front coupling member 11R is rotatably connected to the right front connected portion 61R of the right crawler frame 2R.

The car body connection portion 32R of the right rear coupling member 12R is detachably connected to the right rear connected portion 52R of the car body 10, and the crawler connection portion 42R of the right rear coupling member 12R is rotatably connected to the right rear connected portion 62R of the right crawler frame 2R.

The car body connection portion 31L of the left front coupling member 11L is detachably connected to the left front connected portion 51L of the car body 10, and the crawler connection portion 41L of the left front coupling member 11L is rotatably connected to the left front connected portion 61L of the left crawler frame 2L.

The car body connection portion 32L of the left rear coupling member 12L is detachably connected to the left rear connected portion 52L of the car body 10, and the crawler connection portion 42L of the left rear coupling member 12L is rotatably connected to the left rear connected portion 62L of the left crawler frame 2L.

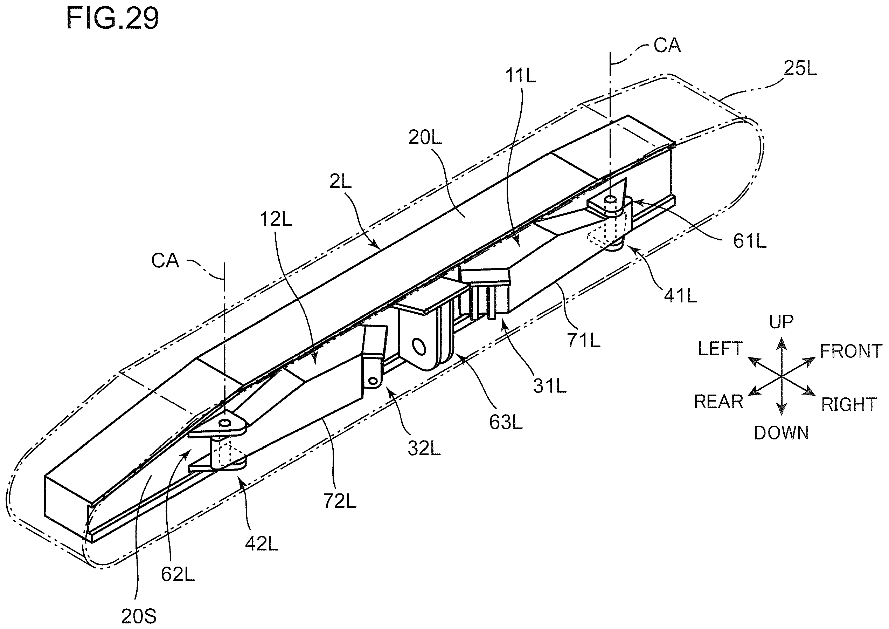

Each of the plurality of coupling members 11R, 12R, 11L, and 12L having the connection structure described above is configured to be capable of shifting in position between an overhanging state, in which each of the coupling members 11R, 12R, 11L, and 12L is set at the overhanging position shown in FIGS. 25, 26, and 28, and an approaching state, in which each of the coupling members 11R, 12R, 11L, and 12L is set at an approaching position shown in FIG 29. In other words, each of the plurality of coupling members 11R, 12R, 11L, and 12L is configured such that it rotates on the crawler connection portion (rotatable connection portion) as the car body connection portion (attachable/detachable connection portion) is detached from the car body 10 (attached-to/detached-from member), thereby being set at the approaching position at which the car body connection portion is located closer to the corresponding crawler frame (rotating-on member) than is at the overhanging position. This configuration will be described more specifically in the following by taking the left front coupling member 11L and the left rear coupling member 12L as examples.

FIGS. 25 and 26 show a state in which the car body connection portion 31L of the left front coupling member 11L is connected to the left front connected portion 51L of the car body 10, the car body connection portion 32L of the left rear coupling member 12L is connected to the left rear connected portion 52L of the car body 10, and the left middle connection portion 43L of the left axle 13L is connected to the left middle connected portion 63L of the left crawler frame 2L. In the state shown in FIGS. 25 and 26, the left front coupling member 11L is set at the overhanging position at which the crawler connection portion 41L is located on the diagonally leftward front side relative to the car body connection portion 31L, and the left rear coupling member 12L is set at the overhanging position at which the crawler connection portion 42L is located on the diagonally leftward rear side relative to the car body connection portion 32L.

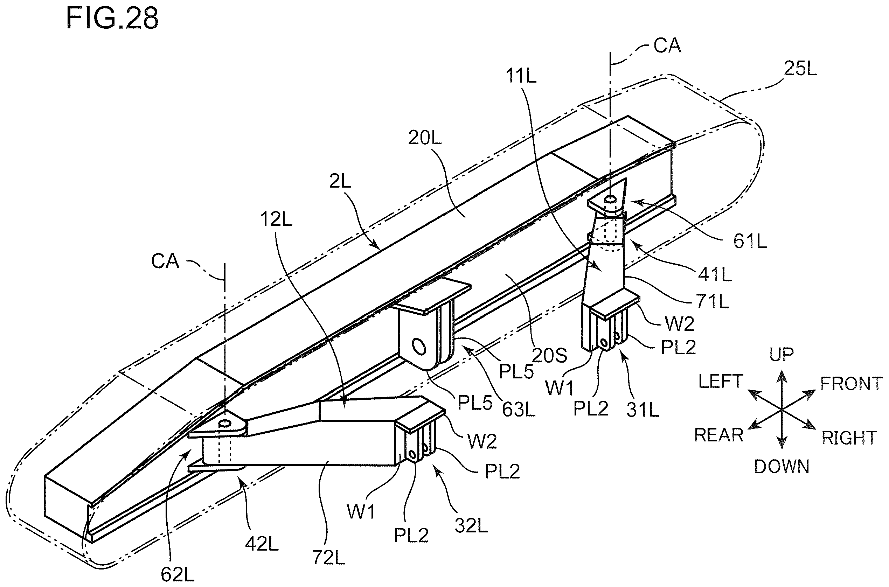

FIG 28 shows a state in which the car body connection portion 31L of the left front coupling member 11L is detached from the left front connected portion 51L of the car body 10, the car body connection portion 32L of the left rear coupling member 12L is detached from the left rear connected portion 52L of the car body 10, and the left middle connection portion 43L of the left axle 13L is detached from the left middle connected portion 63L of the left crawler frame 2L. In the state shown in FIG. 28, the crawler connection portion 41L of the left front coupling member 11L remains connected to the left front connected portion 61L of the left crawler frame 2L, the crawler connection portion 42L of the left rear coupling member 12L remains connected to the left rear connected portion 62L of the left crawler frame 2L, and each of the left front coupling member 11L and the left rear coupling member 12L remains set at the overhanging position.

FIG 29 shows a state in which the left front coupling member 11L set at the overhanging position shown in FIG 28 has rotated around a rotation center axis CA of the crawler connection portion 41L, thereby being set at the approaching position, and the left rear coupling member 12L set at the overhanging position shown in FIG 28 has rotated around a rotation center axis CA of the crawler connection portion 42L, thereby being set at the approaching position. In this embodiment, each rotation center axis CA is parallel to the vertical direction. In the state shown in FIG 29, the crawler connection portion 41L of the left front coupling member 11L remains connected to the left front connected portion 61L of the left crawler frame 2L, and the crawler connection portion 42L of the left rear coupling member 12L remains connected to the left rear connected portion 62L of the left crawler frame 2L.

In the approaching position shown in FIG 29, the car body connection portion 31L of the left front coupling member 11L and the car body connection portion 32L of the left rear coupling member 12L are located closer to the left frame body 20L of the left crawler frame 2L than are at the overhanging position. This will be described specifically as follows.

As shown in FIG 29, the left front coupling member 11L at the approaching position is positioned in such a way as to extend rearward from the crawler connection portion 41L along the left frame body 20L, while the left rear coupling member 12L at the approaching position is positioned in such a way as to extend frontward from the crawler connection portion 42L along the left frame body 20L. In other words, the left front coupling member 11L at the approaching position is positioned in such a way as to put the car body connection portion 31L adjacent to the left frame body 20L, while the left rear coupling member 12L at the approaching position is positioned in such a way as to put the car body connection portion 32L adjacent to the left frame body 20L. As a result, at transportation of the mobile crane 100, an increase in dimensions of components including the left crawler frame 2L, the left front coupling member 11L, and the left rear coupling member 12L (the width in the left-to-right direction of the components in FIG 29) can be suppressed effectively.

In this embodiment, the left front coupling member 11L rotates clockwise from the overhanging position shown in FIG 28 in plan view, thereby being set at the approaching position shown in FIG 29, at which the car body connection portion 31L is located on the rear side relative to the crawler connection portion 41L, while the left rear coupling member 12L rotates counterclockwise from the overhanging position shown in FIG 28 in plan view, thereby being set at the approaching position shown in FIG 29, at which the car body connection portion 32L is located on the front side relative to the crawler connection portion 42L. Positioning of the coupling members, however, is not limited to this form. The left front coupling member 11L may rotate counterclockwise from the overhanging position in plan view, thereby being set at the approaching position, at which the car body connection portion 31L is located on the front side relative to the crawler connection portion 41L. Likewise, the left rear coupling member 12L may rotate clockwise from the overhanging position in plan view, thereby being set at the approaching position, at which the car body connection portion 32L is located on the rear side relative to the crawler connection portion 42L.

In this embodiment, as shown in FIG 29, at least a part of the car body connection portion 31L of the left front coupling member 11L is stored in a storage space demarcated by a right side surface 20S of the left frame body 20L, a lower surface of the top of the left crawler belt 25L, and an upper surface of the bottom of the left crawler belt 25L. In other words, at least a part of the car body connection portion 31L of the left front coupling member 11L is disposed at a position overlapping the left crawler belt 25L in plan view. Similarly, at least a part of the car body connection portion 32L of the left rear coupling member 12L is stored in a storage space demarcated by the right side surface of the left frame body 20L, the lower surface of the top of the left crawler belt 25L, and the upper surface of the bottom of the left crawler belt 25L. In other words, at least a part of the car body connection portion 32L of the left rear coupling member 12L is disposed at a position overlapping the left crawler belt 25L in plan view. As a result, at transportation of the mobile crane 100, an increase in dimensions of components including the left crawler frame 2L, the left crawler belt 25L, the left front coupling member 11L, and the left rear coupling member 12L (the width in the left-to-right direction of the components in FIG 29) can be suppressed effectively.

Each of the right front coupling member 11R and the right rear coupling member 12R is configured to be capable of shifting between the overhanging position and the approaching position. A structure in which the right front coupling member 11R and the right rear coupling member 12R are able to shift between the overhanging position and the approaching position is the same as the structure in which the left front coupling member 11L and the left rear coupling member 12L are able to shift between the same, the structure having been described with reference to FIGS. 28 and 29, except for differences in direction in the left-to-right direction, and therefore will not be described.

The main features of the lower travelling body 101 according to the fourth embodiment have been described above. Specific examples of connection structures will now be described below. It should be noted that connection structures are not limited to specific examples described below and various forms of the connection structures may be adopted.

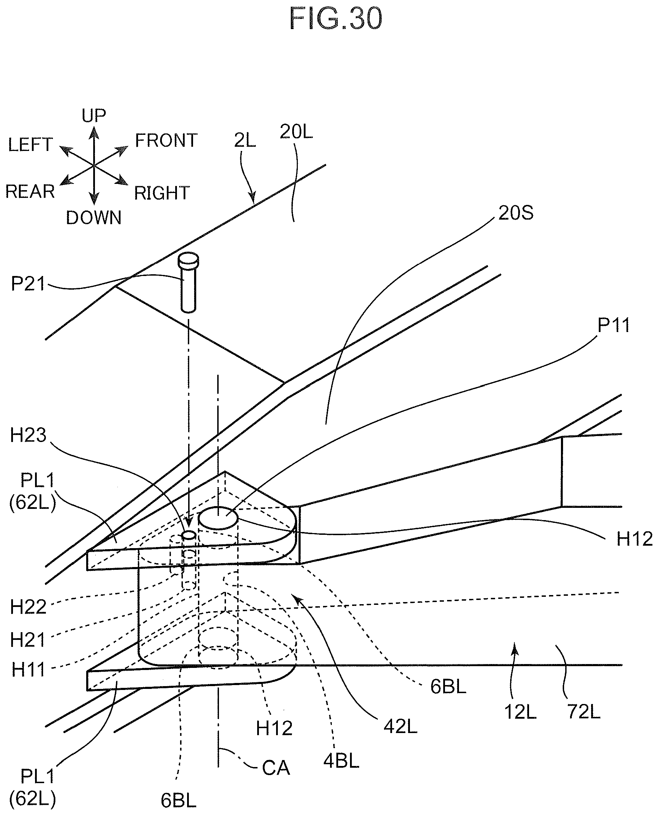

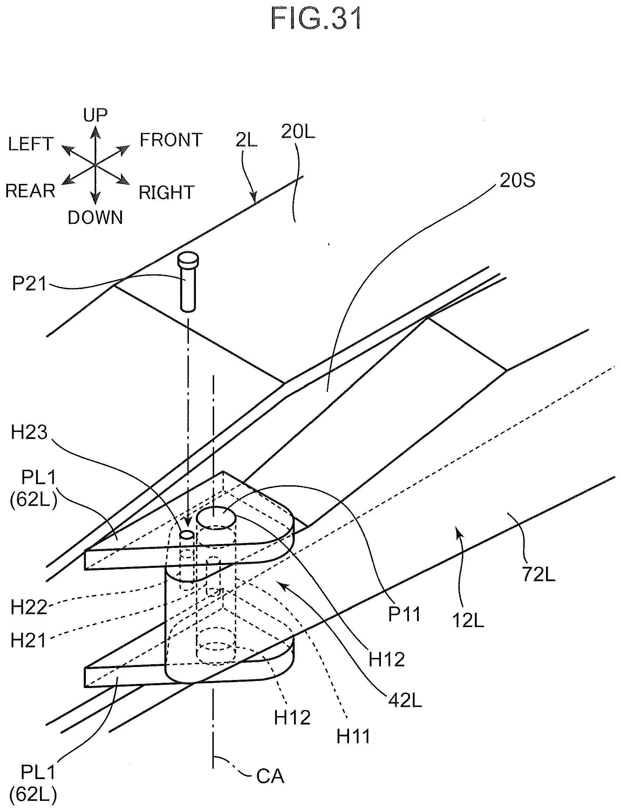

A connection structure of the crawler connection portion and the crawler frame in each of the plurality of coupling members 11R, 12R, 11L, and 12L will first be described. Each of FIGS. 30 and 31 is a perspective view of a connection structure of the crawler connection portion 42L of the left rear coupling member 12L and the connected portion 62L of the left crawler frame 2L, the connection structure being included in the lower travelling body 101 according to the first embodiment.

As shown in FIGS. 30 and 31, the crawler connection portion 42L of the left rear coupling member 12L is configured by the leading end of the left rear coupling member 12L. The crawler connection portion 42L has a pin insertion hole H11 vertically penetrating the crawler connection portion 42L.

The connected portion 62L of the left crawler frame 2L has a pair of projection pieces PL1 projecting rightward from the right side surface 20S (inner surface) of the left frame body 20L. These projection pieces PL1 are arranged at intervals in the vertical direction. The distance (gap) in the vertical direction between the pair of projection pieces PL1 is determined to be a value slightly larger than dimensions (thickness) in the vertical direction of the crawler connection portion 42L so that the crawler connection portion 42L of the left rear coupling member 12L can be fitted in between the pair of projection pieces PL1.

The pair of projection pieces PL1 each have a pin insertion hole H12 that corresponds in portion to the pin insertion hole H11 of the crawler connection portion 42L. Respective pin insertion holes H12 of the pair of projection pieces PL1 are arranged at the same position as the position of the pin insertion hole H11 of the crawler connection portion 42L in plan view when the crawler connection portion 42L is fitted in between the pair of projection pieces PL1. As the crawler connection portion 42L of the left rear coupling member 12L is fitted in between the pair of projection pieces PL1, a pin P11 is inserted into the pin insertion holes H12 of the pair of projection pieces PL1 and the pin insertion hole H11 of the crawler connection portion 42L. As a result, the crawler connection portion 42L of the left rear coupling member 12L is rotatably connected to the connected portion 62L of the left crawler frame 2L. The left rear coupling member 12L can rotate around the rotation center axis CA, which is the center of the pin P11, relative to the connected portion 62L of the left crawler frame 2L. A range in which the left rear coupling member 12L can rotate includes the overhanging position shown in FIGS. 25, 26, 28, and 30 and the approaching position shown in FIGS. 29 and 31.

A connection structure of the crawler connection portion 41R of the right front coupling member 11R and the connected portion 61R of the right crawler frame 2R, a connection structure of the crawler connection portion 42R of the right rear coupling member 12R and the connected portion 62R of the right crawler frame 2R, and a connection structure of the crawler connection portion 41L of the left front coupling member 11L and the connected portion 61L of the left crawler frame 2L are each the same as the connection structure of the crawler connection portion 42L of the left rear coupling member 12L and the connected portion 62L of the left crawler frame 2L, the connection structure having been described with reference to FIGS. 30 and 31, except for differences in direction, and therefore will not be detailed in detail.

A fixing structure for temporarily fixing each of the plurality of coupling members 11R, 12R, 11L, and 12L to the overhanging position and to the approaching position will then be described.

The lower travelling body 101 according to the embodiment further includes a plurality of fixing members P21 for fixing the plurality of coupling members 11R, 12R, 11L, and 12L to the overhanging position and to the approaching position.

In the embodiment , the plurality of fixing members P21 are a plurality of overhanging position fixing members and a plurality of approaching position fixing members. In other words, each fixing member P21 functions both as an overhanging position fixing member and an approaching position fixing member. The overhanging position fixing member is a member that temporarily fixes the coupling member to the overhanging position, and the approaching position fixing member is a member that temporarily fixes the coupling member to the approaching position. The overhanging position fixing member and the approaching position fixing member may be formed of different members.

Hereinafter, a fixing structure for fixing the left rear coupling member 12L to the overhanging position and to the approaching position will be described with reference to FIGS. 30 and 31. A fixing structure for fixing each of the right front coupling member 11R, the right rear coupling member 12R, and the left front coupling member 11L is the same as the fixing structure for fixing the left rear coupling member 12L, except for differences in direction.

As shown in FIG 30, the leading end of the left rear coupling member 12L, the leading end making up the crawler connection portion 42L of the left rear coupling member 12L, has two pin insertion holes H21 and H22 that are drilled on an upper surface of the leading end to extend downward. In this embodiment, each of the two pin insertion holes H21 and H22 is a hole with a bottom formed on a middle part in the height direction of the crawler connection portion 42L. Each pin insertion hole, however, may be a through-hole vertically penetrating the crawler connection portion 42L. The two pin insertion holes H21 and H22 lie on the same arc on a circle around the rotation center axis CA in plan view. One pin insertion hole H21 is located farther to the left frame body 20L of the left crawler frame 2L than the other pin insertion hole H22 is.

The projection piece PL1 on the upper side, which is one of the pair of projection pieces PL1 making up the connected portion 62L of the left crawler frame 2L, has a pin insertion hole H23 vertically penetrating the projection piece PL1. in plan view, the pin insertion hole H23 of the projection piece PL1 lies on the same arc on which two pin insertion holes H21 and H22 of the crawler connection portion 42L lie, the arc being on a circle around the rotation center axis CA.

The pin insertion hole H23 of the projection piece PL1 is set at the same position as the position of the one pin insertion hole H21 of the crawler connection portion 42L in plan view when the left rear coupling member 12L is set at the overhanging position shown in FIG 30, but is set at the same position as the position of the other pin insertion hole H22 of the crawler connection portion 42L in plan view when the left rear coupling member 12L is set at the approaching position shown in FIG 31.

In this embodiment, a fixing member P21 is formed of a pin. As the left rear coupling member 12L is set at the overhanging position shown in FIG 30, the fixing member P21 is inserted into the pin insertion hole H23 of the projection piece PL1 and the one pin insertion hole H21 of the crawler connection portion 42L. This prevents the left rear coupling member 12L from rotating relative to the connected portion 62L of the left crawler frame 2L, thus fixing the left rear coupling member 12L to the overhanging position. When the fixing member P21 is removed from the pin insertion hole H23 of the projection piece PL1 and from the one pin insertion hole H21 of the crawler connection portion 42L, the left rear coupling member 12L is allowed to rotate relative to the connected portion 62L of the left crawler frame 2L.

As the left rear coupling member 12L is set at the approaching position shown in FIG 31, the fixing member P21 is inserted into the pin insertion hole H23 of the projection piece PL1 and the other pin insertion hole H22 of the crawler connection portion 42L. This prevents the left rear coupling member 12L from rotating relative to the connected portion 62L of the left crawler frame 2L, thus fixing the left rear coupling member 12L to the approaching position. When the fixing member P21 is removed from the pin insertion hole H23 of the projection piece PL1 and from the one pin insertion hole H21 of the crawler connection portion 42L, the left rear coupling member 12L is allowed to rotate relative to the connected portion 62L of the left crawler frame 2L.

In the lower travelling body 101 according to the embodiment having such a fixing structure, during assembling work of assembling the lower travelling body 101, the plurality of coupling members 11R, 12R, 11L, and 12L are fixed respectively to the overhanging positions by a plurality of the fixing members P21, and then the car body connection portion of each coupling member is attached to the connected portion of the car body 10. This improves the workability of assembly work of the lower travelling body 101. At transportation of the mobile crane, the plurality of coupling members 11R, 12R, 11L, and 12L are fixed to the approaching positions by the plurality of fixing members P21, and are therefore prevented from shifting in position relative to the corresponding crawler frame that is one of the left and right crawler frames 2R and 2L.

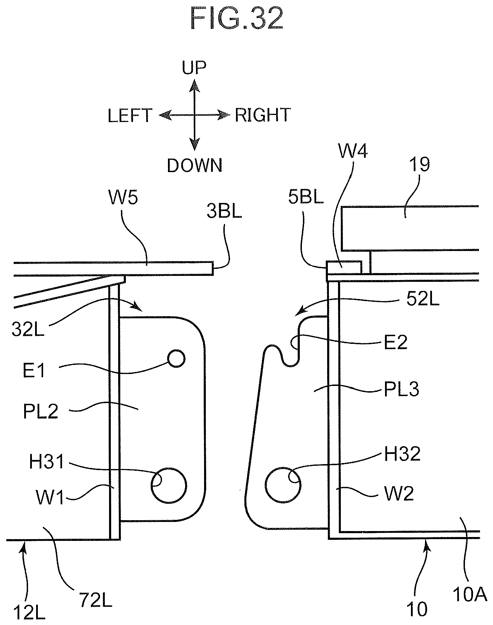

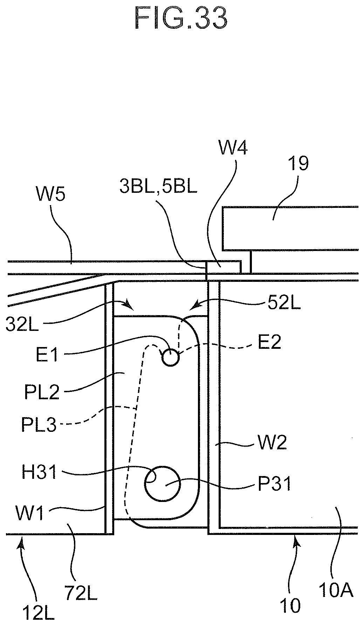

A connection structure of the car body connection portion and the car body 10 in each of the plurality of coupling members 11R, 12R, 11L, and 12L will then be described. Each of FIGS. 32 and 33 is a rear view of a connection structure of the car body connection portion 32L of the left rear coupling member 12L and the connected portion 52L of the car body 10, the connection structure being included in the lower travelling body 101.

As shown in FIGS. 32 and 33, the car body connection portion 32L of the left rear coupling member 12L is configured by the base end of the left rear coupling member 12L. The car body connection portion 32L has a pair of projection pieces PL2 projecting from a wall W1 making up the base end of the coupling member body 72L of the left rear coupling member 12L, and a bar-like engaging portion E1 that is disposed between the projection pieces PL2 to bridge them and that is supported by the projection pieces PL2. The pair of projection pieces PL2 project from the wall W1 toward the right side, that is, projects in the direction of approaching the car body main part 10A as the left rear coupling member 12L is set at the overhanging position shown in FIG 28. The pair of projection pieces PL2 are arranged at intervals in the front-to-rear direction. The distance (gap) between the pair of projection pieces PL2 in the front-to-rear direction is determined to be a value slightly larger than dimensions (thickness) in the front-to-rear direction of a projection piece PL3 so that the projection piece PL3 making up the connected portion 52L of the car body 10, which projection piece PL3 will be described later, can be fitted in between the pair of projection pieces PL2. The pair of projection pieces PL2 have pin insertion holes H31, respectively. The engaging portion E1 is disposed above the pin insertion holes H31.

The connected portion 52L of the car body 10 has the projection piece PL3 projecting leftward from a wall W2 making up a front part of the right side of the car body main part 10A. The projection piece PL3 has a pin insertion hole H32 corresponding in position to the pin insertion holes H31, and an engaged portion E2 corresponding in position to the engaging portion E1. The engaged portion E2 has a concave shape with an open top.

The bar-like engaging portion E1 is configured such that the bar-like engaging portion E1 can be placed in the engaged portion E2 through the opening of the engaged portion E2 and be engaged with the engaged portion E2. As shown in FIG 33, as the engaging portion E1 of the car body connection portion 32L of the left rear coupling member 12L is engaged with the engaged portion E2 of the connected portion 52L of the car body 10, a pin P31 is inserted into the pin insertion holes H31 and H32. As a result, the car body connection portion 32L of the left rear coupling member 12L is detachably connected to the connected portion 52L of the car body 10. When the car body connection portion 32L of the left rear coupling member 12L is removed from the connected portion 52L of the car body 10 for transportation of the mobile crane 100, an operation reverse in procedure to the above operation is carried out.

A connection structure of the car body connection portion 31R of the right front coupling member 11R and the connected portion 51R of the car body 10, a connection structure of the car body connection portion 32R of the right rear coupling member 12R and the connected portion 52R of the car body 10, and a connection structure of the car body connection portion 31L of the left front coupling member 11L and the connected portion 51L of the car body 10 are each the same as the connection structure of the car body connection portion 32L of the left rear coupling member 12L and the connected portion 52L of the car body 10, the connection structure having been described with reference to FIGS. 32 and 33, except for differences in direction, and therefore will not be described in detail.

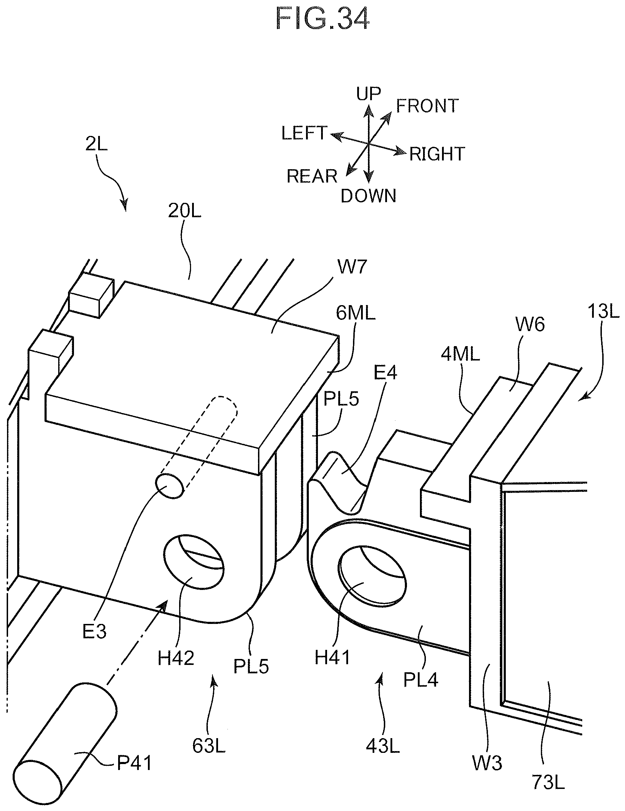

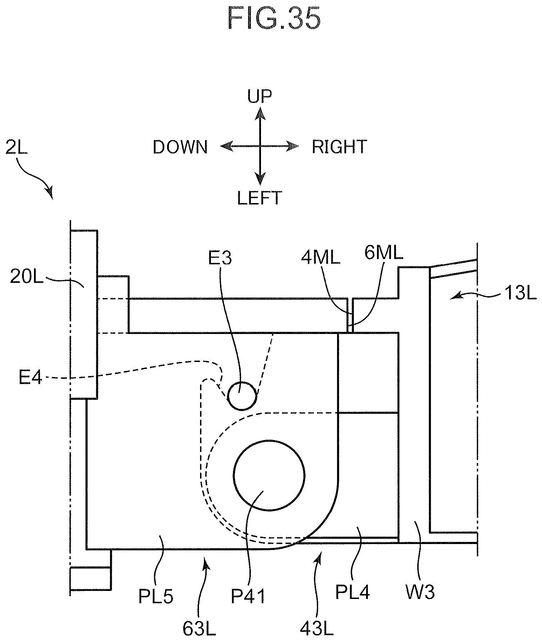

A connection structure of the right middle connection portion 43R of the right axle 13R and the right middle connected portion 63R of the right crawler frame 2R and a connection structure of the left middle connection portion 43L of the left axle 13L and the left middle connected portion 63L of the left crawler frame 2L will then be described. FIG. 34 is a perspective view of a connection structure of the left middle connection portion 43L of the left axle 13L of the car body 10 and the left middle connected portion 63L of the left crawler frame 2L, and FIG 35 is a rear view of the same.

As shown in FIGS. 28, 34, and 35, the left middle connected portion 63L of the left crawler frame 2L includes a pair of projection pieces PL5 projecting rightward from the left frame body 20L of the left crawler frame 2L, and a bar-like engaging portion E3 that is disposed between the projection pieces PL5 to bridge them and that is supported by the projection pieces PL5. The pair of projection pieces PL5 have pin insertion holes H42, respectively. The engaging portion E3 is disposed above the pin insertion holes H42.

The left middle connection portion 43L of the left axle 13L has a projection piece PL4 projecting leftward from a wall W3 making up a left end of the axle body 73L of the left axle 13L. The projection piece PL4 has a pin insertion hole H41 and an engaged portion E4. The engaged portion E4 has a concave shape with an open top.

The bar-like engaging portion E3 is configured such that the bar-like engaging portion E3 can be placed in the engaged portion E4 through the opening of the engaged portion E4 and be engaged with the engaged portion E4. As shown in FIG 35, as the engaging portion E3 of the left crawler frame 2L is engaged with the engaged portion E4 of the left axle 13L, a pin P41 is inserted into the pin insertion holes H41 and H42. As a result, the left middle connection portion 43L of the left axle 13L is connected to the left middle connected portion 63L of the left crawler frame 2L. When the left crawler frame 2L is removed from the left axle 13L for transportation of the mobile crane 100, an operation reverse in procedure to the above operation is carried out.

A connection structure of the right middle connection portion 43R of the right axle 13R and the right middle connected portion 63R of the right crawler frame 2R is the same as the connection structure shown in FIGS. 34 and 35, and therefore will not be described.

In FIG 26, four translifters TL indicated by two-dot chain lines TL are shown. As shown in FIG 26, the lower travelling body 101 is equipped with first to fourth translifters TL capable of holding the car body 10 lifted above the ground in assembling/disassembling work of the mobile crane 100.

In assembling work of the mobile crane 100, the car body 10 is held lifted above the ground by the first to fourth translifters TL. In this state, the plurality of coupling members 11R, 12R, 11L, and 12L are connected to the car body 10. Thereafter, the right crawler frame 2R is connected to the right front coupling member 11R, the right rear coupling member 12R, and the right axle 13R, and the left crawler frame 2L is connected to the left front coupling member 11L, the left rear coupling member 12L, and the left axle 13L. Disassembling work of the mobile crane 100 is carried out by the procedure reverse to the procedure of the above assembling work.

### [Load Transmission Structure]

A load transmission structure the lower travelling body 101 according to the embodiment has will then be described in detail.

As a shown in FIG 26, the car body 10 includes a plurality of load transmission surfaces for transmitting a load received from the upper slewing body 102, respectively to the plurality of coupling members 11R, 12R, 11L, and 12L. Specifically, the plurality of load transmission surfaces include a right front load transmission surface 5FR for transmitting the load to the right front coupling member 11R, a right rear load transmission surface 5BR for transmitting the load to the right rear coupling member 12R, a left front load transmission surface 5FL for transmitting the load to the left front coupling member 11L, and a left rear load transmission surface 5BL for transmitting the load to the left rear coupling member 12L.

The right front load transmission surface 5FR is formed on a part of car body main part 10A that is on the front side relative to the right axle 13R and on the right side relative to the slewing center axis C. The right rear load transmission surface 5BR of the car body 10 is formed on a part of car body main part 10A that is on the rear side relative to the right axle 13R and on the right side relative to the slewing center axis C. The left front load transmission surface 5FL of the car body 10 is formed on a part of car body main part 10A that is on the front side relative to the left axle 13L and on the left side relative to the slewing center axis C. The left rear load transmission surface 5BL of the car body 10 is formed on a part of car body main part 10A that is on the rear side relative to the left axle 13L and on the left side relative to the slewing center axis C.

Each of the plurality of coupling members 11R, 12R, 11L, 12L has a load receiving surface for receiving the load from the car body 10. Specifically, the right front coupling member 11R has a right front load receiving surface 3FR counter to the right front load transmission surface 5FR of the car body 10. The right rear coupling member 12R has a right rear load receiving surface 3BR counter to the right rear load transmission surface 5BR of the car body 10. The left front coupling member 11L has a left front load receiving surface 3FL counter to the left front load transmission surface 5FL of the car body 10. The left rear coupling member 12L has a left rear load receiving surface 3BL counter to the left rear load transmission surface 5BL of the car body 10.

Each of the right front load receiving surface 3FR of the right front coupling member 11R and the left front load receiving surface 3FL of the left front coupling member 11L is a surface capable of receiving a front load from the car body 10, the front load being a load that the car body 10 receives from the upper slewing body 102 when the cargo-to-be-lifted is hung on the upper slewing body 102 on the front side relative to the lower travelling body 101. The front load that the right front load receiving surface 3FR and the left front load receiving surface 3FL receive from the car body 10 is part of the entire load that the car body 10 receives from the upper slewing body 102 when the cargo-to-be-lifted is hung on the upper slewing body 102 on the front side relative to the lower travelling body 101.

Each of the right rear load receiving surface 3BR of the right rear coupling member 12R and the left rear load receiving surface 3BL of the left rear coupling member 12L is a surface capable of receiving a rear load from the car body 10, the rear load being a load that the car body 10 receives from the upper slewing body 102 when the cargo-to-be-lifted is hung on the upper slewing body 102 on the rear side relative to the lower travelling body 101. The rear load that the right rear load receiving surface 3BR and the left rear load receiving surface 3BL receive from the car body 10 is part of the entire load that the car body 10 receives from the upper slewing body 102 when the cargo-to-be-lifted is hung on the upper slewing body 102 on the rear side relative to the lower travelling body 101.

In this embodiment, each of the load receiving surfaces 3FR, 3BR, 3FL, and 3BL of the plurality of coupling members 11R, 12R, 11L, and 12L and the load transmission surfaces 5FR, 5BR, 5FL, and 5BL of the car body 10 is a surface perpendicular to the left-to-right direction, but is not limited to such a surface.

Each of the plurality of coupling members 11R, 12R, 11L, 12L has a load transmission surface for transmitting the load received from the car body 10 to the crawler frame. Specifically, the right front coupling member 11R has a right front load transmission surface 4FR counter to the right frame body 20R of the right crawler frame 2R. The right rear coupling member 12R has a right rear load transmission surface 4BR counter to the right frame body 20R of the right crawler frame 2R. The left front coupling member 11L has a left front load transmission surface 4FL counter to the left frame body 20L of the left crawler frame 2L. The left rear coupling member 12L has a left rear load transmission surface 4BL counter to the left frame body 20L of the left crawler frame 2L.

The right front load transmission surface 4FR is a surface capable of transmitting the front load to the right crawler frame 2R, the left front load transmission surface 4FL is a surface capable of transmitting the front load to the left crawler frame 2L, the right rear load transmission surface 4BR is a surface capable of transmitting the rear load to the right crawler frame 2R, and the left rear load transmission surface 4BL is a surface capable of transmitting the rear load to the left crawler frame 2L.

The right axle 13R includes a right middle load transmission surface 4MR for transmitting the load to the right crawler frame 2R, the load being applied by the car body main part 10A and received by the right axle 13R. The left axle 13L includes a left middle load transmission surface 4ML for transmitting the load to the left crawler frame 2L, the load being applied by the car body main part 10A and received by the left axle 13L.

The right crawler frame 2R includes a right front load receiving surface 6FR for receiving the load from the right front coupling member 11R, a right rear load receiving surface 6BR for receiving the load from the right rear coupling member 12R,, and a right middle load receiving surface 6MR for receiving the load from the right axle 13R. The left crawler frame 2L includes a left front load receiving surface 6FL for receiving the load from the left front coupling member 11L, a left rear load receiving surface 6BL for receiving the load from the left rear coupling member 12L, and a left middle load receiving surface 6ML for receiving the load from the left axle 13L.

Specific examples of the plurality of load transmission surfaces of the car body 10 are as follows. As shown in FIG 32, the left rear load transmission surface 5BL of the car body 10 may be configured by a side surface (left side surface in FIG. 32) of a wall W4, which is a part of the car body 10. The other load transmission surfaces 5FR, 5BR, and 5FL may also be structured in the same manner as the left rear load transmission surface 5BL shown in FIG 32, which is, however, not illustrated.

Specific examples of respective load receiving surfaces of the plurality of coupling members 11R, 12R, 11L, and 12L are as follows. As shown in FIG 32, for example, the left rear load receiving surface 3BL of the left rear coupling member 12L may be configured by a side surface (a right side surface in FIG. 32) of a wall W5, which is a part of the left rear coupling member 12L. The other load receiving surfaces 3FR, 3BR, and 3FL may also be structured in the same manner as the left rear load receiving surface 3BL shown in FIG 32, which is, however, not illustrated.

Specific examples of respective load transmission surfaces of the plurality of coupling members 11R, 12R, 11L, and 12L are as follows. As shown in FIG 30, for example, the left rear load transmission surface 4BL of the left rear coupling member 12L may be formed on the crawler connection portion 42L of the left rear coupling member 12L. The left rear load transmission surface 4BL may be configured by an inner peripheral surface that demarcates the pin insertion hole H11 of the crawler connection portions 42L. In this case, the load the left rear coupling member 12L receives from the car body 10 is transmitted to the crawler connection portion 42L via the car body connection portion 32L and the coupling member body 72L, and is transmitted from the left rear load transmission surface 4BL configured by the inner peripheral surface demarcating the pin insertion hole H11 to the pair of projection pieces PL1 of the left rear connected portion 62L of the left crawler frame 2L, via the pin P11.

In this case, as shown in FIG 30, the left rear load receiving surface 6BL of the left crawler frame 2L may be formed on each of the pair of projection pieces PL1 of the left rear connected portion 62L. The left rear load receiving surface 6BL may be configured by an inner peripheral surface that demarcates the pin insertion hole H12 of each of the pair of projection piece PL1. The load is transmitted from the crawler connection portion 42L of the left rear coupling member 12L to the left rear load receiving surface 6BL via the pin P11, and is further transmitted to the left frame body 20L of the left crawler frame 2L.

The other load transmission surfaces 4FR, 4BR, and 4FL may also be structured in the same manner as the left rear load transmission surface 4BL shown in FIG. 30, and the other load receiving surfaces 6FR, 6BR, and 6FL may also be structured in the same manner as the left rear load receiving surface 6BL shown in FIG 30, which is, however, not illustrated.

Specific examples of the right middle load transmission surface 4MR of the right axle 13R and the left middle load transmission surface 4ML of the left axle 13L are as follows. That is, as shown in FIG 34, for example, the left middle load transmission surface 4ML of the left axle 13L may be configured by a side surface (left side surface in FIG. 34) of a wall W6, which is a part of the left axle 13L.

In this case, as shown in FIG 34, the left middle load receiving surface 6ML of the left crawler frame 2L may be configured by a side surface (right side surface in FIG 34) of a wall W7, which is a part of the left crawler frame 2L.

The right middle load transmission surface 4MR of the right axle 13R may also be structured in the same manner as the left middle load transmission surface 4ML shown in FIG 34, and the right middle load receiving surface 6MR of the right crawler frame 2R may also be structured in the same manner as the left middle load receiving surface 6ML shown in FIG 34.

In the plan view shown in FIG 26, the right front coupling member 11R has a shape in which a right front straight line LA, which is a straight line passing through a point A1 included in the right front load receiving surface 3FR of the right front coupling member 11R and a point A2 included in the right front load transmission surface 4FR, passes through the right front end roller 261. In the plan view shown in FIG 26, the left front coupling member 11L has a shape in which a left front straight line LC, which is a straight line passing through a point C1 included in the left front load receiving surface 3FL of the left front coupling member 11L and a point C2 included in the left front load transmission surface 4FL, passes through the left front end roller 261. In this embodiment, the right front straight line LA is the straight line passing through the slewing center axis C as well, and the left front straight line LC is the straight line passing through the slewing center axis C as well.

However, the point A1 on the right front load receiving surface 3FR and the point A2 on the right front load transmission surface 4FR for defining the right front straight line LA are not limited to the points at the above-described positions. The point A1 may be a different point included in the right front load receiving surface 3FR capable of receiving the front load from the right front load transmission surface 5FR of the car body 10, and the point A2 may be a different point included in the right front load transmission surface 4FR capable of transmitting the front load to the right front load receiving surface 6FR of the right crawler frame 2R. Specifically, the right front straight line LA may be, for example, a straight line that in the plan view shown in FIG 26, passes through a rear end point on the right front load receiving surface 3FR and a front end point on the right front load transmission surface 4FR.

Similarly, the point C1 on the left front load receiving surface 3FL and the point C2 on the left front load transmission surface 4FL for defining the left front straight line LC are not limited to the points at the above-described positions. The point C1 may be a different point included in the left front load receiving surface 3FL capable of receiving the front load from the left front load transmission surface 5FL of the car body 10, and the point C2 may be a different point included in the left front load transmission surface 4FL capable of transmitting the front load to the left front load receiving surface 6FL of the left crawler frame 2L. Specifically, the left front straight line LC may be, for example, a straight line that in the plan view shown in FIG 26, passes through a rear end point on the left front load receiving surface 3FL and a front end point on the left front load transmission surface 4FL.

The right front coupling member 11R includes a right front continuous part CX extending continuously, in plan view, from the right front load receiving surface 3FR to the right front load transmission surface 4FR along the right front straight line LA, and the left front coupling member 11L includes a left front continuous part CX extending continuously, in plan view, from the left front load receiving surface 3FL to the left front load transmission surface 4FL along the left front straight line LC. Specifically, the right front continuous part CX extends continuously from the right front load receiving surface 3FR to the right front load transmission surface 4FR while overlapping the right front straight line LA in plan view, and left front continuous part CX extends continuously from the left front load receiving surface 3FL to the left front load transmission surface 4FL while overlapping the left front straight line LC in plan view.

In the plan view shown in FIG 26, the right rear coupling member 12R has a shape in which a right rear straight line LB, which is a straight line passing through a point B1 included in the right rear load receiving surface 3BR of the right rear coupling member 12R and a point B2 included in the right rear load transmission surface 4BR, passes through the right rear end roller 262. In the plan view shown in FIG 26, the left rear coupling member 12L has a shape in which a left rear straight line LD, which is a straight line passing through a point D1 included in the left rear load receiving surface 3BL of the left rear coupling member 12L and a point D2 included in the left rear load transmission surface 4BL, passes through the left rear end roller 262. In this embodiment, the right rear straight line LB is the straight line passing through the slewing center axis C as well, and the left rear straight line LD is the straight line passing through the slewing center axis C as well.

However, the point B1 on the right rear load receiving surface 3BR and the point B2 on the right rear load transmission surface 4BR for defining the right rear straight line LB are not limited to the points at the above-described positions. The point B1 may be a different point included in the right rear load receiving surface 3BR capable of receiving the rear load from the right rear load transmission surface 5BR of the car body 10, and the point B2 may be a different point included in the right rear load transmission surface 4BR capable of transmitting the rear load to the right rear load receiving surface 6BR of the right crawler frame 2R. Specifically, the right rear straight line LB may be, for example, a straight line that in the plan view shown in FIG 26, passes through a front end point on the right rear load receiving surface 3BR and a rear end point on the right rear load transmission surface 4BR.

Similarly, the point D1 on the left rear load receiving surface 3BL and the point D2 on the left rear load transmission surface 4BL for defining the left rear straight line LD are not limited to the points at the above-described positions. The point D1 may be a different point included in the left rear load receiving surface 3BL capable of receiving the rear load from the left rear load transmission surface 5BL of the car body 10, and the point D2 may be a different point included in the left rear load transmission surface 4BL capable of transmitting the rear load to the left rear load receiving surface 6BL of the left crawler frame 2L. Specifically, the left rear straight line LD may be, for example, a straight line that in the plan view shown in FIG 26, passes through a front end point on the left rear load receiving surface 3BL and a rear end point on the left rear load transmission surface 4BL.

The right rear coupling member 12R includes a right rear continuous part CX extending continuously, in plan view, from the right rear load receiving surface 3BR to the right rear load transmission surface 4BR along the right rear straight line LB, and the left rear coupling member 12L includes a left rear continuous part CX extending continuously, in plan view, from the left rear load receiving surface 3BL to the left rear load transmission surface 4BL along the left rear straight line LD. Specifically, the right rear continuous part CX extends continuously from the right rear load receiving surface 3BR to the right rear load transmission surface 4BR while overlapping the right rear straight line LB in plan view, and left rear continuous part CX extends continuously from the left rear load receiving surface 3BL to the left rear load transmission surface 4BL while overlapping the left rear straight line LD in plan view.

As described above, in the lower travelling body 101 according to the embodiment, each of the plurality of coupling members 11R, 12R, 11L, and 12 L is set at the overhanging position during crane work, and is set at the approaching position during transportation of the mobile crane 100. This achieves the following effects: reducing deformation that the lower travelling body 101 develops when the cargo-to-be-lifted is hung from the upper slewing body 102 on the front side or the rear side relative to the lower travelling body 101, suppressing an increase in dimensions of components making up the lower travelling body 101 during transportation of the mobile crane 100, and suppressing a drop in the workability of disassembling/assembling work of the lower travelling body 101. This will be described specifically as follows.

In crane work, the right front coupling member 11R set at the overhanging position is able to receive a front load on the car body connection portion 31R of the right front coupling member 11R, the front load being a load that the car body 10 receives from the upper slewing body 102 when the cargo-to-be-lifted is hung on the upper slewing body 102 on the front side relative to the lower travelling body 101, and to transmit the front load to the right frame body 20R of the right crawler frame 2R via the crawler connection portion 41R located on the diagonally rightward front side relative to the car body connection portion 31R. Similarly, the left front coupling member 11L is able to receive the front load on the car body connection portion 31L of the left front coupling member 11L and to transmit the front load to the left frame body 20L of the left crawler frame 2L via the crawler connection portion 41L located on the diagonally leftward front side relative to the car body connection portion 31L.

In other words, the right front coupling member 11R and the left front coupling member 11L can support the car body 10 on the front side relative to a part that receives the front load from the car body 10. This allows effectively suppressing warping deformation of the car body 10 caused by the front load, that is, improving the rigidity of the car body 10 against the front load. In addition, in contrast with the conventional lower travelling body in which a load is transmitted to the left and right crawler frames via the axles extending parallel to the left-to-right direction, the lower travelling body 101 allows parts where the front load is transmitted to the left and right crawler frames 2R and 2L to be brought close to respective front ends of the frame bodies of the left and right crawler frames 2R and 2L. As a result, deformation that develops on a front part of the frame body of each crawler frame, that is, deformation that develop on a front part between the part where the front load is transmitted to the frame body of the crawler frame and the front end of the frame body of the crawler frame can be reduced. Hence deformation the lower travelling body 101 develops when the cargo-to-be-lifted is hung from the upper slewing body 102 on the front side relative to the lower travelling body 101 can be reduced. Deformation the lower travelling body 101 develops when the cargo-to-be-lifted is hung from the upper slewing body 102 on the rear side relative to the lower travelling body 101 can also be reduced for the same reason as described above.

In the lower travelling body 101 according to this embodiment, at transportation of the mobile crane 100, each of the plurality of coupling members 11R, 12R, 11L, and 12L rotates around the rotation center axis CA of the crawler connection portion as the car body connection portion is detached from the connected portion of the car body 10, thereby being set at the approaching position. The car body connection portion of each of the plurality of coupling members 11R, 12R, 11L, and 12L set at the approaching position is located closer to the frame body of the corresponding crawler frame than is in the case of the coupling members 11R, 12R, 11L, and 12L being at the overhanging position. At transportation of the mobile crane 100, therefore, an increase in dimensions of components making up the lower travelling body 101 can be suppressed.

In addition, in disassembling work of the lower travelling body 101, the operator does not have to remove both the car body connection portion and the crawler connection portion of each of the plurality of coupling members 11R, 12R, 11L, 12L, from the car body and the crawler frame, respectively. Specifically, at each of the plurality of coupling members 11R, 12R, 11L, and 12L, the operator detaches only the car body connection portion from the connected portion of the car body 10 and causes each of the plurality of coupling members 11R, 12R, 11L, and 12L to rotate on the corresponding crawler connection portion, thus causing the coupling members to shift from the overhanging position to the approaching position. This allows the operator to separate the car body 10 from the left and right crawler frames 2R and 2L. Hence a drop in the workability of disassembling work is suppressed.

In disassembling work, respective crawler connection portions of the plurality of coupling members 11R, 12R, 11L, and 12L are not detached from the connected portions of the crawler frames. In assembling work of the lower travelling body 101, therefore, when setting up each of the plurality of coupling members 11R, 12R, 11L, and 12L, the operator is allowed to skip an operation of attaching the crawler connection portion to the connected portion of the crawler frame. Specifically, the operator rotates each of the plurality of coupling members 11R, 12R, 11L, and 12L on the crawler connection portion to cause each of the plurality of coupling members 11R, 12R, 11L, and 12L to shift from the approaching position to the overhanging position, and attaches the car body connection portion to the connected portion of the car body 10. Through this process, the operator is able to couple the car body 10 to the left and right crawler frames 2R and 2L through the plurality of coupling members 11R, 12R, 11L, and 12L. Hence a drop in the workability of assembling work is suppressed.

### [Modification of Fourth Embodiment not covered by the Invention]

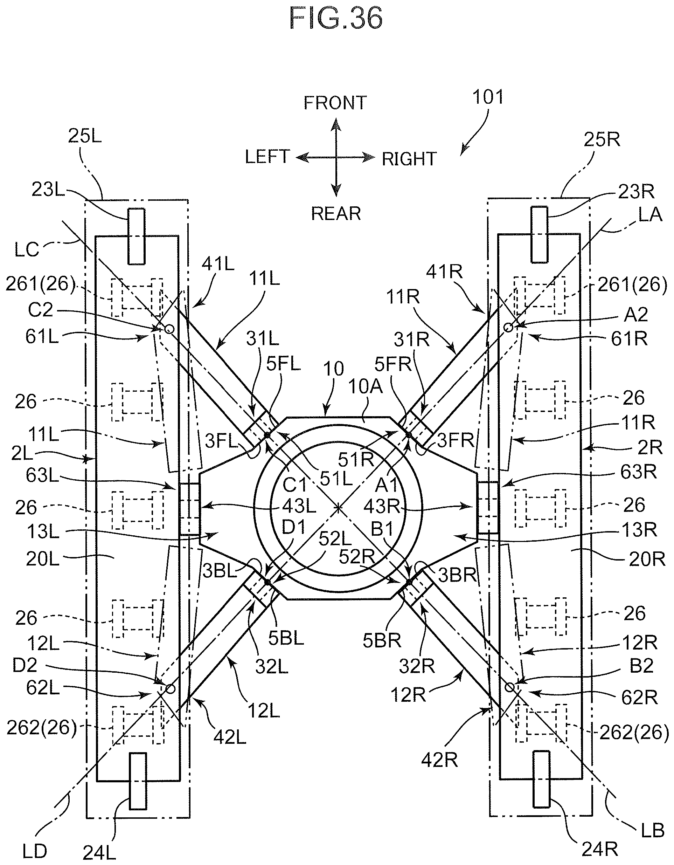

FIG 36 is a plan view of a lower travelling body 101 according to a modification of the fourth embodiment. The lower travelling body 101 according to this modification is different from the lower travelling body 101 shown in FIG 26 in the directions of the load transmission surfaces 5FR, 5BR, 5FL, and 5BL of the car body 10 and the directions of the load receiving surfaces 3FR, 3BR, 3FL, and 3BL of the plurality of coupling members 11R, 12R, 11L, and 12L, but is similar to the lower travelling body 101 shown in FIG 26 in other basic structural aspects. This will be described specifically as follows.

As shown in FIG 36, the right front load transmission surface 5FR of the car body 10 faces diagonally frontward to the right, and the right front load receiving surface 3FR of the right front coupling member 11R, the right front load receiving surface 3FR being counter to the right front load transmission surface 5FR, faces diagonally rearward to the left. The right rear load transmission surface 5BR of the car body 10 faces diagonally rearward to the right, and the right rear load receiving surface 3BR of the right rear coupling member 12R, the right rear load receiving surface 3BR being counter to the right rear load transmission surface 5BR, faces diagonally frontward to the left. The left front load transmission surface 5FL of the car body 10 faces diagonally frontward to the left, and the left front load receiving surface 3FL of the left front coupling member 11L, the left front load receiving surface 3FL being counter to the left front load transmission surface 5FL, faces diagonally rearward to the right. The left rear load transmission surface 5BL of the car body 10 faces diagonally rearward to the left, and the left rear load receiving surface 3BL of the left rear coupling member 12L, the left rear load receiving surface 3BL being counter to the left rear load transmission surface 5BL, faces diagonally frontward to the right.

In this modification, the direction of the right front load transmission surface 5FR and the right front load receiving surface 3FR can be brought close to the direction in which the right front coupling member 11R extends from the car body 10 to the right crawler frame 2R, that is, the direction in which the front load is transmitted to the right crawler frame 2R via the right front coupling member 11R. This allow the right front load transmission surface 5FR and the right front load receiving surface 3FR to efficiently transmit the front load from the car body 10 to the right front coupling member 11R. In the same manner, the direction of the left front load transmission surface 5FL and the left front load receiving surface 3FL can be brought close to the direction in which the left front coupling member 11L extends from the car body 10 to the left crawler frame 2L, that is, the direction in which the front load is transmitted to the left crawler frame 2L via the left front coupling member 11L. This allow the left front load transmission surface 5FL and the left front load receiving surface 3FL to efficiently transmit the front load from the car body 10 to the left front coupling member 11L. For the same reasons described above, the right rear load transmission surface 5BR and right rear load receiving surface 3BR and the left rear load transmission surface 5BL and left rear load receiving surface 3BL can efficiently transfer the rear load from the car body 10 to the right rear coupling member 12R and the left rear coupling member 12L, respectively.

In this modification, it is more preferable that the right front load transmission surface 5FR and the right front load receiving surface 3FR be surfaces perpendicular to the right front straight line LA, the right rear load transmission surface 5BR and the right rear load receiving surface 3BR be surfaces perpendicular to the right rear straight line LB, the left front load transmission surface 5FL and the left front load receiving surface 3FL be surfaces perpendicular to the left front straight line LC, and the left rear load transmission surface 5BL and the left rear load receiving surface 3BL be surfaces perpendicular to the left rear straight line LD. In this case, the front load and the rear load are transmitted more efficiently from the car body 10 to each of the plurality of coupling members 11R, 12R, 11L, and 12L.

In the lower travelling body 101 according to the modification shown in FIG 36, each of the plurality of coupling members 11R, 12R, 11L, 12L is configured to be capable of shifting between the overhanging state indicated by a solid line in FIG 36 and the approaching position indicated by a two-dot chain line in FIG 36, as in the case of the lower travelling body 101 according to the embodiment shown in FIG 26, etc.

### [Structure of Lower Travelling Body According to Fifth Embodiment not covered by the Invention]

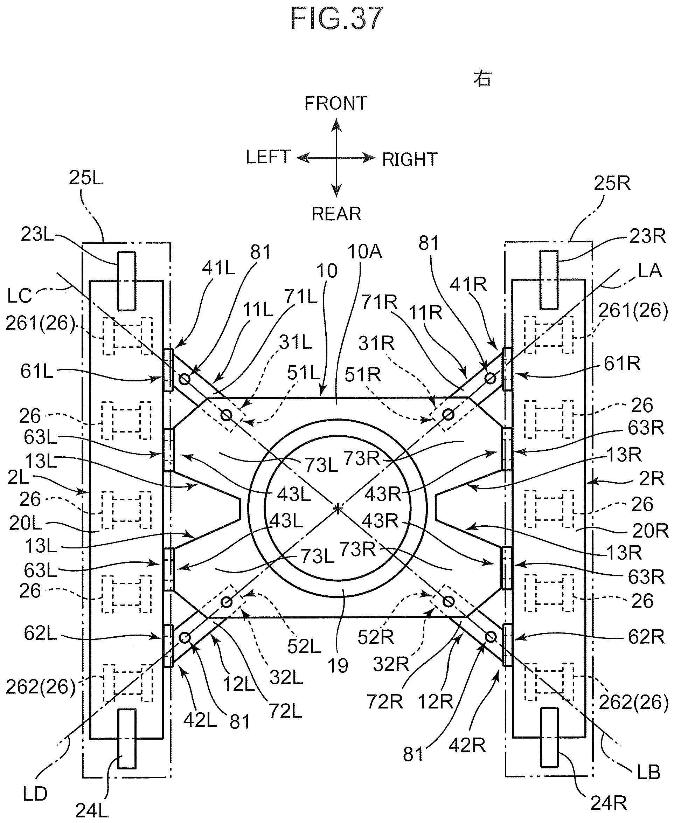

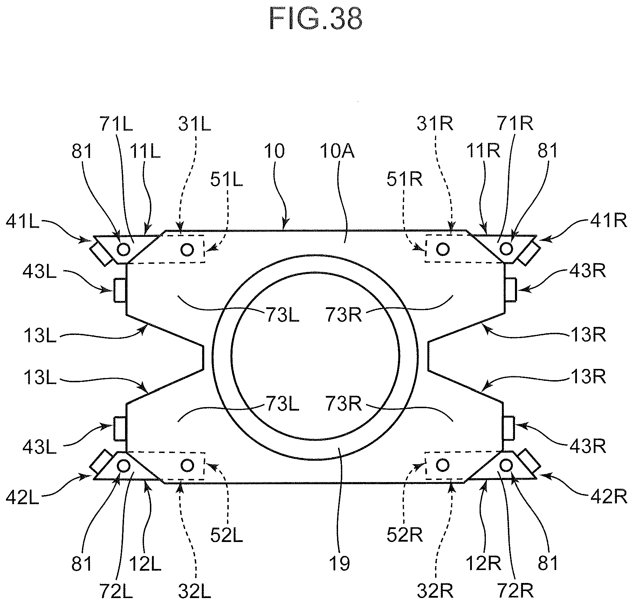

FIG 37 is a plan view of a lower travelling body 101 according to a second embodiment. FIG 38 is a plan view of the car body 10 and the plurality of coupling members 11R, 12R, 11L, and 12L of the lower travelling body 101 according to the second embodiment. The lower travelling body 101 according to the second embodiment is different from the lower travelling body 101 according to the first embodiment in the following three major differences (1) and (2).
(1) According to the second embodiment, at the plurality of coupling members 11R, 12R, 11L, and 12L, the car body connection portions 31R, 32R, 31L, and 32L serve as the rotatable connection portions, the crawler connection portions 41R, 42R, 41L, and 42L serve as the attachable/detachable connection portions, the car body 10 serves as the rotating-on member, and each of the right crawler frame 2R and the left crawler frame 2L serves as the attached-to/detached-from member.
(2) According to the second embodiment, each of the plurality of coupling members 11R, 12R, 11L, and 12L is configured such that in assembling work of assembling the lower travelling body 101 and disassembling work of disassembling the lower travelling body 101, each of the plurality of coupling members 11R, 12R, 11L, and 12L is set at the overhanging position and functions as a lift member (translifter) that lifts the car body 10.

The lower travelling body 101 according to the fifth embodiment is similar in configuration to the lower travelling body 101 according to the first embodiment, except for the above two differences (1) and (2). The same reference signs as used in the first embodiment, therefore, will be used in the second embodiment and detailed description thereof will be omitted.

The difference (1) will first be described.

In the lower travelling body 101 according to the fifth embodiment, each of the plurality of coupling members 11R, 12R, 11L, and 12L is configured such that it rotates around a rotation center axis CB on the car body connection portion to be able to shift between the overhanging state, in which each coupling member is set at the overhanging position shown in FIG 37, and the approaching state, in which each coupling member is set at the approaching position shown in FIG 38. This will be described specifically as follows.

The car body connection portion 31R of the right front coupling member 11R is rotatably connected to the right front connected portion 51R of the car body 10, and the crawler connection portion 41R of the right front coupling member 11R is detachably connected to the right front connected portion 61R of the right crawler frame 2R. The right front coupling member 11R is configured such that the right front coupling member 11R rotates on the car body connection portion 31R (rotatable connection portion) as the crawler connection portion 41R (attachable/detachable connection portion) is detached from the right crawler frame 2R (attached-to/detached-from member), thereby being set at the approaching position at which the crawler connection portion 41R is located closer to the car body 10 (rotating-on member) than is at the overhanging position.

The car body connection portion 32R of the right rear coupling member 12R is rotatably connected to the right rear connected portion 52R of the car body 10, and the crawler connection portion 42R of the right rear coupling member 12R is detachably connected to the right rear connected portion 62R of the right crawler frame 2R. The right rear coupling member 12R is configured such that the right rear coupling member 12R rotates on the car body connection portion 32R (rotatable connection portion) as the crawler connection portion 42R (attachable/detachable connection portion) is detached from the right crawler frame 2R (attached-to/detached-from member), thereby being set at the approaching position at which the crawler connection portion 42R is located closer to the car body 10 (rotating-on member) than is at the overhanging position.

The car body connection portion 31L of the left front coupling member 11L is rotatably connected to the left front connected portion 51L of the car body 10, and the crawler connection portion 41L of the left front coupling member 11L is detachably connected to the left front connected portion 61L of the left crawler frame 2L. The left front coupling member 11L is configured such that the left front coupling member 11L rotates on the car body connection portion 31L (rotatable connection portion) as the crawler connection portion 41L (attachable/detachable connection portion) is detached from the left crawler frame 2L (attached-to/detached-from member), thereby being set at the approaching position at which the crawler connection portion 41L is located closer to the car body 10 (rotating-on member) than is at the overhanging position.

The car body connection portion 32L of the left rear coupling member 12L is rotatably connected to the left rear connected portion 52L of the car body 10, and the crawler connection portion 42L of the left rear coupling member 12L is detachably connected to the left rear connected portion 62L of the left crawler frame 2L. The left rear coupling member 12L is configured such that the left rear coupling member 12L rotates on the car body connection portion 32L (rotatable connection portion) as the crawler connection portion 42L (attachable/detachable connection portion) is detached from the left crawler frame 2L (attached-to/detached-from member), thereby being set at the approaching position at which the crawler connection portion 42L is located closer to the car body 10 (rotating-on member) than is at the overhanging position.

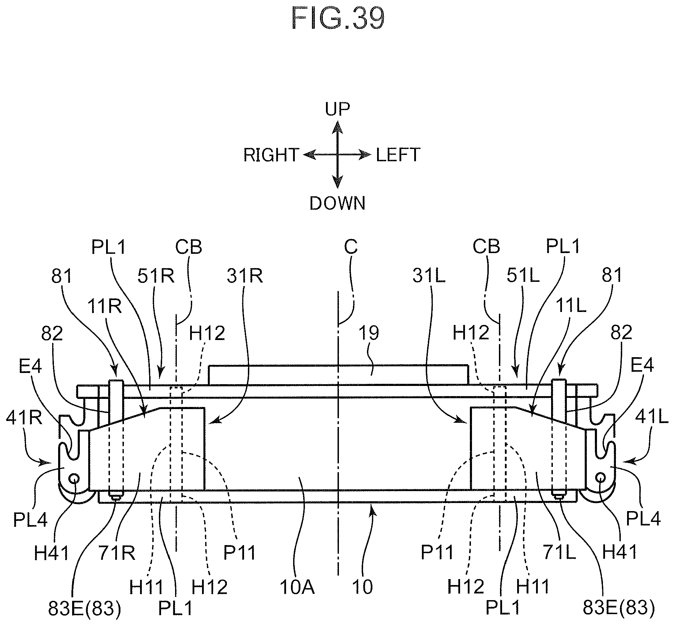

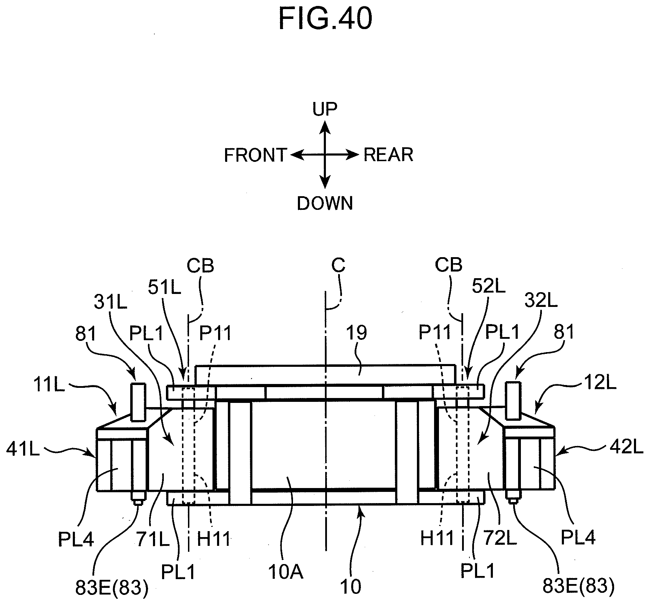

FIG 39 is a front view of the car body 10, the right front coupling member 11R, and the left front coupling member 11L of the lower travelling body 101 according to the fifth embodiment. FIG 40 is a left side view of the car body 10, the left front coupling member 11L, and the left rear coupling member 12L of the lower travelling body 101 according to the fifth embodiment.

A connection structure of each of the car body connection portions 31R, 32R, 31L, and 32L of the plurality of coupling members 11R, 12R, 11L, and 12L and the car body 10 can be adopted as, for example, the structure similar to the connection structure having been described with reference to FIGS. 30 and 31. Specifically, each of the car body connection portions of the plurality of coupling members 11R, 12R, 11L, and 12L according to the fifth embodiment shown in FIGS. 37, 39, and 40 may have the same structure as the structure of the crawler connection portion 42L according to the fourth embodiment shown in FIGS. 30 and 31, and each of the connected portions 51R, 52R, 51L, and 52L of the car body 10 according to the fifth embodiment may have the same structure as the structure of the connected portion 62L according to the fourth embodiment shown in FIGS. 30 and 31. Specifically, as shown in FIGS. 39 and 40, each of the car body connection portions 31R, 32R, 31L, and 32L of the plurality of coupling members 11R, 12R, 11L, and 12L according to the fifth embodiment may have a pin insertion hole H11 vertically penetrating the car body connection portion, and each of the connected portions 51R, 52R, 51L, and 52L of the car body 10 may have a pair of projection pieces PL1 and the projection pieces PL1 may each have a pin insertion hole H12 corresponding in position to the pin insertion hole H11 of the car body connection portion.

A connection structure of each of the crawler connection portions 41R and 42R of the right front coupling member 11R and right rear coupling member 12R and the right crawler frame 2R and a connection structure of each of the crawler connection portions 41L and 42L of the left front coupling member 11L and left rear coupling member 12L and the left crawler frame 2L can each be adopted as, for example, the structure similar to the connection structure having been described with reference to FIGS. 34 and 35. In other words, the crawler connection portion of each of the plurality of coupling members 11R, 12R, 11L, and 12L according to the second embodiment shown in FIGS. 37, 39, and 40 may have the same structure as the left middle connection portion 43L according to the first embodiment shown in FIGS. 34 and 35, and each of the connected portions 61R, 62R, 61L, and 62L of the left and right crawler frames 2R and 2L according to the second embodiment may have the same structure as the structure of the connected portion 63L according to the first embodiment shown in FIGS. 34 and 35. Specifically, as shown in FIGS. 39 and 40, each of the crawler connection portions 41R, 42R, 41L, and 42L of the plurality of coupling members 11R, 12R, 11L, and 12L according to the second embodiment may have a projection piece PL4, and the projection piece PL4 may have a pin insertion hole H41 and an engaged portion E4. Each of the connected portions 61R, 62R, 61L, and 62L of the left and right crawler frames 2R and 2L according to the second embodiment may have, although not illustrated, a pair of projection pieces PL5 and a bar-like engaging portion E3 disposed in such a way as to bridge the projection pieces PL5 and be supported by the projection pieces PL5, the projection pieces PL5 and bar-like engaging portion E3 being shown in FIGS. 34 and 35.

The difference (2) will then be described.

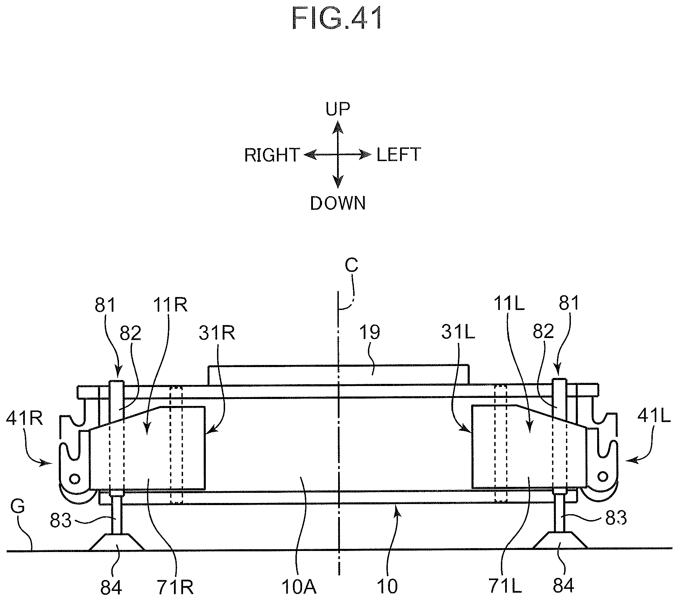

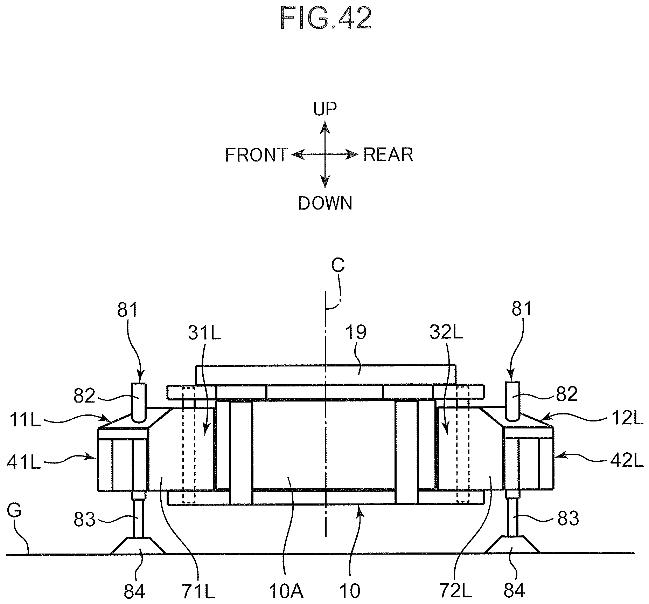

FIG 41 is a front view of the car body 10, the right front coupling member 11R, the left front coupling member 11L of the lower travelling body 101 according to the fifth embodiment. FIG 42 is a left side view of the car body 10, the left front coupling member 11L, the left rear coupling member 12L of the lower travelling body 101 according to the fifth embodiment. FIGS. 41 and 42 show a state in which in assembling/disassembling work of the lower travelling body 101, each of the plurality of coupling members 11R, 12R, 11 L, and 12L is set at the overhanging position and is used as a lift member (translifter) for lifting the car body 10. This advantage will be described specifically as follows.

As shown in FIGS. 41 and 42, the right front coupling member 11R includes the car body connection portion 31R, the crawler connection portion 41R, the coupling member body 71R that couples these connection portions 31R and 41R, and a leg 81 supported by the coupling member body 71R. Similarly, the left front coupling member 11L includes the car body connection portion 31L, the crawler connection portion 41L, the coupling member body 71L that couples these connection portions 31L and 41L, and a leg 81 supported by the coupling member body 71L, and the left rear coupling member 12L includes the car body connection portion 32L, the crawler connection portion 42L, the coupling member body 72L that couples these connection portions 32L and 42L, and a leg 81 supported by the coupling member body 72L. The right front coupling member 11R includes, although not illustrated in detail, the car body connection portion 31R, the crawler connection portion 41R, the coupling member body 71R that couples these connection portions 31R and 41R, and the leg 81 supported by the coupling member body 71R.

Each leg 81 is configured to be capable of shifting between a separated position shown in FIGS. 39 and 40 at which the leg 81 is separated away from the ground G and a contact position shown in FIGS. 41 and 42 at which the leg 81 extends downward from the coupling member body 71R to be in contact with the ground G Each leg 81 is configured by a hydraulic cylinder including a cylinder body 82 fixed to the corresponding coupling member body and extending vertically, a rod 83 capable of sliding vertically relative to the cylinder body 82, and a lower end part 84 detachably connected to a lower end 83E (see FIGS. 39 and 40) of the rod 83.

The lower end part 84 of the leg 81 has a lower surface with an outer diameter larger than the outer diameter of the rod 83, and is provided to increase an area of contact with the ground G When each of the plurality of coupling members 11R, 12R, 11 L, and 12L is used as the lift member (translifter) in assembling/disassembling work of the lower travelling body 101, the lower end part 84 is attached to the lower end 83E of the rod 83, as shown in FIGS. 41 and 42. When each of the plurality of coupling members 11R, 12R, 11 L, and 12L is used as a load transmission member in crane work and when the mobile crane 100 is transported, the lower end part 84 is detached from the lower end 83E of the rod 83, as shown in FIGS. 39 and 40.

In the fifth embodiment, the car body 10 includes a plurality of right axles that couple the car body main part 10A to the right crawler frame 2R on the rear side relative to the right front coupling member 11R and on the front side relative to the right rear coupling member 12R, and a plurality of left axles that couple the car body main part 10A to the left crawler frame 2L on the rear side relative to the left front coupling member 11L and on the front side relative to the left rear coupling member 12L.

Specifically, as shown in FIGS. 37 and 38, the car body 10 includes two right axles 13R and two left axles 13L. One of the two right axles 13R extends from the car body main part 10A to the right crawler frame 2R on the front side relative to the slewing center axis C. The other of the two right axles 13R extends from the car body main part 10A to the right crawler frame 2R on the rear side relative to the slewing center axis C. One of the two left axles 13L extends from the car body main part 10A to the left crawler frame 2L on the front side relative to the slewing center axis C. The other of the two left axles 13L extends from the car body main part 10A to the left crawler frame 2L on the rear side relative to the slewing center axis C.

The right crawler frame 2R includes two right middle connected portions 63R, and the left crawler frame 2L includes two left middle connected portions 63L.

Each of the two right axles 13R includes a right middle connection portion 43R detachably connected to the corresponding right middle connected portion 63R that is one of the two right middle connected portions 63R of the right crawler frame 2R, and an axle body 73R that couples the right middle connection portion 43R to the car body main part 10A. The right middle connection portion 43R makes up a leading end of the right axle 13R. The axle body 73R is a part having a shape extending rightward from the car body main part 10A, and makes up most of the right axle 13R.

Each of the two left axles 13L includes a left middle connection portion 43L detachably connected to the corresponding left middle connected portion 63L that is one of the two left middle connected portions 63L of the left crawler frame 2L, and an axle body 73L that couples the left middle connection portion 43L to the car body main part 10A. The left middle connection portion 43L makes up a leading end of the left axle 13L. The axle body 73L is a part having a shape extending leftward from the car body main part 10A, and makes up most of the left axle 13L.

In the fifth embodiment, a connection structure of the right middle connection portion 43R of each right axle 13R and the right middle connected portion 63R of the right crawler frame 2R and a connection structure of the left middle connection portion 43L of each left axle 13L and the left middle connected portion 63L of the left crawler frame 2L are each similar to the connection structure according to the first embodiment having been described with reference to FIGS. 34 and 35, and therefore will not be described in detail.

In the lower travelling body 101 according to the fifth embodiment, the car body 10 includes two right middle connection portions 43R and two left middle connection portions 43L. The car body 10, however, may include one right middle connection portion 43R and one left middle connection portion 43L only.

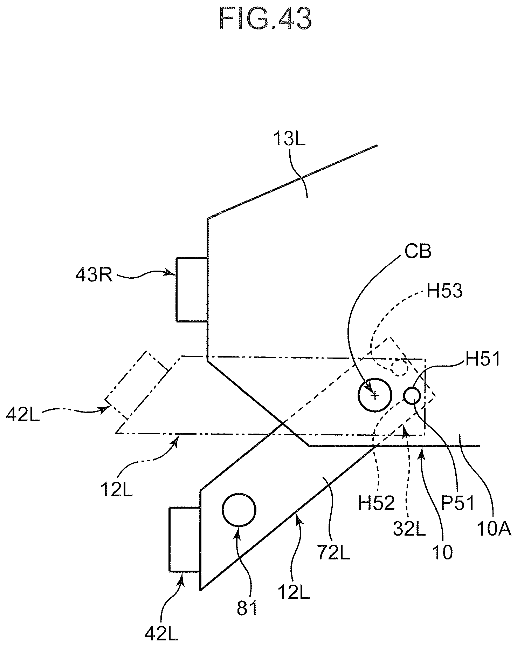

The lower travelling body 101 according to the fifth embodiment further includes a plurality of fixing members P51 for fixing the plurality of coupling members 11R, 12R, 11L, and 12L, respectively, to the overhanging position or to the approaching position. FIG 43 is a plan view of a magnified version of the car body 10 and the left rear coupling member 12L of the lower travelling body 101 according to the second embodiment. FIG 43 shows a structure for fixing the left rear coupling member 12L to each of the overhanging position and the approaching position. The other coupling members 11R, 12R, and 11L each have the same structure as the structure shown in FIG 43.

In the fifth embodiment, each fixing member P51 functions both as an overhanging position fixing member and an approaching position fixing member, as the fixing member P21 in the first embodiment does. The overhanging position fixing member is a member that temporarily fixes the coupling member to the overhanging position, and the approaching position fixing member is a member that temporarily fixes the coupling member to the approaching position. However, the overhanging position fixing member and the approaching position fixing member may be formed of a different member.

In the fifth embodiment, the fixing member P21 is configured by a pin. As the left rear coupling member 12L is set at the overhanging position indicated by a solid line in FIG 43, the fixing member P51 is inserted into a pin insertion hole H51 formed on the car body 10 and into a pin insertion hole H52 formed on the left rear coupling member 12L. This prevents the left rear coupling member 12L from rotating relative to the car body 10, thus fixing the left rear coupling member 12L to the overhanging position. When the fixing member P51 is removed from the pin insertion holes H51 and H52, the left rear coupling member 12L is allowed to rotate relative to the car body 10.

As the left rear coupling member 12L is set at the approaching position indicated by a two-dot chain line in FIG. 43, the fixing member P51 is inserted into the pin insertion hole H51 of the car body 10 and into a pin insertion hole H53 formed on the left rear coupling member 12L. This prevents the left rear coupling member 12L from rotating relative to the car body 10, thus fixing the left rear coupling member 12L to the approaching position. When the fixing member P51 is removed from the pin insertion holes H51 and H53, the left rear coupling member 12L is allowed to rotate relative to the car body 10. It should be noted that the two pin insertion holes H52 and H53 lie on the same arc of a circle around a rotation center axis C2 in plan view.

### [Modification of fifth Embodiment not covered by the Invention]

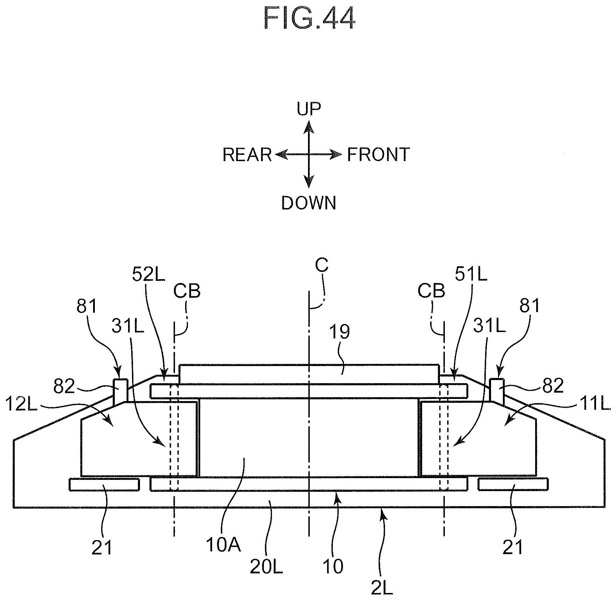

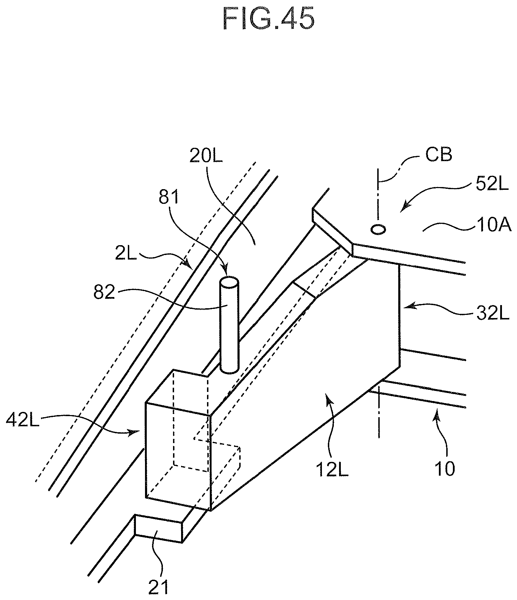

FIG 44 is a sectional view of a lower travelling body 101 according to a modification of the fifth embodiment. FIG 45 is a perspective view of the car body, the coupling member, and the crawler frame of the lower travelling body according to the modification of the fifth embodiment. The sectional view of FIG 44 shows a section of the lower travelling body 101 that is taken along a vertical plane including the slewing center axis C and parallel to the front-to-rear direction.

In the modification shown in FIGS. 44 and 45, a connection structure in which the right crawler connection portions 41R and 42R of the coupling members 11R and 12R are connected to the connected portions of the crawler frame 2R and a connection structure in which the crawler connection portions 41L and 42L of the coupling members 11L and 12L are connected to the connected portions of the left crawler frame 2L are each different from the connection structure according to the second embodiment shown in FIGS. 39 and 40. This will be described specifically as follows.

The fifth embodiment that is shown in FIGS. 39 and 40 provides the structure in which the crawler connection portion of each coupling member is connected to the connected portion of the crawler frame, using a pin. In the modification shown in FIGS. 44 and 45, in contrast, the crawler connection portion of each coupling member is connected to the connected portion of the crawler frame without using a pin. Since the four coupling members 11R, 12R, 11L, and 12L are similar in connection structure, FIGS. 44 and 45 schematically show only the structure in which the crawler connection portion 42L of the left rear coupling member 12L is connected to the connected portion 21 of the left crawler frame 2L.

In the modification shown in FIGS. 44 and 45, the crawler connection portion 42L of the left rear coupling member 12L and the connected portion 21 of the left crawler frame 2L may be connected by, for example, fitting one of the crawler connection portion 42L of the left rear coupling member 12L and the connected portion 21 of the left crawler frame 2L into the other of the same. Specifically, it may be configured that, for example, the connected portion 21 of the left crawler frame 2L may have a recess corresponding in shape to the crawler connection portion 42L of the left rear coupling member 12L and that crawler connection portion 42L may be fitted into the recess. Alternatively, a float attached to a lower end of the rod of the leg 81 (a lower end part of the leg) of the left rear coupling member 12L may be of a structure that is fitted in the recess formed on the connected portion 21 of the left crawler frame 2L. Alternatively, the lower end of the rod, from which lower end the float is detached (e.g., the lower end having a spherical surface), may be of a structure that is fitted in the recess formed on the connected portion 21 of the left crawler frame 2L. The structure in which the crawler connection portion of each coupling member is connected to the connected portion of the crawler frame without using the pin, however, is not limited to the above specific examples.

The invention is not limited to the embodiments described above. The invention includes, for example, the following modes.

### (A) Rotatable Connection Portion and Attachable/Detachable Connection Portion

In the fourth embodiment, the four car body connection portions of the four coupling members are all attachable/detachable connection portions, and the four crawler connection portions of the four coupling members are all rotatable connection portions. In the fifth embodiment, the four car body connection portions of the four coupling members are all rotatable connection portions, and the four crawler connection portions of the four coupling members are all attachable/detachable connection portions. The rotatable connection portions and the attachable/detachable connection portions are, however, not limited to these forms. For example, the four attachable/detachable connection portions may be made up of a combination of the car body connection portions and the crawler connection portions, and the four rotatable connection portions may be made up of a combination of the car body connection portions and the crawler connection portions.

### (B) Right Front Straight Line, Right Rear Straight line, Left Front Straight Line, and Left Rear Straight Line

In the fourth and fifth embodiments, the plurality of coupling members are configured such that in plan view, the right front straight line LA passes through the right front end roller 261, the right rear straight line LB passes through the right rear end roller 262, the left front straight line LC passes through the left front end roller 261, and the left rear straight line LD passes through the left rear end roller 262. The coupling members are, however, not limited to this form. The right front straight line LA may pass through a point on the front side or the rear side relative to the right front end roller 261, the right rear straight line LB may pass through a point on the rear side or the front side relative to the right rear end roller 262, the left front straight line LC may pass through a point on the front side or the rear side relative to the left front end roller 261, and the left rear straight line LD may pass through a point on the rear side or the front side relative to the left rear end roller 262.

In the above further embodiments, the right front straight line LA is defined as a straight line that, in plan view, connects a point on the rotation center axis of the right front end roller 261 and at the center in the width direction (left-to-right direction) of the right front end roller 261 to the slewing center axis C, and the right rear straight line LB, the left front straight line LC, and the left rear straight line LD are also defined in a similar manner. These straight lines are, however, not limited to these forms. The right front straight line LA may be, for example, a straight line that, in plan view, connects the slewing center axis C to any pre-chosen part of the right front end roller 261. Any pre-chosen part of the right front end roller 261 is, for example, a part of right front end roller 261 that is, in plan view, at the rear end and right end of the right front end roller 261. Likewise, the right rear straight line LB may be a straight line that, in plan view, connects the slewing center axis C to any pre-chosen part of the right rear end roller 262, the left front straight line LC may be a straight line that, in plan view, connects the slewing center axis C to any pre-chosen part of the left front end roller 261, and the left rear straight line LD may be a straight line that, in plan view, connects the slewing center axis C to any pre-chosen part of the left rear end roller 262.

### (C) Right Axle and Left Axle

The car body 10 according to the fourth embodiment includes the right axle 13R and the left axle 13L. However, in a case where the plurality of coupling members 11R, 12R, 11L, and 12L have rigidity that allows the coupling members to support the car body 10, the right axle 13R and the left axle 13L may be dispensed with.

Likewise, the car body 10 according to the fifth embodiment includes the pair of right axles 13R and the pair of left axles 13L. However, in a case where the plurality of coupling members 11R, 12R, 11L, and 12L have rigidity that allows the coupling members to support the car body 10, at least one of the pair of right axles 13R and at least one of the left axles 13L may be dispensed with.

### (D) Direction of Cargo-to-be-Lifted Hung on Upper Slewing Body

In the further embodiments, deformation of each crawler frame can be suppressed when the cargo-to-be-lifted is hung from the upper slewing body as the cargo-to-be-lifted is located on the front side or the rear side relative to the lower travelling body. However, the further embodiments may be applied also to a case where the cargo-to-be-lifted is hung from the upper slewing body as the cargo-to-be-lifted is located on the left side or the right side relative to the lower travelling body.

### (E) Crane Specifications

The crane according to the further embodiments shown in FIG24 includes neither a jib nor a strut, but specifications of the crane is not limited to the specifications shown in FIG 24. The crane according to further embodiments may be a luffing crane including a jib, a front strut, and a rear strut, or may be a crane of a fixed jib type that includes a jib and one strut. The crane according to the further embodiments may be a crane (e.g., a large crane) equipped with a mast instead of a gantry.

### [Problem to be Solved by further embodiments]

In the lower travelling body having a structure in which a front axle and a rear axle extending in parallel to the left-to-right direction from the car body couple the car body to the left and right crawler frames, rigidity in the front-to-rear direction is lower than rigidity in the left-to-right direction. For this reason, in lifting work (crane work) by the mobile crane, when the cargo-to-be-lifted is hung from the upper slewing body on the front side or rear side relative to the lower travelling body, via the lifting rope of the work device, an amount of downward shift of the front part or the rear part of the car body tends to become larger than an amount of downward shift of the right part or the left part of the car body that results when the cargo-to-be-lifted is hung from the upper slewing body on the left side or right side relative to the lower travelling body.

Specifically, when the cargo-to-be-lifted is hung from the upper slewing body on the front side or the rear side relative to the lower travelling body, because of a load applied from the upper slewing body to the car body, torsional deformation, warping deformation, or the like develops at the front and rear axles and deformation develops at the car body as well. The front part or the rear part of the car body is thus likely to shift in position downward. In addition, following the deformation of the front and rear axles, the left and right crawler frames too are likely to deform. As a result, a degree of deformation that develops at the lower travelling body as a result of a change in a slewing position of the upper slewing body varies, and this variation in degree of deformation causes the position of the cargo-to-be-lifted to change vertically, which may result in the lower workability of lifting work. It is thus desirable that by improving the rigidity in the front-to-rear direction of the lower travelling body, deformation developing at the lower travelling body be reduced when the cargo-to-be-lifted is hung from the upper slewing body on the front side or the rear side relative to the lower travelling body.

Patent Literature 2 discloses a technique by which, to improve respective rigidities of a front and rear parts of a car body, a front part and a rear part in the trunk of the car body are provided with a pair of reinforcing members, respectively. However, because various members, such as a slewing motor, a gear, hydraulic piping, and electric wiring, for turning the upper slewing body are disposed around the trunk of the car body provided with the pair of reinforcing members, a sufficient space for disposing the pair of reinforcing members may not be secured. In such a case, an effect of suppressing the deformation of the car body by the pair of reinforcing members is limited.

In addition, when a measure to improve the rigidity in the front-to-rear direction of the lower travelling body is taken, it is necessary to suppress a drop in the workability of disassembling work, by which the lower travelling body is disassembled to transport the mobile crane, and of assembling work, by which the lower travelling body is assembled after transportation of the mobile crane, and is further necessary to suppress an increase in dimensions of a component making up the lower travelling body so that the dimensions of the component are kept within transportation limit dimensions required at transportation.

An object of the further embodiments is to provide a lower travelling body of a mobile crane which lower travelling body can suppress a drop in the workability of disassembly work and assembly work of the lower travelling body and can reduce deformation the lower travelling body develops when a cargo-to-be-lifted is hung from an upper slewing body on the front side or the rear side relative to the lower travelling body while suppressing an increase in dimensions of a component making up the lower travelling body.

The lower travelling body of the mobile crane according to the further embodiments includes: a car body that supports the upper slewing body of the mobile crane in such a way as to allow the upper slewing body to rotate around a slewing center axis; a right crawler frame that extends in a front-to-rear direction on the right side relative to the car body; a left crawler frame that extends in the front-to-rear direction on the left side relative to the car body; and a plurality of coupling members. The plurality of coupling members include: a right front coupling member having a car body connection portion connected to the car body and a crawler connection portion connected to the right crawler frame, the right front coupling member coupling the car body to the right crawler frame at an overhanging position at which the crawler connection portion is located on the diagonally rightward front side relative to the car body connection portion; a right rear coupling member having a car body connection portion connected to the car body and a crawler connection portion connected to the right crawler frame, the right rear coupling member coupling the car body to the right crawler frame at an overhanging position at which the crawler connection portion of the right rear coupling member is located on the diagonally rightward rear side relative to the car body connection portion of the right rear coupling member; a left front coupling member having a car body connection portion connected to the car body and a crawler connection portion connected to the left crawler frame, the left front coupling member coupling the car body to the left crawler frame at an overhanging position at which the crawler connection portion of the left front coupling member is located on the diagonally leftward front side relative to the car body connection portion of the left front coupling member; and a left rear coupling member having a car body connection portion connected to the car body and a crawler connection portion connected to the left crawler frame, the left rear coupling member coupling the car body to the left crawler frame at an overhanging position at which the crawler connection portion of the left rear coupling member is located on the diagonally leftward rear side relative to the car body connection portion of the left rear coupling member. In each of the plurality of coupling members, one of the car body connection portion and the crawler connection portion is a rotatable connection portion, and the other of the car body connection portion and the crawler connection portion is an attachable/detachable connection portion. The rotatable connection portion is rotatably connected to a rotating-on member which is a member to which the rotatable connection portion is connected, the member being one of the car body, the right crawler frame, and the left crawler frame. The attachable/detachable connection portion is detachably connected to an attached-to/detached-from member to which the attachable/detachable connection portion is connected, the member being one of the car body, the right crawler frame, and the left crawler frame. Each of the plurality of coupling members is configured such that it rotates on the rotatable connection portion as the attachable/detachable connection portion is detached from the attached-to/detached-from member, thereby being set at an approaching position at which the attachable/detachable connection portion is located closer to the rotating-on member than being set at the overhanging position.

In the lower travelling body, a structure in which one of the car body connection portion and the crawler connection portion is the above rotatable connection portion while the other of the same is the above attachable/detachable connection portion is adopted at each of the plurality of coupling members, and each coupling member is configured such that it can be set at the overhanging position during crane work and can be set at the approaching position during transportation of the mobile crane. This allows simultaneously achieving these effects: suppressing a drop in the workability of disassembling work and assembling work of the lower travelling body, suppressing an increase in dimensions of a component making up the lower travelling body, and reducing deformation the lower travelling body develops when a cargo-to-be-lifted is hung from the upper slewing body on the front side or the rear side relative to the lower travelling body. This will be described specifically as follows.

In crane work, the right front coupling member set at the overhanging position can receive a front load on the car body connection portion of the right front coupling member, the front load being a load that the car body receives from the upper slewing body when the cargo-to-be-lifted is hung on the upper slewing body on the front side relative to the lower travelling body, and can transmit the front load to the right crawler frame via the crawler connection portion located on the diagonally rightward front side relative to the car body connection portion. In the same manner, the left front coupling member can receive the front load on the car body connection portion of the left front coupling member, and can transmit the front load to the left crawler frame via the crawler connection portion located on the diagonally leftward front side relative to the car body connection portion. In other words, the right front coupling member and the left front coupling member can support the car body on the front side relative to the car body connection portion, which is a portion that receives the front load from the car body. As a result, development of torsional deformation is suppressed at the right front coupling member and the left front coupling member, and therefore a downward shift in position of a front part of the car body is suppressed effectively. Suppressing development of torsional deformation at the right front coupling member and the left front coupling member results in suppression of deformation of the left and right crawler frames. Deformation the lower travelling body develops when the cargo-to-be-lifted is hung from the upper slewing body on the front side relative to the lower travelling body, therefore, can be reduced. Deformation the lower travelling body develops when the cargo-to-be-lifted is hung from the upper slewing body on the rear side relative to the lower travelling body can also be reduced for the same reasons as described above.

In addition, when executing disassembling work of the lower travelling body, at each of the plurality of coupling members, the operator detaches one connection portion (attachable/detachable connection portion) from the attached-to/detached-from member, the one connection portion being one of the car body connection portion and the crawler connection portion, but does not have to detach the other connection portion (rotatable connection portion) from the rotating-on member, the other connection portion being the other of the car body connection portion and the crawler connection portion. In other words, after detaching the attachable/detachable connection portion from the attached-to/detached-from member at each of the plurality of coupling members, the operator causes each of the plurality of coupling members to rotate on the rotatable connection portion, thus allowing each of the plurality of coupling members to shift from the overhanging position to the approaching position. Hence a drop in the workability of disassembling work is suppressed, and an increase in dimensions of a component making up the lower travelling body is suppressed as well. In assembling work of the lower travelling body, the operator causes each of the plurality of coupling members to rotate on the rotatable connection portion to shift each of the plurality of coupling members in position from the approaching position to the overhanging position, and then, at each of the plurality of coupling members, attaches one connection portion (attachable/detachable connection portion) to the attached-to/detached-from member, the one connection portion being one of the car body connection portion and the crawler connection portion, thus being able to couple the car body to the left and right crawler frames. A drop in the workability of assembling work is, therefore, suppressed as well.

In the lower travelling body of the mobile crane according to the further embodiments, it is preferable that at least one coupling member out of the plurality of coupling members be configured such that at least either in assembling work of assembling the lower travelling body or disassembling work of disassembling the lower travelling body, the one coupling member can be set at the overhanging position and be used as a lift member for lifting the car body.

In this mode, the at least one coupling member functions also as the lift member (translifter). In other words, the coupling member functions as a load transmission member that transmits a load to the crawler frame in crane work, and functions also as the lift member at least in either assembling work or disassembling work of the lower travelling body. The coupling member is set at the overhanging position in both the case of functioning as the load transmission member and the case of functioning as the lift member. Each of assembling work, disassembling work, and crane work, therefore, can be carried out as the coupling member is set at the same position (the overhanging position). This makes transition from assembling work to crane work smooth, makes transition from crane work to disassembling work smooth as well, and, in addition to that, suppresses an increase in the number of components that results when the lift member is additionally provided as a separate member to the coupling member.

Specifically, it is preferable that the at least one coupling member further include a coupling member body that couples the car body connection portion to the crawler connection portion, and a leg supported by the coupling member body, and that the leg be configured to be capable of shifting between a separated position, at which the leg is separated away from the ground, and a contact position, at which the leg extends downward from the coupling member body to be in contact with the ground.

In this mode, causing the leg to shift between the separated position and the contact position allows transition from assembling work to crane work and transition from crane work to disassembling work.

It is preferable that the lower travelling body of the mobile crane according to the further embodiments further include a plurality of overhanging position fixing members that fix the plurality of coupling members respectively to the overhanging positions.

In this mode, in assembly work of assembling the lower travelling body, an attachable/detachable portion of each coupling member is attached to an attachment/detachment target member corresponding to the attachable/detachable portion as the plurality of coupling members are fixed respectively to the overhanging positions by the plurality of overhanging position fixing members. This improves the workability of assembly work of the lower travelling body.

It is preferable that the lower travelling body of the mobile crane according to the further embodiments further include a plurality of approaching position fixing members that fix the plurality of coupling members respectively to the approaching positions.

In this mode, during transportation of the mobile crane, the plurality of coupling members' each shifting in position relative to the attachment/detachment target member can be prevented.

In the lower travelling body of the mobile crane according to the further embodiments, it is preferable that the car body includes at least one right middle connection portion that is connected to the right crawler frame on the rear side relative to the right front coupling member and on the front side relative to the right rear coupling member, and at least one left middle connection portion that is connected to the left crawler frame on the rear side relative to the left front coupling member and on the front side relative to the left rear coupling member.

In this mode, the right front coupling member and the right rear coupling member couple the car body to the right crawler frame and in addition to that, the right middle connection portion of the car body is connected to the right crawler frame between these coupling members. As a result, deformation of a middle part of the right crawler frame, the middle part being a part between a part to which the right front coupling member is connected and a part to which the right rear coupling member is connected, is suppressed. In the same manner, the left front coupling member and the left rear coupling member couple the car body to the left crawler frame and in addition to that, the left middle connection portion of the car body is connected to the left crawler frame between these coupling members. As a result, deformation of a middle part of the left crawler frame, the middle part being a part between a part to which the left front coupling member is connected and a part to which the left rear coupling member is connected, is suppressed. In this mode, the loads of the upper slewing body and the cargo-to-be-lifted are not only transmitted to the left and right crawler frames via the plurality of coupling members but are also distributed to the right middle connection portion and the left middle connection portion and are finally transmitted to the left and right crawler frames. The plurality of coupling members, therefore, can be configured by relatively simple members.

It is preferable that the lower travelling body of the mobile crane according to the further embodiments further include: a pair of right wheels rotatably supported respectively on a front end part and a rear end part of the right crawler frame; a pair of left wheels rotatably supported respectively on a front end part and a rear end part of the left crawler frame; a plurality of right rollers spaced between the pair of right wheels in the front-to-rear direction and rotatably supported on a lower part of the right crawler frame, the plurality of right rollers including a right front end roller located at the head of the right rollers and a right rear end roller located at the tail of the right rollers; and a plurality of left rollers spaced between the pair of left wheels in the front-to-rear direction and rotatably supported on a lower part of the left crawler frame, the plurality of left rollers including a left front end roller located at the head of the left rollers and a left rear end roller located at the tail of the left rollers, that the right front coupling member include a right front load receiving surface counter to the car body and a right front load transmission surface counter to the right crawler frame, that the left front coupling member include a left front load receiving surface counter to the car body and a left front load transmission surface counter to the left crawler frame, that each of the right front load receiving surface of the right front coupling member and the left front load receiving surface of the left front coupling member be a surface capable of receiving a front load from the car body, the front load being a load that the car body receives from the upper slewing body when a cargo-to-be-lifted is hung from the upper slewing body on the front side relative to the lower travelling body, the right front load transmission surface be a surface capable of transmitting the front load to the right crawler frame, and the left front load transmission surface be a surface capable of transmitting the front load to the left crawler frame, that the right front coupling member be configured such that in plan view, a right front straight line, which is a straight line passing through any point included in the right front load receiving surface and through any point included in the right front load transmission surface, passes through the right front end roller or a point on the front side relative to the right front end roller, and that the left front coupling member be configured such that in plan view, a left front straight line, which is a straight line passing through any point included in the left front load receiving surface and any point included in the left front load transmission surface, passes through the left front end roller or a point on the front side relative to the left front end roller.

Because the right front coupling member and the left front coupling member of the lower travelling body are configured such that the right front straight line and the left front straight line have the above positional relationships respectively with the right front end roller and the left front end roller, the distance in the front-to-rear direction between a part of the right crawler frame to which part the front load is transmitted via the right front coupling member and the front end part of the right crawler frame can be made smaller effectively, and the distance in the front-to-rear direction between a part of the left crawler frame to which part the front load is transmitted via the left front coupling member and the front end part of the left crawler frame can be made smaller effectively. This allows reducing a warp that develops on the front part of each of the left and right crawler frames when the cargo-to-be-lifted is hung on the upper slewing body on the front side relative to the lower travelling body.

According to the further embodiments, the above positional relationship between the right front straight line and the right front end roller is defined as the positional relationship in plan view of the lower travelling body, that is, the positional relationship when the lower travelling body is viewed from directly above in the vertical direction (downward). The right front straight line and the right front end roller, therefore, do not always have to be at the same height in the vertical direction and may be shifted in height from each other in the vertical direction. In other words, the height of the right front straight line and the height of the right front end roller may be the same or may be different from each other. The same applies to the positional relationship between the left front straight line and the left front end roller. This applies also to the positional relationship between the right rear straight line and the right rear end roller, and to the positional relationship between the left rear straight line and the left rear end roller.

In a case where the car body receives a relatively large front load from the upper slewing body, the right front end roller and the left front end roller serve as approximate tipping fulcrums (front tipping fulcrums). It is therefore preferable in this case that the right front straight line be a straight line passing through the right front end roller in plan view, and that the left front straight line be a straight line passing through the left front end roller in plan view.

In this mode, the right front coupling member and the left front coupling member can directly transmit the front load to the parts of left and right crawler frames that correspond to the front tipping fulcrums. This allows further reducing a warp that develops on the front part of each of the left and right crawler frames because of the front load.

It is more preferable that, in plan view, the right front straight line be a straight line passing through the slewing center axis as well and that, in plan view, the left front straight line be a straight line passing through the slewing center axis as well.

In this mode, in plan view, any point on the right front load receiving surface of the right front coupling member and any point on the right front load transmission surface of the right front coupling member can be located on the right front straight line passing through the slewing center axis and the right front end roller, and, in plan view, any point on the left front load receiving surface of the left front coupling member and any point on the left front load transmission surface of the left front coupling member can be located on the left front straight line passing through the slewing center axis and the left front end roller. As a result, a path through which the front load is transmitted to the right crawler frame by the right front coupling member can be brought closer to the direction of heading from the slewing center axis toward the right front end roller, and a path through which the front load is transmitted to the left crawler frame by the left front coupling member can be brought closer to the direction of heading from the slewing center axis toward the left front end roller. The front load is thus efficiently transmitted to the parts of left and right crawler frames that correspond to the front tipping fulcrums.

In the lower travelling body of the mobile crane according to the further embodiments, it is preferable that the right front coupling member include a right front continuous part that in plan view, extends continuously from the right front load receiving surface to the right front load transmission surface along the right front straight line, and that the left front coupling member include a left front continuous part that in plan view, extends continuously from the left front load receiving surface to the left front load transmission surface along the left front straight line.

In this mode, the right front continuous part extends continuously without interruption, in plan view, from the right front load receiving surface to the right front load transmission surface along the right front straight line, and the left front continuous part extends continuously without interruption, in plan view, from the left front load receiving surface to the left front load transmission surface along the left front straight line. The front load received by the right front load receiving surface and the left front load receiving surface is therefore efficiently transmitted continuously to the right front load transmission surface and the left front load transmission surface along the right front continuous part and the left front continuous part, and is then transmitted from these load transmission surfaces to the left and right crawler frames.

In the lower travelling body of the mobile crane according to the further embodiments, it is more preferable that the right rear coupling member include a right rear load receiving surface counter to the car body and a right rear load transmission surface counter to the right crawler frame, that the left rear coupling member include a left rear load receiving surface counter to the car body and a left rear load transmission surface counter to the left crawler frame, that each of the right rear load receiving surface of the right rear coupling member and the left rear load receiving surface of the left rear coupling member be a surface capable of receiving a rear load from the car body, the rear load being a load that the car body receives from the upper slewing body when a cargo-to-be-lifted is hung from the upper slewing body on the rear side relative to the lower travelling body, the right rear load transmission surface be a surface capable of transmitting the rear load to the right crawler frame, and the left rear load transmission surface be a surface capable of transmitting the rear load to the left crawler frame, that the right rear coupling member be configured such that in plan view, a right rear straight line, which is a straight line passing through any point included in the right rear load receiving surface and through any point included in the right rear load transmission surface, passes through the right rear end roller or a point on the rear side relative to the right rear end roller, and that the left rear coupling member be configured such that in plan view, a left rear straight line, which is a straight line passing through any point included in the left rear load receiving surface and any point included in the left rear load transmission surface, passes through the left rear end roller or a point on the rear side relative to the left rear end roller.

Because the right rear coupling member and the left rear coupling member of the lower travelling body are configured such that the right rear straight line and the left rear straight line have the above positional relationships respectively with the right rear end roller and the left rear end roller, the distance in the front-to-rear direction between a part of the right crawler frame to which part the rear load is transmitted via the right rear coupling member and the rear end part of the right crawler frame can be made smaller effectively, and the distance in the front-to-rear direction between a part of the left crawler frame to which part the rear load is transmitted via the left rear coupling member and the rear end part of the left crawler frame can be made smaller effectively. This allows more effectively reducing a warp that develops on the rear part of each of the left and right crawler frames when the cargo-to-be-lifted is hung from the upper slewing body on the rear side relative to the lower travelling body.

In a case where the car body receives a relatively large rear load from the upper slewing body, the right rear end roller and the left rear end roller serve as approximate tipping fulcrums (rear tipping fulcrums). It is therefore preferable in this case that the right rear straight line be a straight line passing through the right rear end roller in plan view, and that the left rear straight line be a straight line passing through the left rear end roller in plan view.

In this mode, the right rear coupling member and the left rear coupling member can directly transmit the rear load to the parts of left and right crawler frames that correspond to the rear tipping fulcrums. This allows further reducing a warp that develops on the rear part of each of the left and right crawler frames because of the rear load.

It is more preferable that, in plan view, the right rear straight line be a straight line passing through the slewing center axis as well and that, in plan view, the left rear straight line be a straight line passing through the slewing center axis as well.

In this mode, in plan view, any point on the right rear load receiving surface of the right rear coupling member and any point on the right rear load transmission surface of the right rear coupling member can be located on the right rear straight line passing through the slewing center axis and the right rear end roller, and, in plan view, any point on the left rear load receiving surface of the left rear coupling member and any point on the left rear load transmission surface of the left rear coupling member can be located on the left rear straight line passing through the slewing center axis and the left rear end roller. As a result, a path through which the rear load is transmitted to the right crawler frame by the right rear coupling member can be brought closer to the direction of heading from the slewing center axis toward the right rear end roller, and a path through which the rear load is transmitted to the left crawler frame by the left rear coupling member can be brought closer to the direction of heading from the slewing center axis toward the left rear end roller. The rear load is thus efficiently transmitted to the parts of left and right crawler frames that correspond to the rear tipping fulcrums.

In the lower travelling body of the mobile crane according to the further embodiments, it is preferable that the right rear coupling member include a right rear continuous part that in plan view, extends continuously from the right rear load receiving surface to the right rear load transmission surface along the right rear straight line, and that the left rear coupling member include a left rear continuous part that in plan view, extends continuously from the left rear load receiving surface to the left rear load transmission surface along the left rear straight line.

In this mode, the right rear continuous part extends continuously without interruption, in plan view, from the right rear load receiving surface to the right rear load transmission surface along the right rear straight line, and the left rear continuous part extends continuously without interruption, in plan view, from the left rear load receiving surface to the left rear load transmission surface along the left rear straight line. The rear load received by the right rear load receiving surface and the left rear load receiving surface is therefore efficiently transmitted continuously to the right rear load transmission surface and the left rear load transmission surface along the right rear continuous part and the left rear continuous part, and is then transmitted from these load transmission surfaces to the left and right crawler frames.

## Claims

1. A lower travelling body (101) of a mobile crane (100), the lower travelling body (101) comprising:
a car body (10) that supports an upper slewing body (102) in such a way as to allow the upper slewing body (102) to rotate around a slewing center axis (C);
a right crawler frame (2R) extending in a front-to-rear direction on a right side relative to the car body (10);
a left crawler frame (2L) extending in the front-to-rear direction on a left side relative to the car body (10); and
a plurality of coupling members (11R, 11L, 12R, 12L), wherein
the plurality of coupling members (11R, 11L, 12R, 12L) include:
a right front coupling member (11R) that couples the car body (10) to the right crawler frame (2R) as the right front coupling member (11R) is disposed on a diagonally rightward front side relative to the car body (10);
a right rear coupling member (12R) that couples the car body (10) to the right crawler frame (2R) as the right rear coupling member(12R) is disposed on a diagonally rightward rear side relative to the car body (10);
a left front coupling member (11L) that couples the car body (10) to the left crawler frame (2L) as the left front coupling member (11L) is disposed on a diagonally leftward front side relative to the car body (10); and
a left rear coupling member (12L) that couples the car body (10) to the left crawler frame (2L) as the left rear coupling member (12L) is disposed on a diagonally leftward rear side relative to the car body (10), wherein
each of the right front coupling member (11R) and the right rear coupling member (12R) is configured to change a relative position to one or both of the right crawler frame (2R) and the car body (10) in order to reduce dimensions of the lower travelling body (101) when the lower travelling body (101) is transported, wherein each of the left front coupling member (11L) and the left rear coupling member (12L) is configured to change a relative position to one or both of the left crawler frame (2L) and the car body (10) in order to reduce dimensions of the lower travelling body (101) when the lower travelling body (101) is transported,
wherein
the car body (10) includes:
a car body main part (10A) that rotatably supports the upper slewing body (102);
a front axle (13) extending rightward and leftward from the car body main part (10A); and
a rear axle (14) extending rightward and leftward from the car body main part (10A) on a rear side relative to the front axle (13), wherein
the right crawler frame (2R) includes a right front axle support (27) and a right rear axle support (28) that support the front axle (13) and the rear axle (14), respectively, in such a way as to allow the right crawler frame (2R) to change a position thereof in a left-to-right direction between an expanded position and a contracted position at which a distance between the slewing center axis (C) and the right crawler frame (2R) is smaller than a distance at the expanded position, relative to the front axle (13) and the rear axle (14), wherein
the left crawler frame (2L) includes a left front axle support (27) and a left rear axle support (28) that support the front axle (13) and the rear axle (14), respectively, in such a way as to allow the left crawler frame (2L) to change a position thereof in the left-to-right direction between an expanded position and a contracted position at which a distance between the slewing center axis (C) and the left crawler frame (2L) is smaller than a distance at the expanded position, relative to the front axle (13) and the rear axle (14), wherein
the right front coupling member (11R) is configured to be set in an expanded connection state in which the right front coupling member (11R) is connected to the car body (10) as the right crawler frame (2R) is set at the expanded position, and is connected to a part of the right crawler frame (2R) that is on a front side relative to the right front axle support (27), wherein
the right rear coupling member (12R) is configured to be set in an expanded connection state in which the right rear coupling member (12R) is connected to the car body (10) as the right crawler frame (2R) is set at the expanded position, and is connected to a part of the right crawler frame (2R) that is on a rear side relative to the right rear axle support (28), wherein
the left front coupling member (11L) is configured to be set in an expanded connection state in which the left front coupling member (11L) is connected to the car body (10) as the left crawler frame (2L) is set at the expanded position, and is connected to a part of the left crawler frame (2L) that is on a front side relative to the left front axle support (27), wherein
the left rear coupling member (12L) is configured to be set in an expanded connection state in which the left rear coupling member (12L) is connected to the car body (10) as the left crawler frame (2L) is set at the expanded position, and is connected to a part of the left crawler frame (2L) that is on a rear side relative to the left rear axle support (28),
**characterized in that**
each of the right front coupling member (11R) and the right rear coupling member (12R) is configured such that while remaining connected to one of the car body (10) and the right crawler frame (2R) and being detached from the other of the car body (10) and the right crawler frame (2R), each of the right front coupling member (11R) and the right rear coupling member (12R) changes a relative position to at least one of the car body (10) and the right crawler frame (2R), from the expanded connection state, thus allowing the right crawler frame (2R) to shift from the expanded position to the contracted position, and wherein
each of the left front coupling member (11L) and the left rear coupling member (12L) is configured such that while remaining connected to one of the car body (10) and the left crawler frame (2L) and being detached from the other of the car body (10) and the left crawler frame (2L), each of the left front coupling member (11L) and the left rear coupling member (12L) changes a relative position to at least one of the car body (10) and the left crawler frame (2L), from the expanded connection state, thus allowing the left crawler frame (2L) to shift from the expanded position to the contracted position.

2. The lower travelling body (101) of the mobile crane (100) according to claim 1, further comprising:
a pair of right wheels (23R, 24R) rotatably supported respectively on a front end part and a rear end part of the right crawler frame (2R);
a pair of left wheels (23L, 24L) rotatably supported respectively on a front end part and a rear end part of the left crawler frame (2L);
a plurality of right rollers (26) spaced between the pair of right wheels (23R, 24R) in a front-to-rear direction and rotatably supported on a lower part of the right crawler frame (2R), the plurality of right rollers (26) including a right front end roller (261) located at head of the right rollers (26) and a right rear end roller located at tail of the right rollers (26); and
a plurality of left rollers (26) spaced between the pair of left wheels (23L, 24L) in the front-to-rear direction and rotatably supported on a lower part of the left crawler frame (2L), the plurality of left rollers (26) including a left front end roller (261) located at head of the left rollers (26) and a left rear end roller (262) located at tail of the left rollers (26), wherein
the right front coupling member (11R) includes a right front load receiving surface (3FR) counter to the car body (10) and a right front load transmission surface (4FR) counter to the right crawler frame (2R), wherein
the left front coupling member (11L) includes a left front load receiving surface (3FL) counter to the car body (10) and a left front load transmission surface (4FL) counter to the left crawler frame (2L), wherein
each of the right front load receiving surface (3FR) of the right front coupling member (11R) and the left front load receiving surface (3FL) of the left front coupling member (11L) is a surface configured to receive a front load from the car body (10), the front load being a load that the car body (10) receives from the upper slewing body (102) when a cargo-to-be-lifted is hung from the upper slewing body (102) on a front side relative to the lower travelling body (101), the right front load transmission surface (4FR) is a surface configured to transmit the front load to the right crawler frame (2R), and the left front load transmission surface (4FL) is a surface configured to transmit the front load to the left crawler frame (2L), wherein
the right front coupling member (11R) is configured such that in plan view, a right front straight line (LA) that is a straight line passing through any point included in the right front load receiving surface (3FR) and any point included in the right front load transmission surface (4FR) passes through the right front end roller (261) or a point on a front side relative to the right front end roller (261), and wherein
the left front coupling member (11L) is configured such that in plan view, a left front straight line (LC) that is a straight line passing through any point included in the left front load receiving surface (3FL) and any point included in the left front load transmission surface (4FL) passes through the left front end roller (261) or a point on a front side relative to the left front end roller (261).

3. The lower travelling body (101) of the mobile crane (100) according to claim 2, wherein
the right rear coupling member (12R) includes a right rear load receiving surface (3BR) counter to the car body (10) and a right rear load transmission surface (4BR) counter to the right crawler frame (2R), wherein
the left rear coupling member (12L) includes a left rear load receiving surface (3BL) counter to the car body (10) and a left rear load transmission surface (4BL) counter to the left crawler frame (2L), wherein
each of the right rear load receiving surface (3BR) of the right rear coupling member (12R) and the left rear load receiving surface (3BL) of the left rear coupling member (12L) is a surface configured to receive a rear load from the car body (10), the rear load being a load that the car body (10) receives from the upper slewing body (102) when a cargo-to-be-lifted is hung from the upper slewing body (102) on a rear side relative to the lower travelling body (101), the right rear load transmission surface (4BR) is a surface configured to transmit the rear load to the right crawler frame (2R), and the left rear load transmission surface (4BL) is a surface configured to transmit the rear load to the left crawler frame (2L), wherein
the right rear coupling member (12R) is configured such that in plan view, a right rear straight line (LB) that is a straight line passing through any point included in the right rear load receiving surface (3BR) and any point included in the right rear load transmission surface (4BR) passes through the right rear end roller or a point on a rear side relative to the right rear end roller, and wherein
the left rear coupling member (12L) is configured such that in plan view, a left rear straight line (LD) that is a straight line passing through any point included in the left rear load receiving surface (3BL) and any point included in the left rear load transmission surface (4BL) passes through the left rear end roller (262) or a point on a rear side relative to the left rear end roller (262).

4. The lower travelling body (101) of the mobile crane (100) according to any one of claims 1 to 3, wherein
each of the right front coupling member (11R) and the right rear coupling member (12R) is configured to be set in a restricted state in which each of the right front coupling member (11R) and the right rear coupling member (12R) is restricted by at least one of the car body (10) and the right crawler frame (2R) set at the contracted position, and wherein
each of the left front coupling member (11L) and the left rear coupling member (12L) is configured to be set in a restricted state in which each of the left front coupling member (11L) and the left rear coupling member (12L) is restricted by at least one of the car body (10) and the left crawler frame (2L) set at the contracted position.

5. The lower travelling body (101) of the mobile crane (100) according to claim 4, wherein
a right coupling member (11R, 12R) that is at least one of the right front coupling member (11R) and the right rear coupling member (12R) includes a car body connection portion (30) rotatably connected to the car body (10), and a crawler connection portion (31) detachably connected to the right crawler frame (2R) set at the expanded position, wherein
as the crawler connection portion (31) is detached from the right crawler frame (2R) and the car body connection portion (30) is kept connected to the car body (10), the right coupling member (11R, 12R) rotates on the car body connection portion (30) relative to the car body (10) to change a relative position of the right coupling member (11R, 12R) to the car body (10) and the right crawler frame, (2R) from the expanded connection state, thus allowing the right crawler frame (2R) to shift from the expanded position to the contracted position, and then is detachably connected to the right crawler frame (2R) set at the contracted position and is therefore set in the restricted state.

6. The lower travelling body (101) of the mobile crane (100) according to claim 5, wherein
a left coupling member (11L, 12L) that is at least one of the left front coupling member (11L) and the left rear coupling member (12L) includes a car body connection portion (30) rotatably connected to the car body (10), and a crawler connection portion (32) detachably connected to the left crawler frame (2L) set at the expanded position, wherein
as the crawler connection portion (32) of the left coupling member (11L, 12L) is detached from the left crawler frame (2L) and the car body connection portion (30) of the left coupling member (11L, 12L) is kept connected to the car body (10), the left coupling member (11L, 12L) rotates on the car body connection portion (30) of the left coupling member (11L, 12L) relative to the car body to change a relative position of the left coupling member (11L, 12L) to the car body (10) and the left crawler frame (2L), from the expanded connection state, thus allowing the left crawler frame (2L) to shift from the expanded position to the contracted position, and then is detachably connected to the left crawler frame (2L) set at the contracted position and is therefore set in the restricted state.

7. The lower travelling body (101) of the mobile crane (100) according to claim 4, wherein
the right front coupling member (11R) includes a car body connection portion (30) rotatably connected to the car body (10), and a crawler connection portion (31) detachably connected to the right crawler frame (2R) set at the expanded position, wherein
the left front coupling member (11L) includes a car body connection portion (30) rotatably connected to the car body (10), and a crawler connection portion (32) detachably connected to the left crawler frame (2L) set at the expanded position, wherein
as the crawler connection portion (31) of the right front coupling member is (11R) detached from the right crawler frame (2R) and the car body connection portion (30) of the right front coupling member (11R) is kept connected to the car body (10), the right front coupling member (11R) rotates on the car body connection portion (30) relative to the car body (10) to change a relative position of the right front coupling member (11R) to the car body (10) and the right crawler frame (2R), from the expanded connection state, thus allowing the right crawler frame (2R) to shift from the expanded position to the contracted position, wherein
as the crawler connection portion (32) of the left front coupling member (11L) is detached from the left crawler frame (2L) and the car body connection portion (30) of the left front coupling member (11L) is kept connected to the car body (10), the left front coupling member (11L) rotates on the car body connection portion (30) relative to the car body (10) to change a relative position of the left front coupling member (11L) to the car body (10) and the left crawler frame (2L), from the expanded connection state, thus allowing the left crawler frame (2L) to shift from the expanded position to the contracted position, and wherein
the right front coupling member (11R) and the left front coupling member (11L) are connected to each other as each of the right crawler frame (2R) and the left crawler frame (2L) is set at the contracted position, thereby being set in the restricted state.

8. The lower travelling body (101) of the mobile crane (100) according to claim 7, wherein
the right rear coupling member (12R) includes a car body connection portion (30) rotatably connected to the car body (10), and a crawler connection portion (31) detachably connected to the right crawler frame (2R) set at the expanded position, wherein
the left rear coupling member (12L) includes a car body connection portion (30) rotatably connected to the car body (10), and a crawler connection portion (32) detachably connected to the left crawler frame (2L) set at the expanded position, wherein
as the crawler connection portion (31) of the right rear coupling member is detached from the right crawler frame (2R) and the car body connection portion (30) of the right rear coupling member (12R) is kept connected to the car body (10), the right rear coupling member (12R) rotates on the car body connection portion (30) relative to the car body (10) to change a relative position of the right rear coupling member (12R) to the car body (10) and the right crawler frame (2R), from the expanded connection state, thus allowing the right crawler frame (2R) to shift from the expanded position to the contracted position, wherein
as the crawler connection portion (32) of the left rear coupling member (12L) is detached from the left crawler frame (2L) and the car body connection portion (30) of the left rear coupling member(12L) is kept connected to the car body (10), the left rear coupling member (12L) rotates on the car body connection portion (30) relative to the car body (10) to change a relative position of the left rear coupling member (12L) to the car body (10) and the left crawler frame (2L), from the expanded connection state, thus allowing the left crawler frame (2L) to shift from the expanded position to the contracted position, and wherein
the right rear coupling member (12R) and the left rear coupling member (12L) are connected to each other as each of the right crawler frame (2R) and the left crawler frame (2L) is set at the contracted position, thereby being set in the restricted state.

9. The lower travelling body (101) of the mobile crane (100) according to claim 4, wherein
a right coupling member (11R, 12R) that is at least one of the right front coupling member (11R) and the right rear coupling member (12R) includes a car body connection portion (30) detachably connected to the car body (10), and a crawler connection portion (31) connected to the right crawler frame (2R) set at the expanded position, wherein
as the car body connection portion (30) is detached from the car body (10) and the crawler connection portion (31) is kept connected to the right crawler frame (2R), the right coupling member (11R, 12R) changes a relative position of the right coupling member (11R, 12R) to the car body (10), from the expanded connection state, thus allowing the right crawler frame (2R) to shift from the expanded position to the contracted position, and then is detachably connected to the car body (10) as the right crawler frame (2R) is set at the contracted position, and is therefore set in the restricted state.

10. The lower travelling body (101) of the mobile crane (100) according to claim 9, wherein
a left coupling member (11L, 12L) that is at least one of the left front coupling member (11L) and the left rear coupling member (12L) includes a car body connection portion (30) detachably connected to the car body (10), and a crawler connection portion (32) connected to the left crawler frame (2L) set at the expanded position, wherein
as the car body connection portion (30) of the left coupling member (11L, 12L) is detached from the car body (10) and the crawler connection portion (32) of the left coupling member (11L, 12L) is kept connected to the left crawler frame (2L), the left coupling member (11L, 12L) changes a relative position of the left coupling member (11L, 12L) to the car body (10), from the expanded connection state, thus allowing the left crawler frame (2L) to shift from the expanded position to the contracted position, and then is detachably connected to the car body (10) as the left crawler frame (2L) is set at the contracted position, and is therefore set in the restricted state.

11. The lower travelling body (101) of the mobile crane (100) according to claim 4, wherein
the right front coupling member (11R) includes a car body connection portion (30) detachably connected to the car body (10) as the right crawler frame (2R) is set at the expanded position, and a crawler connection portion (31) rotatably connected to the right crawler frame (2R), wherein
the left front coupling member (11L) includes a car body connection portion (30) detachably connected to the car body (10) as the left crawler frame (2L) is set at the expanded position, and a crawler connection portion (32) rotatably connected to the left crawler frame (2L), wherein
as the car body connection portion (30) of the right front coupling member (11R) is detached from the car body (10) and the crawler connection portion (31) of the right front coupling member (11R) is kept connected to the right crawler frame (2R), the right front coupling member (11R) rotates on the crawler connection portion (31) relative to the right crawler frame (2R) to change a relative position of the right front coupling member (11R) to the car body (10) and the right crawler frame (2R), from the expanded connection state, thus allowing the right crawler frame (2R) to shift from the expanded position to the contracted position, wherein
as the car body connection portion (30) of the left front coupling member (11L) is detached from the car body (10) and the crawler connection portion (32) of the left front coupling member (11L) is kept connected to the left crawler frame (2L), the left front coupling member (11L) rotates on the crawler connection portion (32) relative to the left crawler frame (2L) to change a relative position of the left front coupling member (11L) to the car body (10) and the left crawler frame (2L), from the expanded connection state, thus allowing the left crawler frame (2L) to shift from the expanded position to the contracted position, and wherein
the right front coupling member (11R) and the left front coupling member (11L) are connected to each other as each of the right crawler frame (2R) and the left crawler frame (2L) is set at the contracted position, thereby being set in the restricted state.

12. The lower travelling body (101) of the mobile crane (100) according to claim 11, wherein
the right rear coupling member (12R) includes a car body connection portion (30) detachably connected to the car body (10) as the right crawler frame (2R) is set at the expanded position, and a crawler connection portion (31) rotatably connected to the right crawler frame (2R), wherein
the left rear coupling member (12L) includes a car body connection portion (30) detachably connected to the car body (10) as the left crawler frame (2L) is set at the expanded position, and a crawler connection portion (32) rotatably connected to the left crawler frame (2L), wherein
as the car body connection portion (30) of the right rear coupling member (12R) is detached from the car body (10) and the crawler connection portion (31) of the right rear coupling member (12R) is kept connected to the right crawler frame (2R), the right rear coupling member (12R) rotates on the crawler connection portion (31) relative to the right crawler frame (2R) to change a relative position of the right rear coupling member (12R) to the car body (10) and the right crawler frame (2R), from the expanded connection state, thus allowing the right crawler frame (2R) to shift from the expanded position to the contracted position, wherein
as the car body connection portion (30) of the left rear coupling member (12L) is detached from the car body (10) and the crawler connection portion (32) of the left rear coupling member (12L) is kept connected to the left crawler frame (2L), the left rear coupling member (12L) rotates on the crawler connection portion (32) relative to the left crawler frame (2L) to change a relative position of the left rear coupling member (12L) to the car body (10) and the left crawler frame (2L), from the expanded connection state, thus allowing the left crawler frame (2L) to shift from the expanded position to the contracted position, and wherein
the right rear coupling member (12R) and the left rear coupling member (12L) are connected to each other as each of the right crawler frame (2R) and the left crawler frame (2L) is set at the contracted position, thereby being set in the restricted state.

13. The lower travelling body (101) of the mobile crane (100) according to any one of claims 9 to 12, wherein
the car body (10) includes a connected portion (51L, 52L, 51R, 52R) to which the car body connection portion (30) is detachably connected as each of the right crawler frame (2R) and the left crawler frame (2L) is set at the expanded position, and wherein
the connected portion (51L, 52L, 51R, 52R) is configured such that as the car body connection portion (30) is detached from the connected portion (51L, 52L, 51R, 52R) and each of the right crawler frame (2R) and the left crawler frame (2L) is set at the contracted position (51L, 52L, 51R, 52R), the connected portion is allowed to be connected to a corresponding crawler frame that is either the right crawler frame (2R) or the left crawler frame (2L).

## Patentansprüche

1. Unterer Fahrkörper (101) eines mobilen Kranes (100), wobei der untere Fahrkörper (101) Folgendes aufweist:
einen Fahrzeugkörper (10), der einen oberen Schwenkkörper (102) in einer derartigen Weise stützt, dass ermöglicht ist, dass der obere Schwenkkörper (102) sich um eine Schwenkmittelachse (C) dreht;
einen rechten Raupenrahmen (2R), der sich in einer nach vorn und nach hinten weisenden Richtung an einer rechten Seite relativ zu dem Fahrzeugkörper (10) erstreckt;
einen linken Raupenrahmen (2L), der sich in der nach vorn und nach hinten weisenden Richtung an einer linken Seite relativ zu dem Fahrzeugkörper (10) erstreckt; und
eine Vielzahl an Kupplungselementen (11R, 11L, 12R, 12L), wobei
die Vielzahl an Kupplungselementen (11R, 11L, 12R, 12L) Folgendes umfasst:
ein rechtes vorderes Kupplungselement (11R), das den Fahrzeugkörper (10) an dem rechten Raupenrahmen (2R) kuppelt, wenn das rechte vordere Kupplungselement (11R) an einer diagonal rechten vorderen Seite relativ zu dem Fahrzeugkörper (10) angeordnet ist;
ein rechtes hinteres Kupplungselement (12R), das den Fahrzeugkörper (10) an dem rechten Raupenrahmen (2R) kuppelt, wenn das rechte hintere Kupplungselement (12R) an einer diagonal rechten hinteren Seite relativ zu dem Fahrzeugkörper (10) angeordnet ist;
ein linkes vorderes Kupplungselement (11L), das den Fahrzeugkörper (10) an dem linken Raupenrahmen (2L) kuppelt, wenn das linke vordere Kupplungselement (11L) an einer diagonal linken vorderen Seite relativ zu dem Fahrzeugkörper (10) angeordnet ist; und
ein linkes hinteres Kupplungselement (12L), das den Fahrzeugkörper (10) an dem linken Raupenrahmen (2L) kuppelt, wenn das linke hintere Kupplungselement (12L) an einer diagonal linken hinteren Seite relativ zu dem Fahrzeugkörper (10) angeordnet ist, wobei
jedes aus dem rechten vorderen Kupplungselement (11R) und dem rechten hinteren Kupplungselement (12R) so aufgebaut ist, dass es eine Relativposition zu einem oder beiden aus dem rechten Raupenrahmen (2R) und dem Fahrzeugkörper (10) ändert, um Abmessungen des unteren Fahrkörpers (101) zu reduzieren, wenn der untere Fahrkörper (101) transportiert wird, wobei jeder aus dem linken vorderen Kupplungselement (11L) und dem linken hinteren Kupplungselement (12L) so aufgebaut ist, dass es eine Relativposition zu einem oder beiden aus dem linken Raupenrahmen (2L) und dem Fahrzeugkörper (10) ändert, um Abmessungen des unteren Fahrkörpers (101) zu reduzieren, wenn der untere Fahrkörper (101) transportiert wird,
wobei
der Fahrzeugkörper (10) Folgendes umfasst;
einen Fahrzeugkörperhauptabschnitt (10A), der den oberen Schwenkkörper (102) drehbar stützt;
eine Vorderachse (13), die sich von dem Fahrzeugkörperhauptabschnitt (10A) nach rechts und nach links erstreckt; und
eine Hinterachse (14), die sich von dem Fahrzeugkörperhauptabschnitt (10A) an einer hinteren Seite relativ zu der Vorderachse (13) nach rechts und nach links erstreckt, wobei
der rechte Raupenrahmen (2R) eine rechte Vorderachsenabstützung (27) und eine rechte Hinterachsenabstützung (28) umfasst, die die Vorderachse (13) und die Hinterachse (14) jeweils in einer derartigen Weise stützen, dass ermöglicht ist, dass der rechte Raupenrahmen (2R) seine Position in einer nach links und nach rechts weisenden Richtung zwischen einer ausgefahrenen Position und einer eingefahrenen Position, bei der ein Abstand zwischen der Schwenkmittelachse (C) und dem rechten Raupenrahmen (2R) kleiner als ein Abstand an der ausgefahrenen Position ist, relativ zu der Vorderachse (13) und der Hinterachse (14) ändert, wobei
der linke Raupenrahmen (2L) eine linke Vorderachsenabstützung (27) und eine linke Hinterachsenabstützung (28) umfasst, die die Vorderachse (13) und die Hinterachse (14) jeweils in einer derartigen Weise stützen, dass ermöglicht ist, dass der linke Raupenrahmen (2L) seine Position in der nach links und nach rechts weisenden Richtung zwischen einer ausgefahrenen Position und einer eingefahrenen Position, bei der ein Abstand zwischen der Schwenkmittelachse (C) und dem linken Raupenrahmen (2L) kleiner als ein Abstand an der ausgefahrenen Position ist, relativ zu der Vorderachse (13) und der Hinterachse (14) ändert, wobei
das rechte vordere Kupplungselement (11R) so aufgebaut ist, dass es in einen ausgefahrenen Verbindungszustand gesetzt wird, bei dem das rechte vordere Kupplungselement (11R) mit dem Fahrzeugkörper (10) verbunden ist, wenn der rechte Raupenrahmen (2R) auf die ausgefahrene Position gesetzt ist, und mit einem Abschnitt des rechten Raupenrahmens (2R) verbunden ist, der an einer Vorderseite relativ zu der rechten Vorderachsenabstützung (27) ist, wobei
das rechte hintere Kupplungselement (12R) so aufgebaut ist, dass es in einen ausgefahrenen Verbindungszustand gesetzt wird, bei dem das rechte hintere Kupplungselement (12R) mit dem Fahrzeugkörper (10) verbunden ist, wenn der rechte Raupenrahmen (2R) auf die ausgefahrene Position gesetzt ist, und mit einem Abschnitt des rechten Raupenrahmens (2R) verbunden ist, der an einer hinteren Seite relativ zu der rechten Hinterachsenabstützung (28) ist, wobei
das linke vordere Kupplungselement (11L) so aufgebaut ist, dass es in einen ausgefahrenen Verbindungszustand gesetzt wird, bei dem das linke vordere Kupplungselement (11L) mit dem Fahrzeugkörper (10) verbunden ist, wenn der linke Raupenrahmen (2L) auf die ausgefahrene Position gesetzt ist, und mit einem Abschnitt des linken Raupenrahmens (2L) verbunden ist, der an einer Vorderseite relativ zu der linken Vorderachsenabstützung (27) ist, wobei
das linke hintere Kupplungselement (12L) so aufgebaut ist, dass es in einen ausgefahrenen Verbindungszustand gesetzt wird, bei dem das linke hintere Kupplungselement (12L) mit dem Fahrzeugkörper (10) verbunden ist, wenn der linke Raupenrahmen (2L) auf die ausgefahrene Position gesetzt ist, und mit einem Abschnitt des linken Raupenrahmens (2L) verbunden ist, der an einer hinteren Seite relativ zu der linken Hinterachsenabstützung (28) ist,
**dadurch gekennzeichnet, dass**
jedes aus dem rechten vorderen Kupplungselement (11R) und dem rechten hinteren Kupplungselement (12R) so aufgebaut ist, dass, während es mit einem aus dem Fahrzeugkörper (10) und dem rechten Raupenrahmen (2R) verbunden bleibt und von dem anderen aus dem Fahrzeugkörper (10) und dem rechten Raupenrahmen (2R) gelöst ist, jedes aus dem rechten vorderen Kupplungselement (11R) und dem rechten hinteren Kupplungselement (12R) eine Relativposition zu zumindest einem aus dem Fahrzeugkörper (10) und dem rechten Raupenrahmen (2R) ausgehend von dem ausgefahrenen Verbindungszustand ändert, womit ermöglicht wird, dass der rechte Raupenrahmen (2R) von der ausgefahrenen Position zu der eingefahrenen Position verschoben wird, und wobei
jedes aus dem linken vorderen Kupplungselement (11L) und dem linken hinteren Kupplungselement (12L) so aufgebaut ist, dass, während es mit einem aus dem Fahrzeugkörper (10) und dem linken Raupenrahmen (2L) verbunden bleibt und von dem anderen aus dem Fahrzeugkörper (10) und dem linken Raupenrahmen (2L) gelöst ist, jedes von dem linken vorderen Kupplungselement (11L) und dem linken hinteren Kupplungselement (12L) eine Relativposition zu zumindest einem aus dem Fahrzeugkörper (10) und dem linken Raupenrahmen (2L) ausgehend von dem ausgefahrenen Verbindungszustand ändert, womit ermöglicht wird, dass der linke Raupenrahmen (2L) von der ausgefahrenen Position zu der eingefahrenen Position verschoben wird.

2. Unterer Fahrkörper (101) des mobilen Kranes (100) gemäß Anspruch 1, der des Weiteren Folgendes aufweist:
ein Paar an rechten Rädern (23R, 24R), die jeweils an einem vorderen Endabschnitt und einem hinteren Endabschnitt des rechten Raupenrahmens (2R) drehbar gestützt sind;
ein Paar an linken Rädern (23L, 24L), die jeweils an einem vorderen Endabschnitt und einem hinteren Endabschnitt des linken Raupenrahmens (2L) drehbar gestützt sind;
eine Vielzahl an rechten Rollen (26), die zwischen dem Paar an rechten Rädern (23R, 24R) in einer nach vorn und nach hinten weisenden Richtung beabstandet sind und an einem unteren Abschnitt des rechten Raupenrahmens (2R) drehbar gestützt sind, wobei die Vielzahl an rechten Rollen (26) eine rechte vordere Endrolle (261) umfassen, die sich an einem Kopf der rechten Rollen (26) befindet, und eine rechte hintere Endrolle, die sich an einem Ende der rechten Rollen (26) befindet, umfassen; und
eine Vielzahl an linken Rollen (26), die zwischen dem Paar an linken Rädern (23L, 24L) in der nach vorn und nach hinten weisenden Richtung beabstandet sind und drehbar an einem unteren Abschnitt des linken Raupenrahmens (2L) gestützt sind, wobei die Vielzahl an linken Rollen (26) eine linke vordere Endrolle (261), die sich an einem Kopf der linken Rollen (26) befindet, und eine linke hintere Endrolle (262), die sich an einem Ende der linken Rollen (26) befindet, umfassen, wobei
das rechte vordere Kupplungselement (11R) eine rechte vordere Lastaufnahmefläche (3FR) gegenüber dem Fahrzeugkörper (10) und eine rechte vordere Lastübertragungsfläche (4FR) gegenüber dem rechten Raupenrahmen (2R) aufweist, wobei
das linke vordere Kupplungselement (11L) eine linke vordere Lastaufnahmefläche (3FL) gegenüber dem Fahrzeugkörper (10) und eine linke vordere Lastübertragungsfläche (4FL) gegenüber dem linken Raupenrahmen (2L) aufweist, wobei
jede aus der rechten vorderen Lastaufnahmefläche (3FR) des rechten vorderen Kupplungselementes (11R) und der linken vorderen Lastaufnahmefläche (3FL) des linken vorderen Kupplungselementes (11L) eine Fläche ist, die so aufgebaut ist, dass sie eine vordere Last von dem Fahrzeugkörper (10) empfängt, wobei die vordere Last eine Last ist, die der Fahrzeugkörper (10) von dem oberen Schwenkkörper (102) empfängt, wenn eine anzuhebende Fracht von dem oberen Schwenkkörper (102) an einer vorderen Seite relativ zu dem unteren Fahrkörper (101) angehängt ist, wobei die rechte vordere Lastübertragungsfläche (4FR) eine Fläche ist, die so aufgebaut ist, dass sie die vordere Last zu dem rechten Raupenrahmen (2R) überträgt, und die linke vordere Lastübertragungsfläche (4FL) eine Fläche ist, die so aufgebaut ist, dass sie die vordere Last zu dem linken Raupenrahmen (2L) überträgt, wobei
das rechte vordere Kupplungselement (11R) so aufgebaut ist, dass in einer Draufsicht eine rechte vordere gerade Linie (LA), die eine gerade Linie ist, die durch einen beliebigen Punkt, der in der rechten vorderen Lastaufnahmefläche (3FR) umfasst ist, und einen beliebigen Punkt, der in der rechten vorderen Lastübertragungsfläche (4FR) umfasst ist, tritt, durch die rechte vordere Endrolle (261) oder einen Punkt an einer vorderen Seite relativ zu der rechten vorderen Endrolle (261) tritt, und wobei
das linke vordere Kupplungselement (11L) so aufgebaut ist, dass in einer Draufsicht eine linke vordere gerade Linie (LC), die eine gerade Linie ist, die durch einen beliebigen Punkt, der in der linken vorderen Lastaufnahmefläche (3FL) umfasst ist, und einen beliebigen Punkt, der in der linken vorderen Lastübertragungsfläche (4FL) umfasst ist, tritt, durch die linke vordere Endrolle (261) oder einen Punkt an einer vorderen Seite relativ zu der linken vorderen Endrolle (261) tritt.

3. Unterer Fahrkörper (101) des mobilen Kranes (100) gemäß Anspruch 2, wobei
das rechte hintere Kupplungselement (12R) eine rechte hintere Lastaufnahmefläche (3BR) gegenüber dem Fahrzeugkörper (10) und eine rechte hintere Lastübertragungsfläche (4BR) gegenüber dem rechten Raupenrahmen (2R) aufweist, wobei
das linke hintere Kupplungselement (12L) eine linke hintere Lastaufnahmefläche (3BL) gegenüber dem Fahrzeugkörper (10) und eine linke hintere Lastübertragungsfläche (4BL) gegenüber dem linken Raupenrahmen (2L) aufweist, wobei
jede aus der rechten hinteren Lastaufnahmefläche (3BR) des rechten hinteren Kupplungselementes (12R) und der linken hinteren Lastaufnahmefläche (3BL) des linken hinteren Kupplungselementes (12L) eine Fläche ist, die so aufgebaut ist, dass sie eine hintere Last von dem Fahrzeugkörper (10) empfängt, wobei die hintere Last eine Last ist, die der Fahrzeugkörper (10) von dem oberen Schwenkkörper (102) empfängt, wenn eine anzuhebende Fracht von dem oberen Schwenkkörper (102) an einer hinteren Seite relativ zu dem unteren Fahrkörper (101) angehängt ist, wobei die rechte hintere Lastübertragungsfläche (4BR) eine Fläche ist, die so aufgebaut ist, dass sie die hintere Last zu dem rechten Raupenrahmen (2R) überträgt, und die linke hintere Lastübertragungsfläche (4BL) eine Fläche ist, die so aufgebaut ist, dass sie die hintere Last zu dem linken Raupenrahmen (2L) überträgt, wobei
das rechte hintere Kupplungselement (12R) so aufgebaut ist, dass in einer Draufsicht eine rechte hintere gerade Linie (LB), die eine gerade Linie ist, durch einen beliebigen Punkt, der in der rechten hinteren Lastaufnahmefläche (3BR) umfasst ist, und einen beliebigen Punkt, der in der rechten hinteren Lastübertragungsfläche (4BR) umfasst ist, tritt, durch die rechte hintere Endrolle oder einen Punkte an einer hinteren Seite relativ zu der rechten hinteren Endrolle tritt, und wobei
das linke hintere Kupplungselement (12L) so aufgebaut ist, dass in einer Draufsicht eine linke hintere gerade Linie (LD), die eine gerade Linie ist, die durch einen beliebigen Punkt, die in der linken hinteren Lastaufnahmefläche (3BL) umfasst ist, und einen beliebigen Punkt, der in der linken hinteren Lastübertragungsfläche (4BL) umfasst ist, tritt, durch die linke hintere Endrolle (262) oder einen Punkt an einer hinteren Seite relativ zu der linken hinteren Endrolle (262) tritt.

4. Unterer Fahrkörper (101) des mobilen Kranes (100) gemäß einem der Ansprüche 1 bis 3, wobei
jedes aus dem rechten vorderen Kupplungselement (11R) und dem rechten hinteren Kupplungselement (12R) so aufgebaut ist, dass es in einen begrenzten Zustand gesetzt wird, bei dem jedes aus dem rechten vorderen Kupplungselement (11R) und dem rechten hinteren Kupplungselement (12R) durch zumindest entweder den Fahrzeugkörper (10) und/oder den rechten Raupenrahmen (2R) begrenzt ist, der auf die eingefahrene Position gesetzt ist, und wobei
jedes aus dem linken vorderen Kupplungselement (11L) und dem linken hinteren Kupplungselement (12L) so aufgebaut ist, dass es in einen begrenzten Zustand gesetzt wird, bei dem jedes aus dem linken vorderen Kupplungselement (11L) und dem linken hinteren Kupplungselement (12L) durch zumindest entweder den Fahrzeugkörper (10) und/oder den linken Raupenrahmen (2L) begrenzt ist, der auf die eingefahrene Position gesetzt ist.

5. Unterer Fahrkörper (101) des mobilen Kranes (100) gemäß Anspruch 4, wobei
ein rechtes Kupplungselement (11R, 12R), das zumindest entweder das rechte vordere Kupplungselement (11R) und/oder das rechte hintere Kupplungselement (12R) ist, einen Fahrzeugkörperverbindungsabschnitt (30), der mit dem Fahrzeugkörper (10) drehbar verbunden ist, und einen Raupenverbindungsabschnitt (31) aufweist, der mit dem rechten Raupenrahmen (2R) abnehmbar verbunden ist, der in die ausgefahrene Position gesetzt ist, wobei
wenn der Raupenverbindungsabschnitt (31) von dem rechten Raupenrahmen (2R) gelöst ist und der Fahrzeugkörperverbindungsabschnitt (30) mit dem Fahrzeugkörper (10) verbunden gehalten ist, das rechte Kupplungselement (11R, 12R) sich an dem Fahrzeugkörperverbindungsabschnitt (30) relativ zu dem Fahrzeugkörper (10) dreht, um eine Relativposition des rechten Kupplungselementes (11R, 12R) zu dem Fahrzeugkörper (10) und dem rechten Raupenrahmen (2R) von dem ausgefahrenen Verbindungszustand zu ändern, womit ermöglicht wird, dass der rechte Raupenrahmen (2R) sich von der ausgefahrenen Position zu der eingefahrenen Position verschiebt, und dann mit dem rechten Raupenrahmen (2R) lösbar verbunden ist, der auf die eingefahrene Position gesetzt ist und daher in den begrenzten Zustand gesetzt ist.

6. Unterer Fahrkörper (101) des mobilen Kranes (100) gemäß Anspruch 5, wobei
ein linkes Kupplungselement (11L, 12L), das zumindest eines aus dem linken vorderen Kupplungselement (11L) und dem linken hinteren Kupplungselement (12L) ist, einen Fahrzeugkörperverbindungsabschnitt (30), der mit dem Fahrzeugkörper (10) drehbar verbunden ist, und einen Raupenverbindungsabschnitt (32) aufweist, der mit dem linken Raupenrahmen (2L) lösbar verbunden ist, der auf die ausgefahrene Position gesetzt ist, wobei
wenn der Raupenverbindungsabschnitt (32) des linken Kupplungselementes (11L, 12L) von dem linken Raupenrahmen (2L) gelöst ist und der Fahrzeugkörperverbindungsabschnitt (30) des linken Kupplungselementes (11L, 12L) mit dem Fahrzeugkörper (10) verbunden gehalten ist, das linke Kupplungselement (11L, 12L) sich an dem Fahrzeugkörperverbindungsabschnitt (30) des linken Kupplungselementes (11L, 12L) relativ zu dem Fahrzeugkörper dreht, um eine Relativposition des linken Kupplungselementes (11L, 12L) zu dem Fahrzeugkörper (10) und dem linken Raupenrahmen (2L) von dem ausgefahrenen Verbindungszustand zu ändern, womit ermöglicht wird, dass der linke Raupenrahmen (2L) sich von der ausgefahrenen Position zu der eingefahrenen Position verschiebt, und dann mit dem linken Raupenrahmen (2L) lösbar verbunden ist, der auf die eingefahrene Position gesetzt ist und daher in dem begrenzten Zustand gesetzt ist.

7. Unterer Fahrkörper (101) des mobilen Kranes (100) gemäß Anspruch 4, wobei
das rechte vordere Kupplungselement (11R) einen Fahrzeugkörperverbindungsabschnitt (30), der mit dem Fahrzeugkörper (10) drehbar verbunden ist, und einen Raupenverbindungsabschnitt (31) aufweist, der mit dem rechten Raupenrahmen (2R) lösbar verbunden ist, der auf die ausgefahrene Position gesetzt ist, wobei
das linke vordere Kupplungselement (11L) einen Fahrzeugkörperverbindungsabschnitt (30), der mit dem Fahrzeugkörper (10) drehbar verbunden ist, und einen Raupenverbindungsabschnitt (32) aufweist, der mit dem linken Raupenrahmen (2L) lösbar verbunden ist, der auf die ausgefahrene Position gesetzt ist, wobei
wenn der Raupenverbindungsabschnitt (31) des rechten vorderen Kupplungselementes (11R) von dem rechten Raupenrahmen (2R) gelöst ist und der Fahrzeugkörperverbindungsabschnitt (30) des rechten vorderen Kupplungselementes (11R) mit dem Fahrzeugkörper (10) verbunden gehalten ist, das rechte vordere Kupplungselement (11R) sich an dem Fahrzeugkörperverbindungsabschnitt (30) relativ zu dem Fahrzeugkörper (10) dreht, um eine Relativposition des rechten vorderen Kupplungselementes (11R) zu dem Fahrzeugkörper (10) und dem rechten Raupenrahmen (2R) von dem ausgefahrenen Verbindungszustand zu ändern, womit ermöglicht wird, dass der rechte Raupenrahmen (2R) sich von der ausgefahrenen Position zu der eingefahrenen Position verschiebt, wobei
wenn der Raupenverbindungsabschnitt (32) des linken vorderen Kupplungselementes (11L) von dem linken Raupenrahmen (2L) gelöst ist und der Fahrzeugkörperverbindungsabschnitt (30) des linken vorderen Kupplungselementes (11L) mit dem Fahrzeugkörper (10) verbunden gehalten ist, das linke vordere Kupplungselement (11L) sich an dem Fahrzeugkörperverbindungsabschnitt (30) relativ zu dem Fahrzeugkörper (10) dreht, um eine Relativposition des linken vorderen Kupplungselementes (11L) zu dem Fahrzeugkörper (10) und dem linken Raupenrahmen (2L) von dem ausgefahrenen Verbindungszustand zu ändern, womit ermöglicht wird, dass der linke Raupenrahmen (2L) sich von der ausgefahrenen Position zu der eingefahrenen Position verschiebt, und wobei
das rechte vordere Kupplungselement (11R) und das linke vordere Kupplungselement (11L) miteinander verbunden sind, wenn sowohl der rechte Raupenrahmen (2R) als auch der linke Raupenrahmen (2L) auf die eingefahrene Position gesetzt ist, wodurch sie in den begrenzten Zustand gesetzt sind.

8. Unterer Fahrkörper (101) des mobilen Kranes (100) gemäß Anspruch 7, wobei
das rechte hintere Kupplungselement (12R) einen Fahrzeugkörperverbindungsabschnitt (30), der mit dem Fahrzeugkörper (10) drehbar verbunden ist, und einen Raupenverbindungsabschnitt (31) aufweist, der mit dem rechten Raupenrahmen (2R) lösbar verbunden ist, der auf die ausgefahrene Position gesetzt ist, wobei
das linke hintere Kupplungselement (12L) einen Fahrzeugkörperverbindungsabschnitt (30), der mit dem Fahrzeugkörper (10) drehbar verbunden ist, und einen Raupenverbindungsabschnitt (32) aufweist, der mit dem linken Raupenrahmen (2L) lösbar verbunden ist, der auf die ausgefahrene Position gesetzt ist, wobei
wenn der Raupenverbindungsabschnitt (31) des rechten hinteren Kupplungselementes von dem rechten Raupenrahmen (2R) gelöst ist und der Fahrzeugkörperverbindungsabschnitt (30) des rechten hinteren Kupplungselementes (12R) mit dem Fahrzeugkörper (10) verbunden gehalten ist, das rechte hintere Kupplungselement (12R) sich an dem Fahrzeugkörperverbindungsabschnitt (30) relativ zu dem Fahrzeugkörper (10) dreht, um eine Relativposition des rechten hinteren Kupplungselementes (12R) zu dem Fahrzeugkörper (10) und dem rechten Raupenrahmen (2R) aus dem ausgefahrenen Verbindungszustand zu ändern, womit ermöglicht wird, dass der rechte Raupenrahmen (2R) sich von der ausgefahrenen Position zu der eingefahrenen Position verschiebt, wobei
wenn der Raupenverbindungsabschnitt (32) des linken hinteren Kupplungselementes (12L) von dem linken Raupenrahmen (2L) gelöst ist und der Fahrzeugkörperverbindungsabschnitt (30) des linken hinteren Kupplungselementes (12L) mit dem Fahrzeugkörper (10) verbunden gehalten ist, das linke hintere Kupplungselement (12L) sich an dem Fahrzeugkörperverbindungsabschnitt (30) relativ zu dem Fahrzeugkörper (10) dreht, um eine Relativposition des linken hinteren Kupplungselementes (12L) zu dem Fahrzeugkörper (10) und dem linken Raupenrahmen (2L) aus dem ausgefahrenen Verbindungszustand zu ändern, womit ermöglicht wird, dass der linke Raupenrahmen (2L) sich von der ausgefahrenen Position zu der eingefahrenen Position verschiebt, und wobei
das rechte hintere Kupplungselement (12R) und das linke hintere Kupplungselement (12L) miteinander verbunden sind, wenn sowohl der rechte Raupenrahmen (2R) als auch der linke Raupenrahmen (2L) auf die eingefahrene Position gesetzt ist, wodurch sie in den begrenzten Zustand gesetzt sind.

9. Unterer Fahrkörper (101) des mobilen Kranes (100) gemäß Anspruch 4, wobei
ein rechtes Kupplungselement (11R, 12R), das zumindest eines aus dem rechten vorderen Kupplungselement (11R) und dem rechten hinteren Kupplungselement (12R) ist, einen Fahrzeugkörperverbindungsabschnitt (30), der mit dem Fahrzeugkörper (10) lösbar verbunden ist, und einen Raupenverbindungsabschnitt (31) aufweist, der mit dem rechten Raupenrahmen (2R) verbunden ist, der auf die ausgefahrene Position gesetzt ist, wobei
wenn der Fahrzeugkörperverbindungsabschnitt (30) von dem Fahrzeugkörper (10) gelöst ist und der Raupenverbindungsabschnitt (31) mit dem rechten Raupenrahmen (2R) verbunden gehalten ist, das rechte Kupplungselement (11R, 12R) eine Relativposition des rechten Kupplungselementes (11R, 12R) zu dem Fahrzeugkörper (10) aus dem ausgefahrenen Verbindungszustand ändert, womit ermöglicht wird, dass der rechte Raupenrahmen (2R) sich von der ausgefahrenen Position zu der eingefahrenen Position verschiebt, und dann mit dem Fahrzeugkörper (10) lösbar verbunden ist, wenn der rechte Raupenrahmen (2R) auf die eingefahrene Position gesetzt ist, und daher in den begrenzten Zustand gesetzt ist.

10. Unterer Fahrkörper (101) des mobilen Kranes (100) gemäß Anspruch 9, wobei
ein linkes Kupplungselement (11L, 12L), das zumindest eines aus dem linken vorderen Kupplungselement (11L) und dem linken hinteren Kupplungselement (12L) ist, einen Fahrzeugkörperverbindungsabschnitt (30), der mit dem Fahrzeugkörper (10) lösbar verbunden ist, und einen Raupenverbindungsabschnitt (32) aufweist, der mit dem linken Raupenrahmen (2L) verbunden ist, der auf die ausgefahrene Position gesetzt ist
wenn der Fahrzeugkörperverbindungsabschnitt (30) des linken Kupplungselementes (11L, 12L) von dem Fahrzeugkörper (10) gelöst ist und der Raupenverbindungsabschnitt (32) des linken Kupplungselementes (11L, 12L) mit dem linken Raupenrahmen (2L) verbunden gehalten ist, das linke Kupplungselement (11L, 12L) eine Relativposition des linken Kupplungselementes (11L, 12L) zu dem Fahrzeugkörper (10) von dem ausgefahrenen Verbindungszustand ändert, womit ermöglicht wird, dass der linke Raupenrahmen (2L) sich von der ausgefahrenen Position zu der eingefahrenen Position verschiebt, und dann mit dem Fahrzeugkörper (10) lösbar verbunden ist, wenn der linke Raupenrahmen (2L) auf die eingefahrene Position gesetzt ist, und daher in den begrenzten Zustand gesetzt ist.

11. Unterer Fahrkörper (101) des mobilen Kranes (100) gemäß Anspruch 4, wobei
das rechte vordere Kupplungselement (11R) einen Fahrzeugkörperverbindungsabschnitt (30), der mit dem Fahrzeugkörper (10) lösbar verbunden ist, wenn der rechte Raupenrahmen (2R) auf die ausgefahrene Position gesetzt ist, und einen Raupenverbindungsabschnitt (31) aufweist, der mit dem rechten Raupenrahmen (2R) drehbar verbunden ist, wobei
das linke vordere Kupplungselement (11L) einen Fahrzeugkörperverbindungsabschnitt (30), der mit dem Fahrzeugkörper (10) lösbar verbunden ist, wenn der linke Raupenrahmen (2L) auf die ausgefahrene Position gesetzt ist, und einen Raupenverbindungsabschnitt (32) aufweist, der mit dem linken Raupenrahmen (2L) drehbar verbunden ist, wobei
wenn der Fahrzeugkörperverbindungsabschnitt (30) des rechten vorderen Kupplungselementes (11R) von dem Fahrzeugkörper (10) gelöst ist und der Raupenverbindungsabschnitt (31) des rechten vorderen Kupplungselementes (11R) mit dem rechten Raupenrahmen (2R) verbunden gehalten ist, das rechte vordere Kupplungselement (11R) sich an dem Raupenverbindungsabschnitt (31) relativ zu dem rechten Raupenrahmen (2R) dreht, um eine Relativposition des rechten vorderen Kupplungselementes (11R) zu dem Fahrzeugkörper (10) und dem rechten Raupenrahmen (2R) aus dem ausgefahrenen Verbindungszustand zu ändern, womit ermöglicht wird, dass der rechte Raupenrahmen (2R) sich von der ausgefahrenen Position zu der eingefahrenen Position verschiebt, wobei
wenn der Fahrzeugkörperverbindungsabschnitt (30) des linken vorderen Kupplungselementes (11L) von dem Fahrzeugkörper (10) gelöst ist und der Raupenverbindungsabschnitt (32) des linken vorderen Kupplungselementes (11L) mit dem linken Raupenrahmen (2L) verbunden gehalten ist, das linke vordere Kupplungselement (11L) sich an dem Raupenverbindungsabschnitt (32) relativ zu dem linken Raupenrahmen (2L) dreht, ohne eine Relativposition des linken vorderen Kupplungselementes (11L) zu dem Fahrzeugkörper (10) und dem linken Raupenrahmen (2L) aus dem ausgefahrenen Verbindungszustand zu ändern, womit ermöglicht wird, dass der linke Raupenrahmen (2L) von der ausgefahrenen Position zu der eingefahrenen Position verschoben wird, und wobei
das rechte vordere Kupplungselement (11R) und das linke vordere Kupplungselement (11L) miteinander verbunden sind, wenn sowohl der rechte Raupenrahmen (2R) als auch der linke Raupenrahmen (2L) auf die eingefahrene Position gesetzt ist, wodurch sie in den begrenzten Zustand gesetzt sind.

12. Unterer Fahrkörper (101) des mobilen Kranes (100) gemäß Anspruch 11, wobei
das rechte hintere Kupplungselement (12R) einen Fahrzeugkörperverbindungsabschnitt (30), der mit dem Fahrzeugkörper (10) lösbar verbunden ist, wenn der rechte Raupenrahmen (2R) auf die ausgefahrene Position gesetzt ist, und einen Raupenverbindungsabschnitt (31) aufweist, der mit dem rechten Raupenrahmen (2R) drehbar verbunden ist, wobei
das linke hintere Kupplungselement (12L) einen Fahrzeugkörperverbindungsabschnitt (30), der mit dem Fahrzeugkörper (10) lösbar verbunden ist, wenn der linke Raupenrahmen (2L) auf die ausgefahrene Position gesetzt ist, und einen Raupenverbindungsabschnitt (32) aufweist, der mit dem linken Raupenrahmen (2L) drehbar verbunden ist, wobei
wenn der Fahrzeugkörperverbindungsabschnitt (30) des rechten hinteren Kupplungselementes (12R) von dem Fahrzeugkörper (10) gelöst ist und der Raupenverbindungsabschnitt (31) des rechten hinteren Kupplungselementes (12R) mit dem rechten Raupenrahmen (2R) verbunden gehalten ist, das rechte hintere Kupplungselement (12R) sich an dem Raupenverbindungsabschnitt (31) relativ zu dem rechten Raupenrahmen (2R) dreht, um eine Relativposition des rechten hinteren Kupplungselementes (12R) zu dem Fahrzeugkörper (10) und dem rechten Raupenrahmen (2R) aus dem ausgefahrenen Verbindungszustand zu ändern, womit ermöglicht wird, dass der rechte Raupenrahmen (2R) von der ausgefahrenen Position zu der eingefahrenen Position verschoben wird, wobei
wenn der Fahrzeugkörperverbindungsabschnitt (30) des linken hinteren Kupplungselementes (12L) von dem Fahrzeugkörper (10) gelöst ist und der Raupenverbindungsabschnitt (32) des linken hinteren Kupplungselementes (12L) mit dem linken Raupenrahmen (2L) verbunden gehalten ist, das linke hintere Kupplungselement (12L) sich an dem Raupenverbindungsabschnitt (32) relativ zu dem linken Raupenrahmen (2L) dreht, um eine Relativposition des linken hinteren Kupplungselementes (12L) zu dem Fahrzeugkörper (10) und dem linken Raupenrahmen (2L) aus dem ausgefahrenen Verbindungszustand zu ändern, womit ermöglicht wird, dass der linke Raupenrahmen (2L) sich von der ausgefahrenen Position zu der eingefahrenen Position verschiebt, und wobei
das rechte hintere Kupplungselement (12R) und das linke hintere Kupplungselement (12L) miteinander verbunden sind, wenn sowohl der rechte Raupenrahmen (2R) als auch der linke Raupenrahmen (2L) auf die eingefahrene Position gesetzt ist, wodurch sie in den begrenzten Zustand gesetzt sind.

13. Unterer Fahrkörper (101) des mobilen Kranes (100) gemäß einem der Ansprüche 9 bis 12, wobei
der Fahrzeugkörper (10) einen verbundenen Abschnitt (51L, 52L, 51R, 52R) aufweist, mit dem der Fahrzeugkörperverbindungsabschnitt (30) lösbar verbunden ist, wenn sowohl der rechte Raupenrahmen (2R) als auch der linke Raupenrahmen (2L) auf die ausgefahrene Position gesetzt ist, und wobei
der verbundene Abschnitt (51L, 52L, 51R, 52R) so aufgebaut ist, dass, wenn der Fahrzeugkörperverbindungsabschnitt (30) von dem verbundenen Abschnitt (51L, 52L, 51R, 52R) gelöst ist und sowohl der rechte Raupenrahmen (2R) als auch der linke Raupenrahmen (2L) auf die eingefahrene Position gesetzt ist, ermöglicht wird, dass der verbundene Abschnitt (51L, 52L, 51R, 52R) mit einem entsprechenden Raupenrahmen verbunden ist, der entweder der rechte Raupenrahmen (2R) oder der linke Raupenrahmen (2L) ist.

## Revendications

1. Corps roulant inférieur (101) d'une grue mobile (100), le corps roulant inférieur (101) comprenant :
un corps de train roulant (10) qui supporte un corps pivotant supérieur (102) de manière telle à permettre au corps pivotant supérieur (102) d'entrer en rotation autour d'un axe central pivotant (C) ;
un châssis de chenille droit (2R) s'étendant dans une direction avant-arrière sur un côté droit relativement au corps de train roulant (10) ;
un châssis de chenille gauche (2L) s'étendant dans la direction avant-arrière sur un côté gauche relativement au corps de train roulant (10) ; et
une pluralité d'éléments de couplage (11R, 11L, 12R, 12L), dans lequel la pluralité d'éléments de couplage (11R, 11L, 12R, 12L) incluent :
un élément de couplage avant droit (11R) qui couple le corps de train roulant (10) au châssis de chenille droit (2R) car l'élément de couplage avant droit (11R) est disposé sur un côté avant diagonalement vers la droite relativement au corps de train roulant (10) ;
un élément de couplage arrière droit (12R) qui couple le corps de train roulant (10) au châssis de chenille droit (2R) car l'élément de couplage arrière droit (12R) est disposé sur un côté arrière diagonalement vers la droite relativement au corps de train roulant (10) ;
un élément de couplage avant gauche (11L) qui couple le corps de train roulant (10) au châssis de chenille gauche (2L) car l'élément de couplage avant gauche (11L) est disposé sur un côté avant diagonalement vers la gauche relativement au corps de train roulant (10) ; et
un élément de couplage arrière gauche (12L) qui couple le corps de train roulant (10) au châssis de chenille gauche (2L) car l'élément de couplage arrière gauche (12L) est disposé sur un côté arrière diagonalement vers la gauche relativement au corps de train roulant (10), dans lequel
chacun de l'élément de couplage avant droit (11R) et de l'élément de couplage arrière droit (12R) est configuré pour changer une position relative par rapport à un ou aux deux du châssis de chenille droit (2R) et du corps de train roulant (10) afin de réduire des dimensions du corps roulant inférieur (101) lorsque le corps roulant inférieur (101) est transporté, dans lequel chacun de l'élément de couplage avant gauche (11L) et de l'élément de couplage arrière gauche (12L) est configuré pour changer une position relative par rapport à un ou aux deux du châssis de chenille gauche (2L) et du corps de train roulant (10) afin de réduire des dimensions du corps roulant inférieur (101) lorsque le corps roulant inférieur (101) est transporté,
dans lequel
le corps de train roulant (10) inclut :
une partie principale de corps de train roulant (10A) qui supporte le corps pivotant supérieur (102) de façon rotative ;
un essieu avant (13) s'étendant vers la droite et vers la gauche depuis la partie principale de corps de train roulant (10A) ; et
un essieu arrière (14) s'étendant vers la droite et vers la gauche depuis la partie principale de corps de train roulant (10A) sur un côté arrière relativement à l'essieu avant (13), dans lequel
le châssis de chenille droit (2R) inclut un support d'essieu avant droit (27) et un support d'essieu arrière droit (28) qui supportent l'essieu avant (13) et l'essieu arrière (14), respectivement, de manière telle à permettre au châssis de chenille droit (2R) de changer une position de celui-ci dans une direction gauche-droite entre une position étendue et une position contractée à laquelle une distance entre l'axe central pivotant (C) et le châssis de chenille droit (2R) est plus petite qu'une distance à la position étendue, relativement à l'essieu avant (13) et à l'essieu arrière (14),
dans lequel
le châssis de chenille gauche (2L) inclut un support d'essieu avant gauche (27) et un support d'essieu arrière gauche (28) qui supportent l'essieu avant (13) et l'essieu arrière (14), respectivement, de manière telle à permettre au châssis de chenille gauche (2L) de changer une position de celui-ci dans la direction gauche-droite entre une position étendue et une position contractée à laquelle une distance entre l'axe central pivotant (C) et le châssis de chenille gauche (2L) est plus petite qu'une distance à la position étendue, relativement à l'essieu avant (13) et à l'essieu arrière (14), dans lequel
l'élément de couplage avant droit (11R) est configuré pour être mis dans un état de raccordement étendu dans lequel l'élément de couplage avant droit (11R) est raccordé au corps de train roulant (10) car le châssis de chenille droit (2R) est mis à la position étendue, et est raccordé à une partie du châssis de chenille droit (2R) qui est sur un côté avant relativement au support d'essieu avant droit (27), dans lequel
l'élément de couplage arrière droit (12R) est configuré pour être mis dans un état de raccordement étendu dans lequel l'élément de couplage arrière droit (12R) est raccordé au corps de train roulant (10) car le châssis de chenille droit (2R) est mis à la position étendue, et est raccordé à une partie du châssis de chenille droit (2R) qui est sur un côté arrière relativement au support d'essieu arrière droit (28), dans lequel
l'élément de couplage avant gauche (11L) est configuré pour être mis dans un état de raccordement étendu dans lequel l'élément de couplage avant gauche (11L) est raccordé au corps de train roulant (10) car le châssis de chenille gauche (2L) est mis à la position étendue, et
est raccordé à une partie du châssis de chenille gauche (2L) qui est sur un côté avant relativement au support d'essieu avant gauche (27), dans lequel
l'élément de couplage arrière gauche (12L) est configuré pour être mis dans un état de raccordement étendu dans lequel l'élément de couplage arrière gauche (12L) est raccordé au corps de train roulant (10) car le châssis de chenille gauche (2L) est mis à la position étendue, et est raccordé à une partie du châssis de chenille gauche (2L) qui est sur un côté arrière relativement au support d'essieu arrière gauche (28),
**caractérisé en ce que**
chacun de l'élément de couplage avant droit (11R) et de l'élément de couplage arrière droit (12R) est configuré de manière telle que, tout en restant raccordé à un du corps de train roulant (10) et du châssis de chenille droit (2R) et étant retiré de l'autre du corps de train roulant (10) et du châssis de chenille droit (2R), chacun de l'élément de couplage avant droit (11R) et de l'élément de couplage arrière droit (12R) change une position relative par rapport à au moins un du corps de train roulant (10) et du châssis de chenille droit (2R), depuis l'état de raccordement étendu, ainsi permettant au châssis de chenille droit (2R) de se déplacer depuis la position étendue jusqu'à la position contractée, et dans lequel
chacun de l'élément de couplage avant gauche (11L) et de l'élément de couplage arrière gauche (12L) est configuré de manière telle que, tout en restant raccordé à un du corps de train roulant (10) et du châssis de chenille gauche (2L) et étant retiré de l'autre du corps de train roulant (10) et du châssis de chenille gauche (2L), chacun de l'élément de couplage avant gauche (11L) et de l'élément de couplage arrière gauche (12L) change une position relative par rapport à au moins un du corps de train roulant (10) et du châssis de chenille gauche (2L), depuis l'état de raccordement étendu, ainsi permettant au châssis de chenille gauche (2L) de se déplacer depuis la position étendue jusqu'à la position contractée.

2. Corps roulant inférieur (101) de grue mobile (100) selon la revendication 1, comprenant en outre :
une paire de roues droites (23R, 24R) supportées de façon rotative respectivement sur une partie d'extrémité avant et une partie d'extrémité arrière du châssis de chenille droit (2R) ;
une paire de roues gauches (23L, 24L) supportées de façon rotative respectivement sur une partie d'extrémité avant et une partie d'extrémité arrière du châssis de chenille gauche (2L) ;
une pluralité de galets droits (26) espacés entre la paire de roues droites (23R, 24R) dans une direction avant-arrière et supportées de façon rotative sur une partie inférieure du châssis de chenille droit (2R), la pluralité de galets droits (26) incluant un galet d'extrémité avant droit (261) situé devant les galets droits (26) et un galet d'extrémité arrière droit situé derrière les galets droits (26) ; et
une pluralité de galets gauches (26) espacés entre la paire de roues gauches (23L, 24L) dans la direction avant-arrière et supportées de façon rotative sur une partie inférieure du châssis de chenille gauche (2L), la pluralité de galets gauches (26) incluant un galet d'extrémité avant gauche (261) situé devant les galets gauches (26) et un galet d'extrémité arrière gauche (262) situé derrière les galets gauches (26), dans lequel
l'élément de couplage avant droit (11R) inclut une surface de réception de charge avant droite (3FR) opposée au corps de train roulant (10) et une surface de transmission de charge avant droite (4FR) opposée au châssis de chenille droit (2R), dans lequel
l'élément de couplage avant gauche (11L) inclut une surface de réception de charge avant gauche (3FL) opposée au corps de train roulant (10) et une surface de transmission de charge avant gauche (4FL) opposée au châssis de chenille gauche (2L), dans lequel
chacune de la surface de réception de charge avant droite (3FR) de l'élément de couplage avant droit (11R) et de la surface de réception de charge avant gauche (3FL) de l'élément de couplage avant gauche (11L) est une surface configurée pour recevoir une charge avant en provenance du corps de train roulant (10), la charge avant étant une charge que le corps de train roulant (10) reçoit en provenance du corps pivotant supérieur (102) lorsqu'une marchandise destinée à être levée est suspendue à partir du corps pivotant supérieur (102) sur un côté avant relativement au corps roulant inférieur (101), la surface de transmission de charge avant droite (4FR) est une surface configurée pour transmettre la charge avant au châssis de chenille droit (2R), et la surface de transmission de charge avant gauche (4FL) est une surface configurée pour transmettre la charge avant au châssis de chenille gauche (2L), dans lequel
l'élément de couplage avant droit (11R) est configuré de manière telle que, en vue en plan, un trait tout droit avant droit (LA) qui est un trait tout droit passant à travers un point quelconque inclus dans la surface de réception de charge avant droite (3FR) et un point quelconque inclus dans la surface de transmission de charge avant droite (4FR) passe à travers le galet d'extrémité avant droit (261) ou un point sur un côté avant relativement au galet d'extrémité avant droit (261),
et dans lequel
l'élément de couplage avant gauche (11L) est configuré de manière telle que, en vue en plan, un trait tout droit avant gauche (LC) qui est un trait tout droit passant à travers un point quelconque inclus dans la surface de réception de charge avant gauche (3FL) et un point quelconque inclus dans la surface de transmission de charge avant gauche (4FL) passe à travers le galet d'extrémité avant gauche (261) ou un point sur un côté avant relativement au galet d'extrémité avant gauche (261).

3. Corps roulant inférieur (101) de grue mobile (100) selon la revendication 2, dans lequel
l'élément de couplage arrière droit (12R) inclut une surface de réception de charge arrière droite (3BR) opposée au corps de train roulant (10) et une surface de transmission de charge arrière droite (4BR) opposée au châssis de chenille droit (2R), dans lequel
l'élément de couplage arrière gauche (12L) inclut une surface de réception de charge arrière gauche (3BL) opposée au corps de train roulant (10) et une surface de transmission de charge arrière gauche (4BL) opposée au châssis de chenille gauche (2L), dans lequel
chacune de la surface de réception de charge arrière droite (3BR) de l'élément de couplage arrière droit (12R) et de la surface de réception de charge arrière gauche (3BL) de l'élément de couplage arrière gauche (12L) est une surface configurée pour recevoir une charge arrière en provenance du corps de train roulant (10), la charge arrière étant une charge que le corps de train roulant (10) reçoit en provenance du corps pivotant supérieur (102) lorsqu'une marchandise destinée à être levée est suspendue à partir du corps pivotant supérieur (102) sur un côté arrière relativement au corps roulant inférieur (101), la surface de transmission de charge arrière droite (4BR) est une surface configurée pour transmettre la charge arrière au châssis de chenille droit (2R), et la surface de transmission de charge arrière gauche (4BL) est une surface configurée pour transmettre la charge arrière au châssis de chenille gauche (2L), dans lequel
l'élément de couplage arrière droit (12R) est configuré de manière telle que, en vue en plan, un trait tout droit arrière droit (LB) qui est un trait tout droit passant à travers un point quelconque inclus dans la surface de réception de charge arrière droite (3BR) et un point quelconque inclus dans la surface de transmission de charge arrière droite (4BR) passe à travers le galet d'extrémité arrière droit ou un point sur un côté arrière relativement au galet d'extrémité arrière droit, et dans lequel
l'élément de couplage arrière gauche (12L) est configuré de manière telle que, en vue en plan, un trait tout droit arrière gauche (LD) qui est un trait tout droit passant à travers un point quelconque inclus dans la surface de réception de charge arrière gauche (3BL) et un point quelconque inclus dans la surface de transmission de charge arrière gauche (4BL) passe à travers le galet d'extrémité arrière gauche (262) ou un point sur un côté arrière relativement au galet d'extrémité arrière gauche (262).

4. Corps roulant inférieur (101) de grue mobile (100) selon l'une quelconque des revendications 1 à 3, dans lequel
chacun de l'élément de couplage avant droit (11R) et de l'élément de couplage arrière droit (12R) est configuré pour être mis dans un état restreint dans lequel chacun de l'élément de couplage avant droit (11R) et de l'élément de couplage arrière droit (12R) est restreint par au moins un du corps de train roulant (10) et du châssis de chenille droit (2R) mis à la position contractée, et dans lequel
chacun de l'élément de couplage avant gauche (11L) et de l'élément de couplage arrière gauche (12L) est configuré pour être mis dans un état restreint dans lequel chacun de l'élément de couplage avant gauche (11L) et de l'élément de couplage arrière gauche (12L) est restreint par au moins un du corps de train roulant (10) et du châssis de chenille gauche (2L) mis à la position contractée.

5. Corps roulant inférieur (101)de grue mobile (100) selon la revendication 4, dans lequel
un élément de couplage droit (11R, 12R) qui est au moins un de l'élément de couplage avant droit (11R) et de l'élément de couplage arrière droit (12R) inclut une portion de raccordement de corps de train roulant (30) raccordée de façon rotative au corps de train roulant (10), et une portion de raccordement de chenille (31) raccordée de façon retirable au châssis de chenille droit (2R) mis à la position étendue, dans lequel
comme la portion de raccordement de chenille (31) est retirée du châssis de chenille droit (2R) et la portion de raccordement de corps de train roulant (30) est maintenue raccordée au corps de train roulant (10), l'élément de couplage droit (11R, 12R) entre en rotation sur la portion de raccordement de corps de train roulant (30) relativement au corps de train roulant (10) pour changer une position relative de l'élément de couplage droit (11R, 12R) par rapport au corps de train roulant (10) et au châssis de chenille droit, (2R) depuis l'état de raccordement étendu, ainsi permettant au châssis de chenille droit (2R) de se déplacer depuis la position étendue jusqu'à la position contractée, et alors est raccordé de façon retirable au châssis de chenille droit (2R) mis à la position contractée et est donc mis dans l'état restreint.

6. Corps roulant inférieur (101)de grue mobile (100) selon la revendication 5, dans lequel
un élément de couplage gauche (11L, 12L) qui est au moins un de l'élément de couplage avant gauche (11L) et de l'élément de couplage arrière gauche (12L) inclut une portion de raccordement de corps de train roulant (30) raccordée de façon rotative au corps de train roulant (10), et une portion de raccordement de chenille (32) raccordée de façon retirable au châssis de chenille gauche (2L) mis à la position étendue, dans lequel
comme la portion de raccordement de chenille (32) de l'élément de couplage gauche (11L, 12L) est retirée du châssis de chenille gauche (2L) et la portion de raccordement de corps de train roulant (30) de l'élément de couplage gauche (11L, 12L) est maintenue raccordée au corps de train roulant (10), l'élément de couplage gauche (11L, 12L) entre en rotation sur la portion de raccordement de corps de train roulant (30) de l'élément de couplage gauche (11L, 12L) relativement au corps de train roulant pour changer une position relative de l'élément de couplage gauche (11L, 12L) par rapport au corps de train roulant (10) et au châssis de chenille gauche (2L), depuis l'état de raccordement étendu, ainsi permettant au châssis de chenille gauche (2L) de se déplacer depuis la position étendue jusqu'à la position contractée, et alors est raccordé de façon retirable au châssis de chenille gauche (2L) mis à la position contractée et est donc mis dans l'état restreint.

7. Corps roulant inférieur (101)de grue mobile (100) selon la revendication 4, dans lequel
l'élément de couplage avant droit (11R) inclut une portion de raccordement de corps de train roulant (30) raccordée de façon rotative au corps de train roulant (10), et une portion de raccordement de chenille (31) raccordée de façon retirable au châssis de chenille droit (2R) mis à la position étendue, dans lequel
l'élément de couplage avant gauche (11L) inclut une portion de raccordement de corps de train roulant (30) raccordée de façon rotative au corps de train roulant (10), et une portion de raccordement de chenille (32) raccordée de façon retirable au châssis de chenille gauche (2L) mis à la position étendue, dans lequel
comme la portion de raccordement de chenille (31) de l'élément de couplage avant droit (11R) est retirée du châssis de chenille droit (2R) et la portion de raccordement de corps de train roulant (30) de l'élément de couplage avant droit (11R) est maintenue raccordée au corps de train roulant (10), l'élément de couplage avant droit (11R) entre en rotation sur la portion de raccordement de corps de train roulant (30) relativement au corps de train roulant (10) pour changer une position relative de l'élément de couplage avant droit (11R) par rapport au corps de train roulant (10) et au châssis de chenille droit (2R), depuis l'état de raccordement étendu, ainsi permettant au châssis de chenille droit (2R) de se déplacer depuis la position étendue jusqu'à la position contractée, dans lequel
comme la portion de raccordement de chenille (32) de l'élément de couplage avant gauche (11L) est retirée du châssis de chenille gauche (2L) et la portion de raccordement de corps de train roulant (30) de l'élément de couplage avant gauche (11L) est maintenue raccordée au corps de train roulant (10), l'élément de couplage avant gauche (11L) entre en rotation sur la portion de raccordement de corps de train roulant (30) relativement au corps de train roulant (10) pour changer une position relative de l'élément de couplage avant gauche (11L) par rapport au corps de train roulant (10) et au châssis de chenille gauche (2L), depuis l'état de raccordement étendu, ainsi permettant au châssis de chenille gauche (2L) de se déplacer depuis la position étendue jusqu'à la position contractée, et dans lequel
l'élément de couplage avant droit (11R) et l'élément de couplage avant gauche (11L) sont raccordés l'un à l'autre car chacun du châssis de chenille droit (2R) et du châssis de chenille gauche (2L) est mis à la position contractée, étant ainsi mis dans l'état restreint.

8. Corps roulant inférieur (101) de grue mobile (100) selon la revendication 7, dans lequel
l'élément de couplage arrière droit (12R) inclut une portion de raccordement de corps de train roulant (30) raccordée de façon rotative au corps de train roulant (10), et une portion de raccordement de chenille (31) raccordée de façon retirable au châssis de chenille droit (2R) mis à la position étendue, dans lequel
l'élément de couplage arrière gauche (12L) inclut une portion de raccordement de corps de train roulant (30) raccordée de façon rotative au corps de train roulant (10), et une portion de raccordement de chenille (32) raccordée de façon retirable au châssis de chenille gauche (2L) mis à la position étendue, dans lequel
comme la portion de raccordement de chenille (31) de l'élément de couplage arrière droit est retirée du châssis de chenille droit (2R) et la portion de raccordement de corps de train roulant (30) de l'élément de couplage arrière droit (12R) est maintenue raccordée au corps de train roulant (10), l'élément de couplage arrière droit (12R) entre en rotation sur la portion de raccordement de corps de train roulant (30) relativement au corps de train roulant (10) pour changer une position relative de l'élément de couplage arrière droit (12R) par rapport au corps de train roulant (10) et au châssis de chenille droit (2R), depuis l'état de raccordement étendu, ainsi permettant au châssis de chenille droit (2R) de se déplacer depuis la position étendue jusqu'à la position contractée, dans lequel
comme la portion de raccordement de chenille (32) de l'élément de couplage arrière gauche (12L) est retirée du châssis de chenille gauche (2L) et la portion de raccordement de corps de train roulant (30) de l'élément de couplage arrière gauche (12L) est maintenue raccordée au corps de train roulant (10), l'élément de couplage arrière gauche (12L) entre en rotation sur la portion de raccordement de corps de train roulant (30) relativement au corps de train roulant (10) pour changer une position relative de l'élément de couplage arrière gauche (12L) par rapport au corps de train roulant (10) et au châssis de chenille gauche (2L), depuis l'état de raccordement étendu, ainsi permettant au châssis de chenille gauche (2L) de se déplacer depuis la position étendue jusqu'à la position contractée, et dans lequel
l'élément de couplage arrière droit (12R) et l'élément de couplage arrière gauche (12L) sont raccordés l'un à l'autre car chacun du châssis de chenille droit (2R) et du châssis de chenille gauche (2L) est mis à la position contractée, étant ainsi mis dans l'état restreint.

9. Corps roulant inférieur (101) de grue mobile (100) selon la revendication 4, dans lequel
un élément de couplage droit (11R, 12R) qui est au moins un de l'élément de couplage avant droit (11R) et de l'élément de couplage arrière droit (12R) inclut une portion de raccordement de corps de train roulant (30) raccordée de façon retirable au corps de train roulant (10), et une portion de raccordement de chenille (31) raccordée au châssis de chenille droit (2R) mis à la position étendue, dans lequel
comme la portion de raccordement de corps de train roulant (30) est retirée du corps de train roulant (10) et la portion de raccordement de chenille (31) est maintenue raccordée au châssis de chenille droit (2R), l'élément de couplage droit (11R, 12R) change une position relative de l'élément de couplage droit (11R, 12R) par rapport au corps de train roulant (10), depuis l'état de raccordement étendu, ainsi permettant au châssis de chenille droit (2R) de se déplacer depuis la position étendue jusqu'à la position contractée, et alors est raccordé de façon retirable au corps de train roulant (10) car le châssis de chenille droit (2R) est mis à la position contractée, et est donc mis dans l'état restreint.

10. Corps roulant inférieur (101) de grue mobile (100) selon la revendication 9, dans lequel
un élément de couplage gauche (11L, 12L) qui est au moins un de l'élément de couplage avant gauche (11L) et de l'élément de couplage arrière gauche (12L) inclut une portion de raccordement de corps de train roulant (30) raccordée de façon retirable au corps de train roulant (10), et une portion de raccordement de chenille (32) raccordée au châssis de chenille gauche (2L) mis à la position étendue, dans lequel
comme la portion de raccordement de corps de train roulant (30) de l'élément de couplage gauche (11L, 12L) est retirée du corps de train roulant (10) et la portion de raccordement de chenille (32) de l'élément de couplage gauche (11L, 12L) est maintenue raccordée au châssis de chenille gauche (2L), l'élément de couplage gauche (11L, 12L) change une position relative de l'élément de couplage gauche (11L, 12L) par rapport au corps de train roulant (10), depuis l'état de raccordement étendu, ainsi permettant au châssis de chenille gauche (2L) de se déplacer depuis la position étendue jusqu'à la position contractée, et alors est raccordé de façon retirable au corps de train roulant (10) car le châssis de chenille gauche (2L) est mis à la position contractée, et est donc mis dans l'état restreint.

11. Corps roulant inférieur (101) de grue mobile (100) selon la revendication 4, dans lequel
l'élément de couplage avant droit (11R) inclut une portion de raccordement de corps de train roulant (30) raccordée de façon retirable au corps de train roulant (10) car le châssis de chenille droit (2R) est mis à la position étendue, et une portion de raccordement de chenille (31) raccordée de façon rotative au châssis de chenille droit (2R), dans lequel
l'élément de couplage avant gauche (11L) inclut une portion de raccordement de corps de train roulant (30) raccordée de façon retirable au corps de train roulant (10) car le châssis de chenille gauche (2L) est mis à la position étendue, et une portion de raccordement de chenille (32) raccordée de façon rotative au châssis de chenille gauche (2L), dans lequel
comme la portion de raccordement de corps de train roulant (30) de l'élément de couplage avant droit (11R) est retirée du corps de train roulant (10) et la portion de raccordement de chenille (31) de l'élément de couplage avant droit (11R) est maintenue raccordée au châssis de chenille droit (2R), l'élément de couplage avant droit (11R) entre en rotation sur la portion de raccordement de chenille (31) relativement au châssis de chenille droit (2R) pour changer une position relative de l'élément de couplage avant droit (11R) par rapport au corps de train roulant (10) et au châssis de chenille droit (2R), depuis l'état de raccordement étendu, ainsi permettant au châssis de chenille droit (2R) de se déplacer depuis la position étendue jusqu'à la position contractée, dans lequel
comme la portion de raccordement de corps de train roulant (30) de l'élément de couplage avant gauche (11L) est retirée du corps de train roulant (10) et la portion de raccordement de chenille (32) de l'élément de couplage avant gauche (11L) est maintenue raccordée au châssis de chenille gauche (2L), l'élément de couplage avant gauche (11L) entre en rotation sur la portion de raccordement de chenille (32) relativement au châssis de chenille gauche (2L) pour changer une position relative de l'élément de couplage avant gauche (11L) par rapport au corps de train roulant (10) et au châssis de chenille gauche (2L), depuis l'état de raccordement étendu, ainsi permettant au châssis de chenille gauche (2L) de se déplacer depuis la position étendue jusqu'à la position contractée, et dans lequel
l'élément de couplage avant droit (11R) et l'élément de couplage avant gauche (11L) sont raccordés l'un à l'autre car chacun du châssis de chenille droit (2R) et du châssis de chenille gauche (2L) est mis à la position contractée, étant ainsi mis dans l'état restreint.

12. Corps roulant inférieur (101) de grue mobile (100) selon la revendication 11, dans lequel
l'élément de couplage arrière droit (12R) inclut une portion de raccordement de corps de train roulant (30) raccordée de façon retirable au corps de train roulant (10) car le châssis de chenille droit (2R) est mis à la position étendue, et une portion de raccordement de chenille (31) raccordée de façon rotative au châssis de chenille droit (2R), dans lequel
l'élément de couplage arrière gauche (12L) inclut une portion de raccordement de corps de train roulant (30) raccordée de façon retirable au corps de train roulant (10) car le châssis de chenille gauche (2L) est mis à la position étendue, et une portion de raccordement de chenille (32) raccordée de façon rotative au châssis de chenille gauche (2L), dans lequel
comme la portion de raccordement de corps de train roulant (30) de l'élément de couplage arrière droit (12R) est retirée du corps de train roulant (10) et la portion de raccordement de chenille (31) de l'élément de couplage arrière droit (12R) est maintenue raccordée au châssis de chenille droit (2R), l'élément de couplage arrière droit (12R) entre en rotation sur la portion de raccordement de chenille (31) relativement au châssis de chenille droit (2R) pour changer une position relative de l'élément de couplage arrière droit (12R) par rapport au corps de train roulant (10) et au châssis de chenille droit (2R), depuis l'état de raccordement étendu, ainsi permettant au châssis de chenille droit (2R) de se déplacer depuis la position étendue jusqu'à la position contractée, dans lequel
comme la portion de raccordement de corps de train roulant (30) de l'élément de couplage arrière gauche (12L) est retirée du corps de train roulant (10) et la portion de raccordement de chenille (32) de l'élément de couplage arrière gauche (12L) est maintenue raccordée au châssis de chenille gauche (2L), l'élément de couplage arrière gauche (12L) entre en rotation sur la portion de raccordement de chenille (32) relativement au châssis de chenille gauche (2L) pour changer une position relative de l'élément de couplage arrière gauche (12L) par rapport au corps de train roulant (10) et au châssis de chenille gauche (2L), depuis l'état de raccordement étendu, ainsi permettant au châssis de chenille gauche (2L) de se déplacer depuis la position étendue jusqu'à la position contractée, et dans lequel
l'élément de couplage arrière droit (12R) et l'élément de couplage arrière gauche (12L) sont raccordés l'un à l'autre car chacun du châssis de chenille droit (2R) et du châssis de chenille gauche (2L) est mis à la position contractée, étant ainsi mis dans l'état restreint.

13. Corps roulant inférieur (101) de grue mobile (100) selon l'une quelconque des revendications 9 à 12, dans lequel
le corps de train roulant (10) inclut une portion raccordée (51L, 52L, 51R, 52R) à laquelle la portion de raccordement de corps de train roulant (30) est raccordée de façon retirable car chacun du châssis de chenille droit (2R) et du châssis de chenille gauche (2L) est mis à la position étendue, et dans lequel
la portion raccordée (51L, 52L, 51R, 52R) est configurée de manière telle que, comme la portion de raccordement de corps de train roulant (30) est retirée de la portion raccordée (51L, 52L, 51R, 52R) et chacun du châssis de chenille droit (2R) et du châssis de chenille gauche (2L) est mis à la position contractée (51L, 52L, 51R, 52R), la portion raccordée est permise d'être raccordée à un châssis de chenille correspondant qui est l'un ou l'autre du châssis de chenille droit (2R) ou du châssis de chenille gauche (2L).
